# EUROPEAN PATENT APPLICATION

(11) **EP 0 921 432 A1**
(43) Date of publication of application: **09.06.1999**
(21) Application number: 98122547.7
(22) Date of filing: 01.12.1998
(51) Int. Cl.: G03C 1/04, G03C 1/06, G03C 5/17, C08G 79/02

(54) **Silver halide light-sensitive photographic comprising a phosphazene compound**

(30) Priority: 03.12.1997 JP 33296797
(71) Applicant: KONICA CORPORATION, Tokyo (JP)
(72) Inventor: Ishikawa, Wataru, Hino-shi, Tokyo (JP); Fukuwatari, Naoko, Hino-shi, Tokyo (JP)
(74) Representative: Türk, Gille, Hrabal

(57) **Abstract**

A silver halide light-sensitive photographic material comprising at least one silver halide light-sensitive emulsion layer and at least one hydrophilic colloidal layer provided on the same side of a support wherein the silver halide light-sensitive photographic material comprises a phosphazen compound having at least one of the structural units represented by the general formula (1) or (2) the silver halide light-sensitive emulsion layer or the hydrophilic colloidal layer and a total coated gelatin amount of not more than 3.7g/m² on the silver halide emulsion layer and the hydrophilic colloidal layer side in respect to the support:
General formula (1) 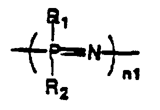 General formula (2)

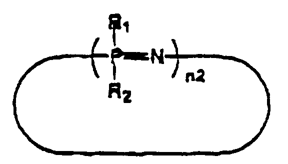

In the formula R₁ and R₂ each represents an alkyl group, an alkoxy group, an aryloxy group, an aryl group, an isothiocyanate group, an amino group, an alkylthio group, an arylthio group, an azide group, an alkenyl group, an alkinyl group, an acyl group, a cyano group, a cyanate group or isocyanate group, each of which group may be substituted or non-substituted, and R₁ and R₂ are the same or different; n₁ represent a positive integer of 1 to 50000; n₂ represents a positive integer of 3 or more.

## Description

### FIELD OF THE INVENTION

The present invention relates to a silver halide light-sensitive photographic material and an image forming method thereof, and specifically, to a high density forming silver halide light-sensitive photographic material which exhibits excellent abrasion resistance, and an easily manageable silver halide light-sensitive photographic material which exhibits minimum sensitivity variation and minimum quality degradation due to fog and black spots during low replenished running processing, and to an image forming method thereof, which minimizes Ag sludge formation in the development tank.

### BACKGROUND OF THE INVENTION

Recently, in the printing plate-making scanner market, has been spread a screening system, described as a fine and accurate or an FM screening system, which forms an image employing dots smaller than before. For such a screening system, a high contrast silver halide light-sensitive photographic material (hereinafter referred to as a light-sensitive material) is optional, in which the density of small dots is easily increased. However, such a high contrast light-sensitive photographic material is easily subjected to black abrasion marks due to rubbing by rollers and contact of adjacent light-sensitive materials. The abrasion not only damages the light-sensitive material itself but also markedly deteriorates the reproduced quality of original documents. Accordingly, the improvement in abrasion resistance is demanded.

Furthermore, from the aspects of environment and cost, a decrease in the replenishment rate of a developer and a fixer is strongly demanded. However, in the above-mentioned high contrast type light-sensitive material in which the density is easily increased, problems are caused such that when the high contrast type light-sensitive material is subjected to continuous processing under a low replenishment rate, deterioration in sensitivity variation, fog, black spots and dot quality is increased and furthermore, silver sludge is accumulated in the development tank, which subsequently stains the film. Thus, solving of these problems is highly desired.

### SUMMARY OF THE INVENTION

The object of the invention is to provide a high density forming silver halide light-sensitive photographic material which exhibits excellent abrasion resistance. Furthermore, another object is to provide an easily manageable silver halide light-sensitive photographic material which exhibits minimum sensitivity variation and minimum quality degradation due to fog and black spots during low replenished running process. Still another object is to provide an image forming method using the high density forming silver halide light-sensitive photographic material, which minimizes the formation of sludge in the development tank during low replenished running processing.

The silver halide light-sensitive photographic material of the invention is described.

The silver halide light-sensitive photographic material comprises at least one silver halide light-sensitive emulsion layer and at least one hydrophilic colloidal layer on the same side of a support. The silver halide light-sensitive photographic material comprises a compound having chemical structure unit represented by the general formula (1) or (2) in at least one of the silver halide light-sensitive emulsion layer and at least one hydrophilic colloidal layer and a total coated gelatin amount of not more than 3.7 g/m² on the silver halide emulsion layer and the hydrophilic colloidal layer side in respect to the support.

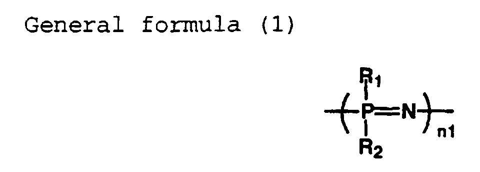

In the formula R₁ and R₂ each represents an alkyl group, an alkoxy group, an aryloxy group, an aryl group, an isothiocyanate group, an amino group, an alkylthio group, an arylthio group, an azide group, an alkenyl group, an alkinyl group, an acyl group, a cyano group, a cyanate group or isocyanate group, each of which group may be substituted or non-substituted, and R₁ and R₂ are the same or different; n₁ represent a positive integer of 1 to 50000 and when n₁ is plural, R₁ and R₂ may be the same or different.

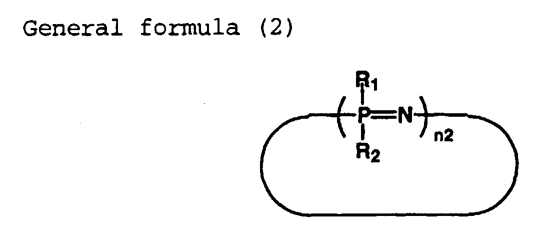

In the formula R₁ and R₂ each represents the same group represented by R₁ and R₂ in the above-mentioned general formula (1), and R₁ and R₂ may be the same or different; n₂ represents a positive integer of 3 or more.

The silver halide light-sensitive photographic material preferably comprises at least one of water-soluble polymer having solubility of 0.05 g or more in 100 g of water at 20 °C in the silver halide light-sensitive emulsion layer or the hydrophilic colloidal layer.

The silver halide light-sensitive photographic material comprises at least one composite polymer in the silver halide light-sensitive emulsion layer or the hydrophilic colloidal layer.

The silver halide light-sensitive photographic material comprises a hydrazine derivative in the silver halide light-sensitive emulsion layer or the hydrophilic colloidal layer.

The silver halide light-sensitive photographic material comprises a lubricant in the silver halide light-sensitive emulsion layer or the hydrophilic colloidal layer.

It is preferable that the pH of a coating composition comprising a compound represented by the above-mentioned general formula (1) or (2) is not less than 4.0.

The silver halide light-sensitive photographic material preferably forms a high contrast image with a gamma of 6 to 30 by processing employing a developer having a pH of 9.5 to 13.

The compound represented by the general formula (1) or (2) preferably has solubility of 1g or less in 100 g of water having pH 10.00 adjusted by sodium hydroxide at 40 °C.

The compound represented by the general formula (1) or (2) is preferably contained in the silver halide material as solid particle dispersion having an average particle diameter of 10 nm to 100 µm.

The above-mentioned hydrophilic colloidal layer is preferably a protective layer protecting the silver halide light-sensitive emulsion layer.

### BRIEF DESCRIPTION OF THE DRAWINGS

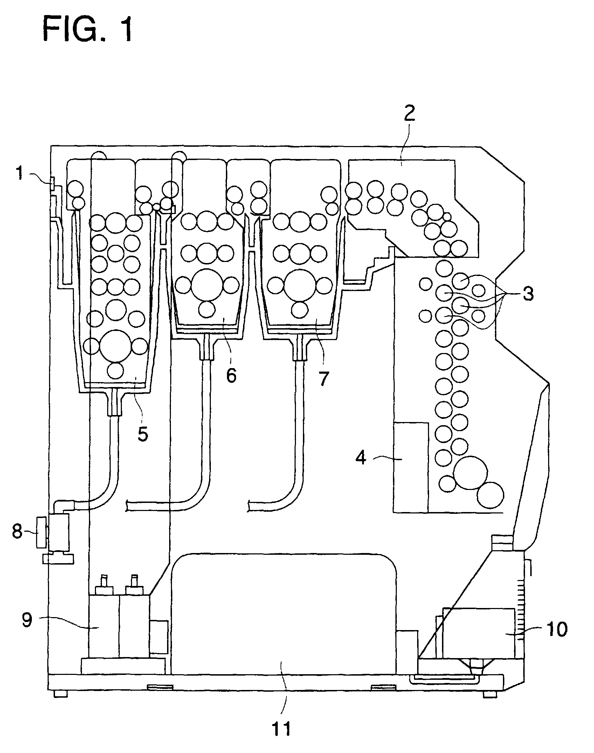

Fig. 1 is a view of an automatic processor employed in Examples.

### DETAILED DESCRIPTION OF THE INVENTION

The invention will be explained in detail below.

Compounds having chemical structure unit represented by general formula (1) or (2) will be explained.

In the above-mentioned general formula (1) or (2), amino groups represented by R₁ and R₂ include those having substituents. As substituents, are listed aliphatic groups such as an alkyl group and aromatic groups such as a phenyl group. As the amino groups having a substituent, are listed, for example, those in which one or two aliphatic groups are substituted, one or two aromatic groups are substituted or one aliphatic group and one aromatic group are substituted, and furthermore, ring-shaped amino groups, etc.

The compounds having chemical structure unit represented by general formulas (1) and (2) include phosphazene derivatives in which a basic skeleton is constructed employing a P-N bond and a part of the substituent is in the case of an ionic side chain group or π-electron series compound side chain, or a polyether side chain group. A group of these compounds is classified to a high molecular weight compound group having a linear P=N bond, a ring compound group, and a ring chain compound group.

Synthetic methods of these groups of compounds are described in detail. A halogen atom of compounds in which a side chain group of (PNF₂)₃, (PNF₂)₄, (PNF₂)ₙ, etc. is a trimer, tetramer, n-mer of a fluorine atom; compounds in which a side chain group of (PNCl₂)₃, (PNCl₂)₄, (PNCl₂)ₙ (n < 15) is a trimer, a tetramer, an n-mer of a chlorine atom; compounds in which a side chain group of (PNBr₂)₃, (PNBr₂)₄, (PNBr₂)ₙ is a trimer, a tetramer, an n-mer of a bromine atom; compounds in which a side chain group of (PNI₂)₃, (PNI₂)₄, (PNI₂)ₙ is a trimer, a tetramer, an n-mer of a iodine atom is allowed to react with a metal salt of aromatic organic compounds such as C₆H₅ONa, CH₃C₆H₄ONa, (C₆H₅O)₂Ca, CF₃CH₂ONa, etc. or mixing an aromatic compound having a hydroxyl group such as C₆H₅OH, an aliphatic alcohol such as CH₂(CH₃)=C-COOCH₂CH₂OH, an aromatic compound which undergoes nucleophilic substitution with a halogen atom on a P atom such as aromatic amines such C₆H₅NH₂ with amines such as aniline, a halogen acceptor such as sodium hydroxide, sodium carbonate, etc.

Phosphazene derivatives are generally synthesized as described above. Arbitrary synthetic method can be employed as the main reaction.

Furthermore, the aromatic side chain group denotes a group generally derived from compounds having an aromatic ring such as: 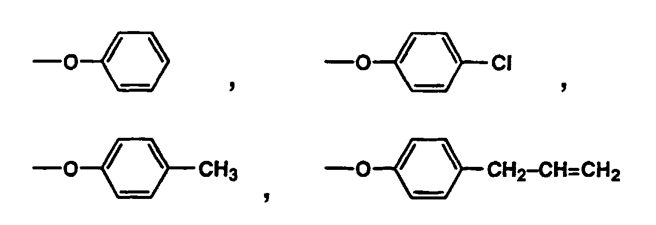 and those groups are listed which are derived from compounds having a hydroxyl group as a functional group in the aromatic group described above.

Furthermore, groups, for example, shown below are listed which are derived from compounds having an amino group as a functional group in aromatic rings such as aniline, phenylenediamine, etc.

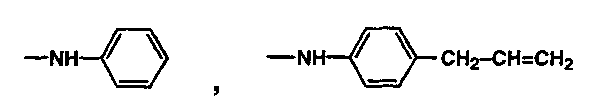

Additionally, groups, for example, shown below are listed which are derived from compounds having a mercapto group as a functional group in aromatic rings such as thiophenol, dimercaptobenzene, etc.

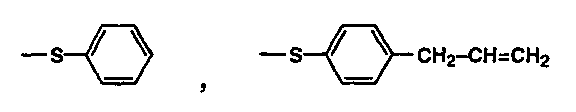

Furthermore, as combinations of the side chain groups it is unnecessary to employ a single group, and a plurality of selected groups may be combined. The groups may be functional groups comprised of compounds illustrated in Chem,. Rev., 1972, vol. 72. No.4, 315-316, and further these functional groups may have a hydrophilic substituent such as a carboxyl group, a sulfuric acid group and a phosphoric acid group. The compounds having chemical structure unit represented by general formulas (1) and (2) preferably have not more than 1 g of solubility results in an aqueous solution at 40 °C in which the pH is adjusted to 10.00 employing sodium hydroxide.

While the compounds having chemical structure unit represented by general formulas (1) and (2) may have other structural unit, preferably the compound is composed of the structure unit represented by general formulas (1) and (2) only.

In the formula (1) n1 is an integer of 1 or more, and preferably not less than 50000, more preferably 1 to 30000, especially preferably 1 to 10000, and 1 to 5000 in excellence. In the formula (2) n2 is an integer of 3 or more. It is preferably not less than 20, and more preferably 3 to 8, especially 3 or 4.

The compounds having chemical structure unit represented by general formulas (1) and (2) are preferably contained in the silver halide emulsion layer or the hydrophilic colloidal layer as solid particle dispersion. The average particle diameter of the solid particle of the dispersion is preferably 10 nm to 100 µm, and more preferably 50 nm to 10 µm.

The compounds having chemical structure unit represented by general formulas (1) and (2) are contained in the silver halide emulsion layer or the hydrophilic colloidal layer in an amount of preferably 10 to 500 mg/m².

The compounds are preferably contained in the hydrophilic collodal layer, more preferably in the protective layer provided on the silver halide emulsion alyer.

Shown next, are specific examples of compounds represented by general formula (1) or (2).

In the following formulae, Me, Et, Pr-n, Pr-i, Bu-n and Ph are each represents a methyl group, ethyl group, n-propyl group, i-propyl group, n-butyl group and phenyl group, respectively, and Mn is a number average molecular weight.

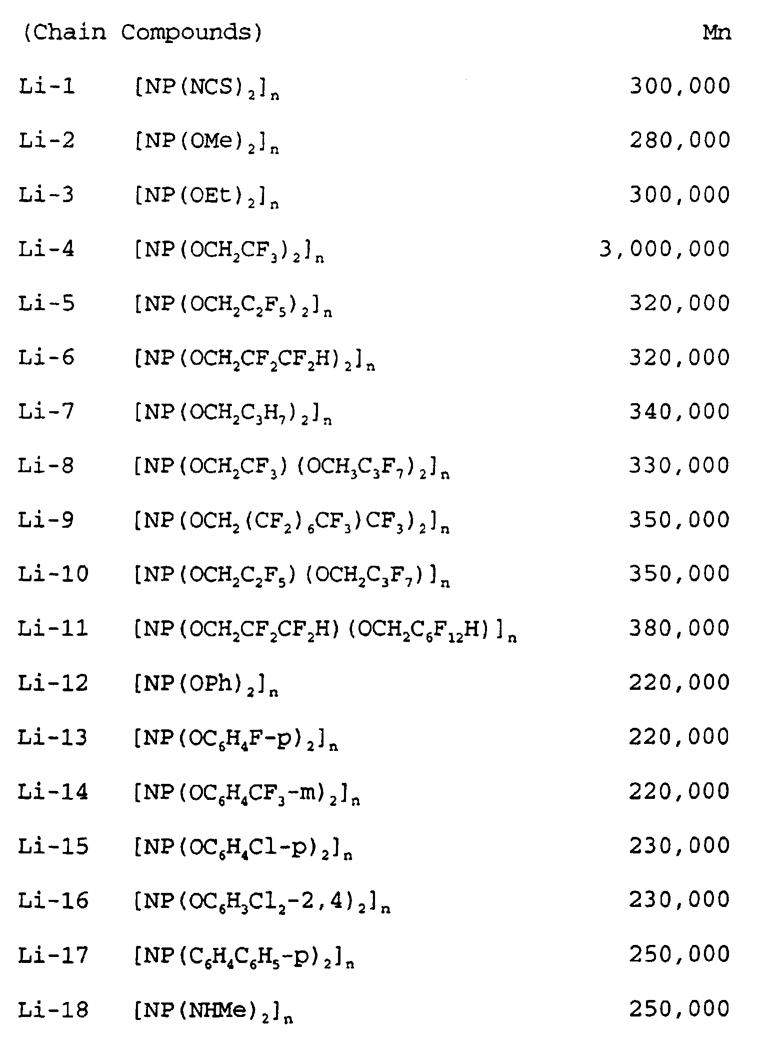

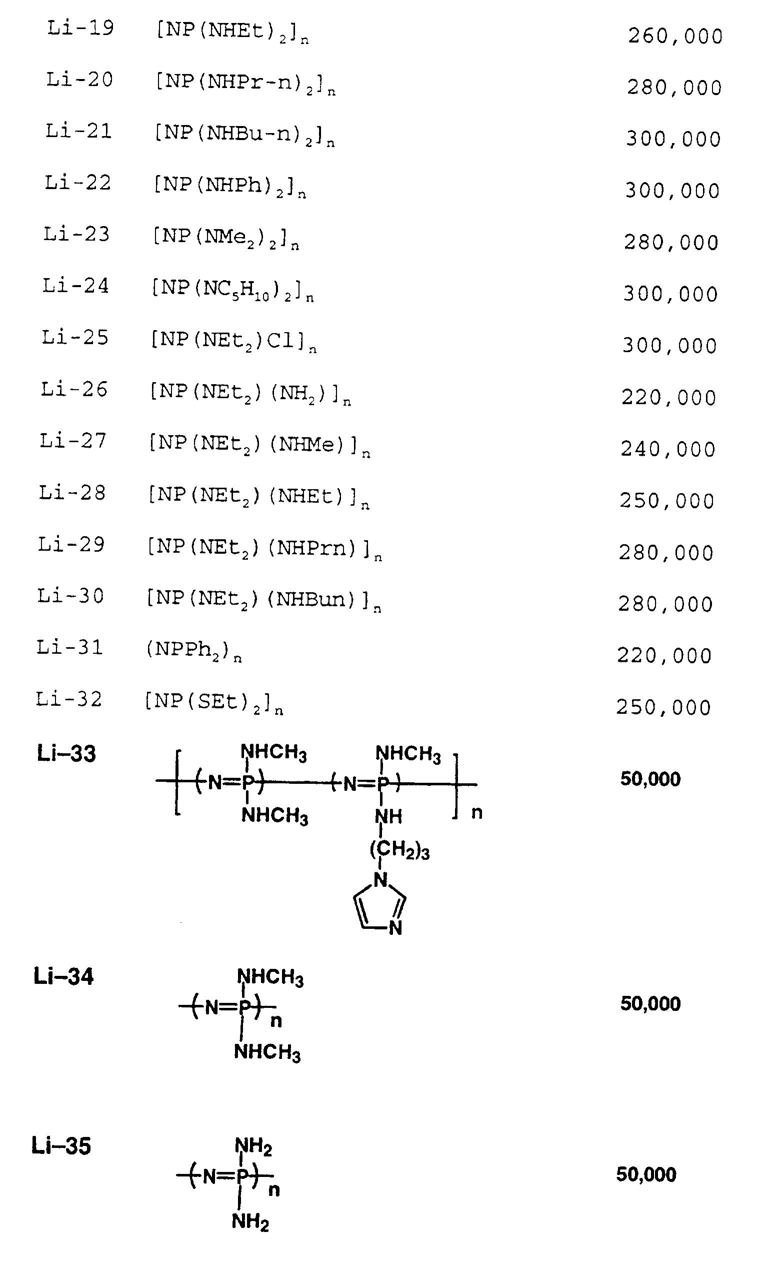

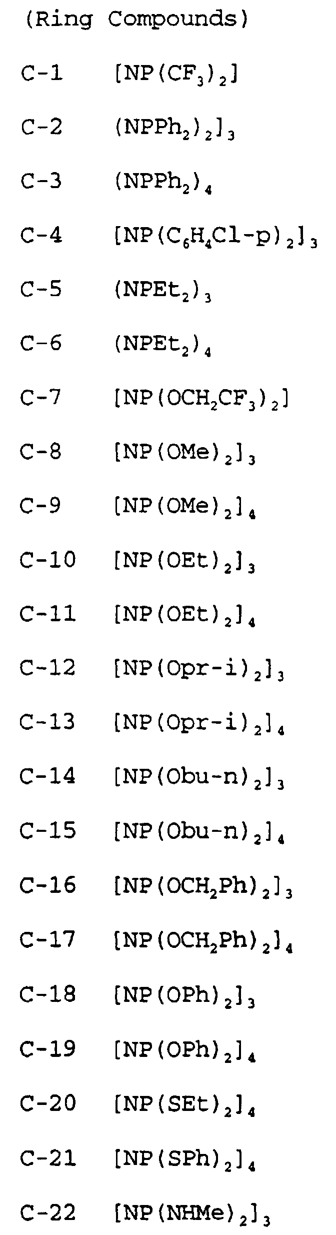

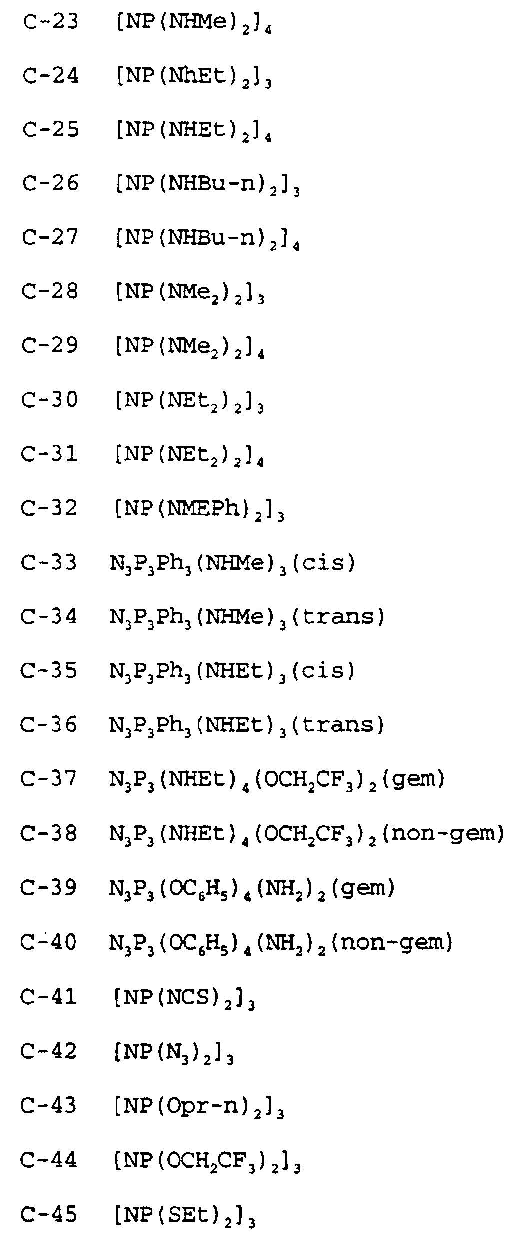

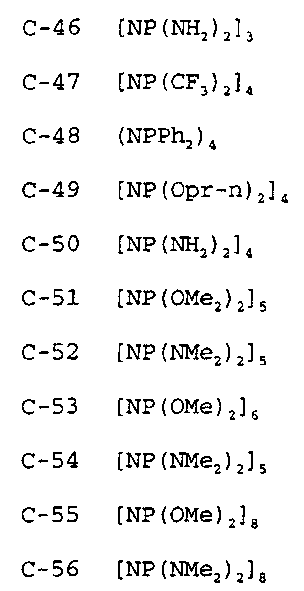

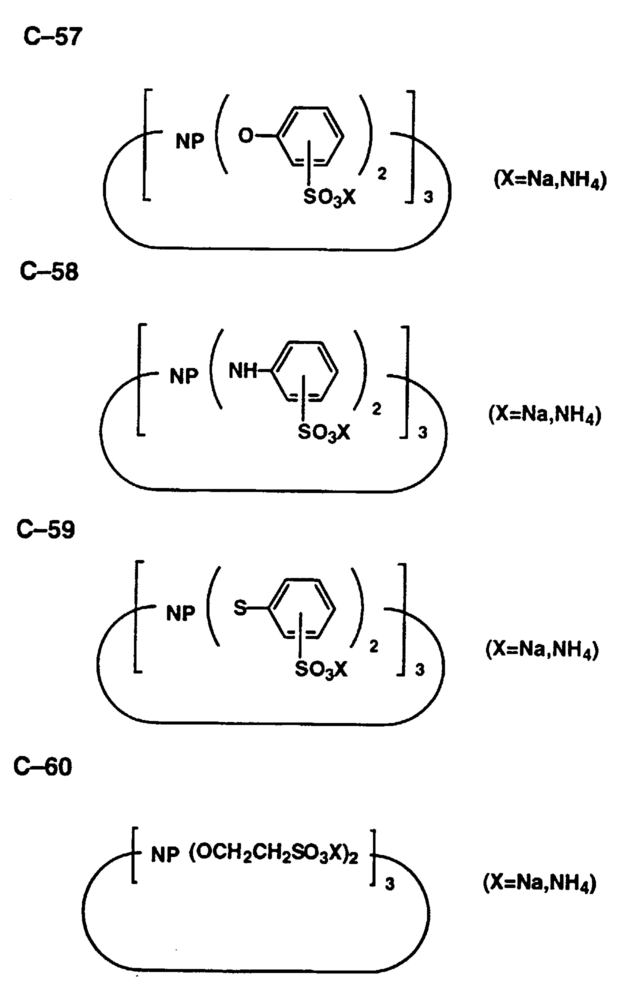

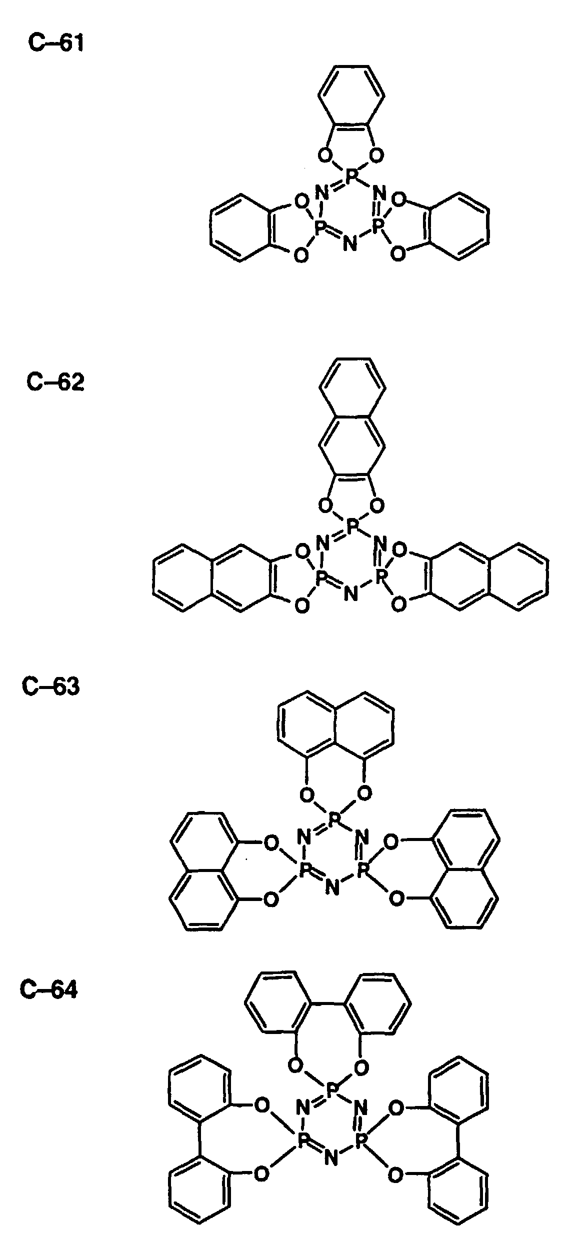

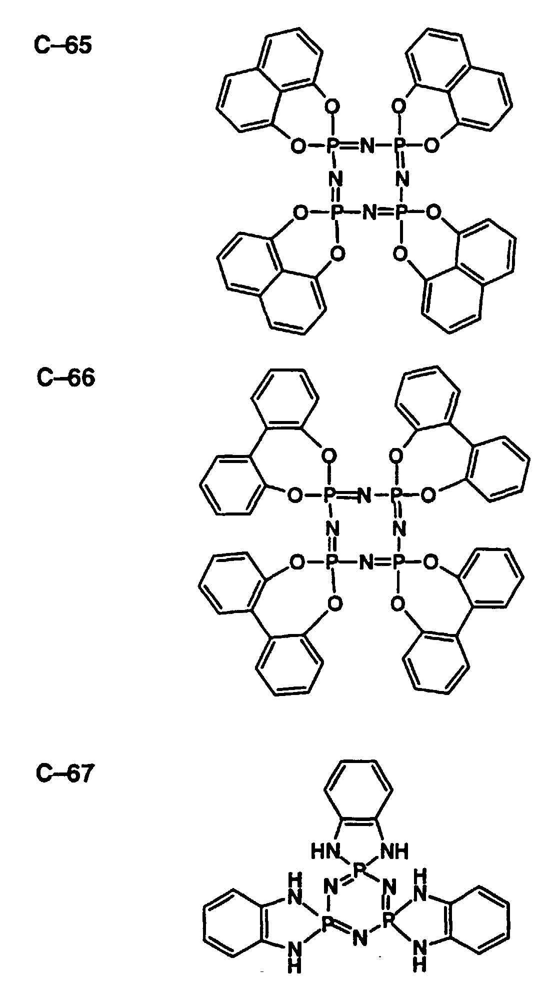

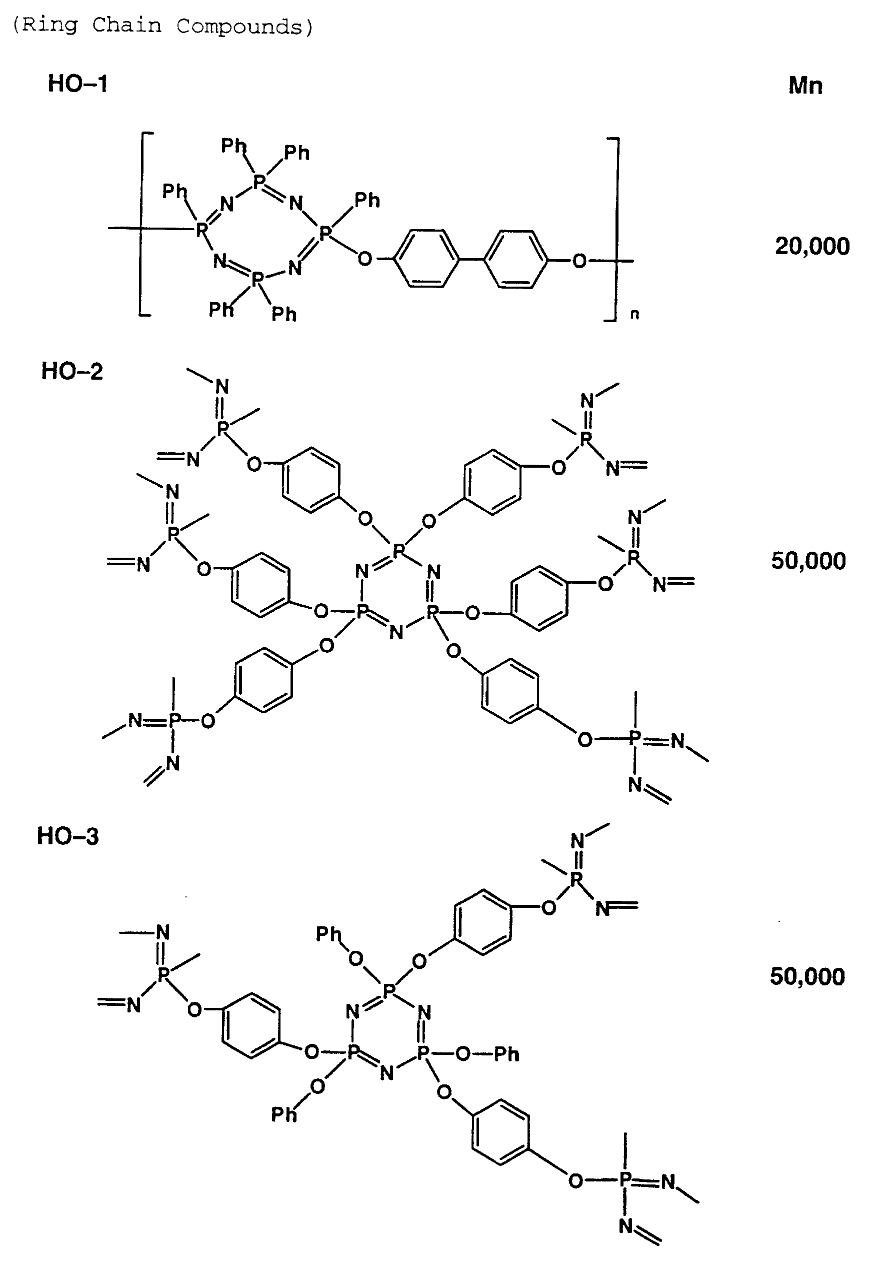

Representative lubricants employed in the invention include, for example, silicone series lubricants described in U.S. Pat. No. 3,042,522, U.K. Patent No. 955,0610, U.S. Pat. Nos. 3,080,317, 4,004,927, 4,047,958, and 3,489,576, U.K. Patent No. 1,143,118, Japanese Patent Publication Open to Public Inspection No. 60-140341, etc.; higher fatty acid series, alcohol series, and acid amide series lubricants described in U.S. Pat. Nos. 2,464,043, 2,732,305, 2,976,148, 3,206,311, German Patent Nos. 1,284,295, 1,284,294, etc.; metal soap described in U.K. Patent No. ,263,722, U.S. Pat. No. 3,933,516, etc.; ester series and ether series lubricants described in U.K. Pat. No. 1,198,387, etc.; and taurine series lubricants described in U.S. Pat. Nos. 3,502,437, 3,042,222, etc.

The lubricantare preferably contained in the protective layer.

Specific examples of lubricants are shown below.

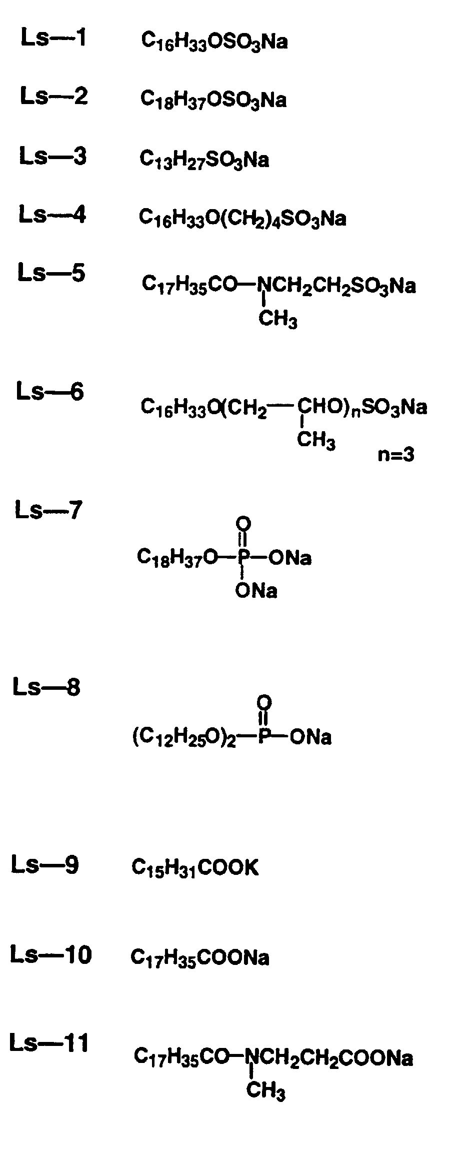

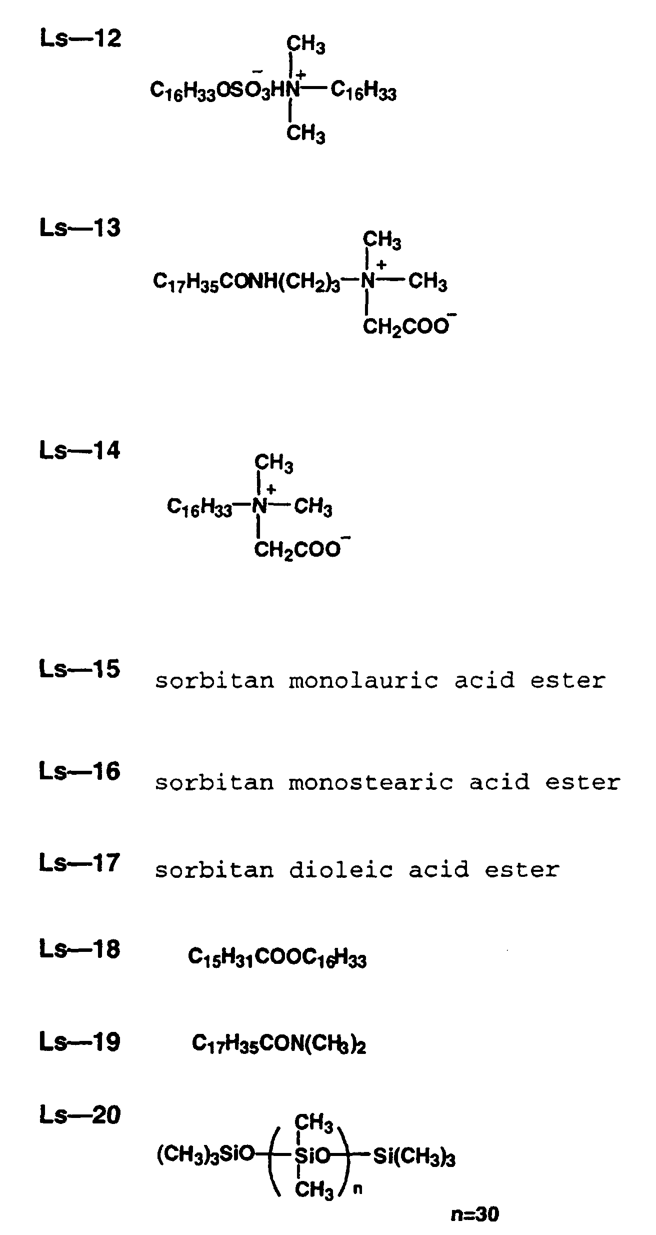

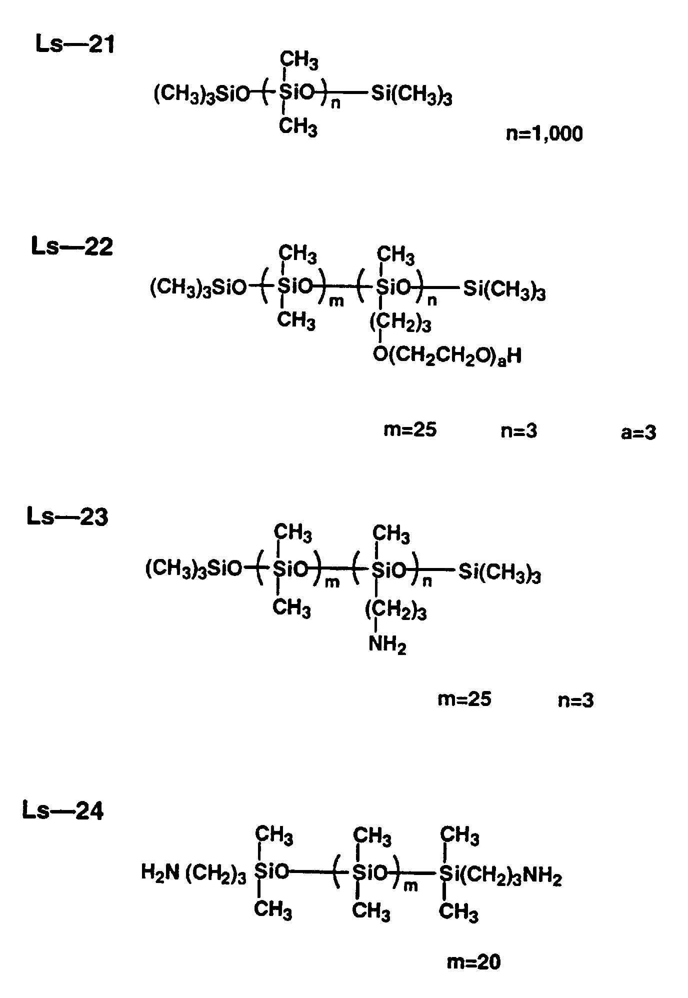

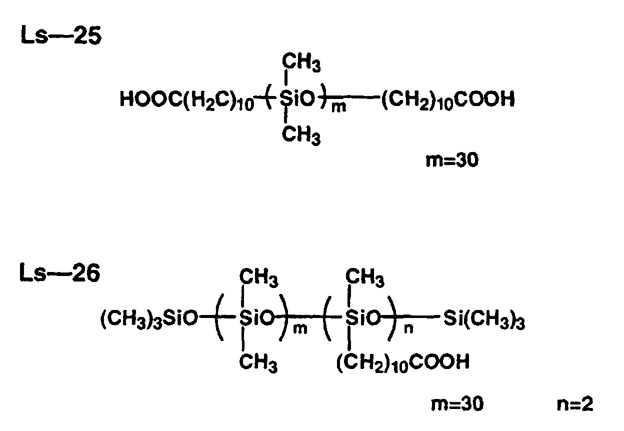

A water-soluble polymer is incorporated into the hydrophilic colloidal layer, preferably the silver halide emulsion layer.

The employed amount of the water-soluble polymer is between 50 and 800 mg per m² on one side surface of a silver halide light-sensitive photographic material, preferably between 100 and 500 mg, and more preferably between 200 and 400 mg. The number average molecular weight of the water-soluble polymer is preferably 2,000 to 40,000, and more preferably 2,000 to 15,000.

As the water-soluble polymers, those are preferably employed if not less than 0.05 g is dissolved in 100 g of water at 20 °C and is more preferably employed if not less than 0.1 g is dissolved in the same weight of water at the same temperature.

The water-soluble polymers employed in the hydrophilic colloidal layer include, for example, water-soluble synthetic polymers and water-soluble natural polymers, however, either can be employed. Of these, the water-soluble synthetic polymers include, for example, those having a nonionic group, an anionic group, and a nonionic and anionic group in the molecular structure. Listed as the nonionic groups, are, for example, an ether group, an ethylene oxide group, a hydroxy group, etc., and listed, as the anionic groups, are, for example, a sulfonic acid group and the salts thereof, a carboxylic acid group or the salts thereof, a phosphoric acid and the salts thereof, etc.

As these water-soluble synthetic polymers, homopolymers as well as copolymers of one type or more types of monomers may be employed. Furthermore, these polymers, as long as they are water-soluble, are subjected to some limitations in the addition position and added amount with the polymer composition composed of partial hydrophobic monomers. Specifically, when a large amount is added to an emulsion layer, it is required to limit the amount so that during the addition, the composition range causes no side effects.

Furthermore, the water-soluble natural polymers also include, for example, those having a nonionic group, an anionic group, and a nonionic and anionic group in the molecular structure.

Further, the water-soluble polymers which exhibit high solubility in a development solution or a fixer are preferred, and the solubility is such that not less than 0.05 g is dissolved in 100 g of the development solution, preferably not less than 0.5 g of the polymer is dissolved, and more preferably not less than 1 g of the polymer is dissolved.

The water-soluble synthetic polymers include those comprising the repeated unit of general formula (P) shown below in the range of 10 and 100 mole percent in one polymer molecule.

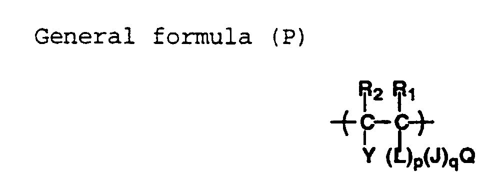

In the formula R₁ and R₂ may be the same or different, and each represents a hydrogen atom, an alkyl group, preferably an alkyl group having from 1 to 4 carbon atoms (including those having a substituent, for example, a methyl group, an ethyl group, a propyl group, a butyl group, etc.), a halogen atom (for example, a chlorine atom), or -CH₂COOM; L represents -CONH-, -NHCO-, -COO-, -OCO-, -CO-, -SO₂-, -NHSO₂-, -SO₂NH-, or -O-; and
Y represents a hydrogen atom or -(L)ₚ-(J)_{q}-Q.
J represents an alkylene group, preferably an alkylene group having from 1 to 10 carbon atoms (including those having a substituent, for example, a methylene group, an ethylene group, a propylene group, a trimethylene group, a butylene group, a hexylene group, etc.), an arylene group (including those having a substituent, for example, a phenylene group, etc.), an aralkylene group (including those having a substituent, for example, 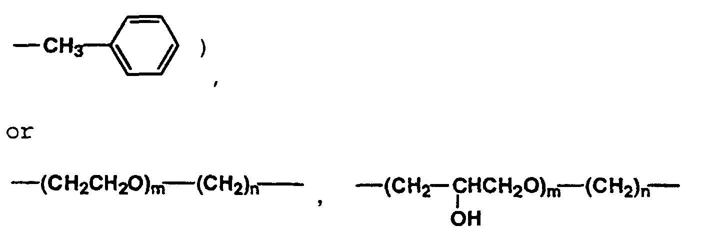 wherein m is an integer of 0-40, n is an integer of 0-4. Q represents 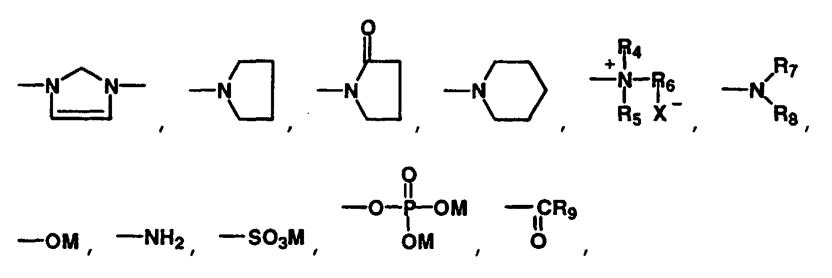 a hydrogen atom or R₃.

In the formulae M represents a hydrogen atom or a cationic group; R₉ represents an alkyl group having from 1 to 4 carbon atoms (for example, a methyl group, an ethyl group, a propyl group, a butyl group, etc.); R₃, R₄, R₅, R₆, R₇, and R₈ each represents a hydrogen atom, an alkyl group having from 1 to 20 carbon atoms (for example, a methyl group, an ethyl group, a propyl group, a butyl group, a hexyl group, a decyl group, a hexadecyl group, etc.), an alkenyl group (for example, a vinyl group, an allyl group, etc.), a phenyl group (for example, a phenyl group, a methoxyphenyl group, a chlorophenyl group, etc.), an aralkyl group) for example, a benzyl group, etc.); X represents an anion group; and p and q each represents 0 or 1.

Furthermore, a water-soluble synthetic monomer can be polymerized with an ethylenic unsaturated monomer. Examples of copolymerizable ethylenic unsaturated monomers include styrene, alkylstyrene, hydroxyalkylstyrene (an alkyl group having from 1 to 4 carbon atoms, for example, a methyl, ethyl, butyl group), vinylbenzene sulfonic acid and the salts thereof, α-methylstyrene, 4-vinylpyridine, N-vinylpyrrolidone, fatty acid monoethylenic unsaturated esters (for example, vinyl acetate, vinyl propionate, etc.), ethylenic unsaturated monocarboxylic acid or dicarboxylic acid and the salts thereof (for example, acrylic acid, methacrylic acid), maleic acid anhydride, ethylenic unsaturated monocarboxylic acid or dicarboxylic acid esters (for example, n-butylacrylate, N,N-diethylaminoethylmethacrylate, N,N-diethylaminoethylmethacrylate), ethylenic unsaturated monocarboxylic acid or dicarboxylic amides (for example, acrylamide, sodium 2-acrylamide-2-methylpropane sulfate, N,N-dimetyl-N'-methacryloilpropanediamineacetatebetaine), etc.

Specifically preferred polymers containing acrylamide or methacrylamide are.

Next, specific examples of water-soluble synthetic polymers represented by general formula (P) are shown.

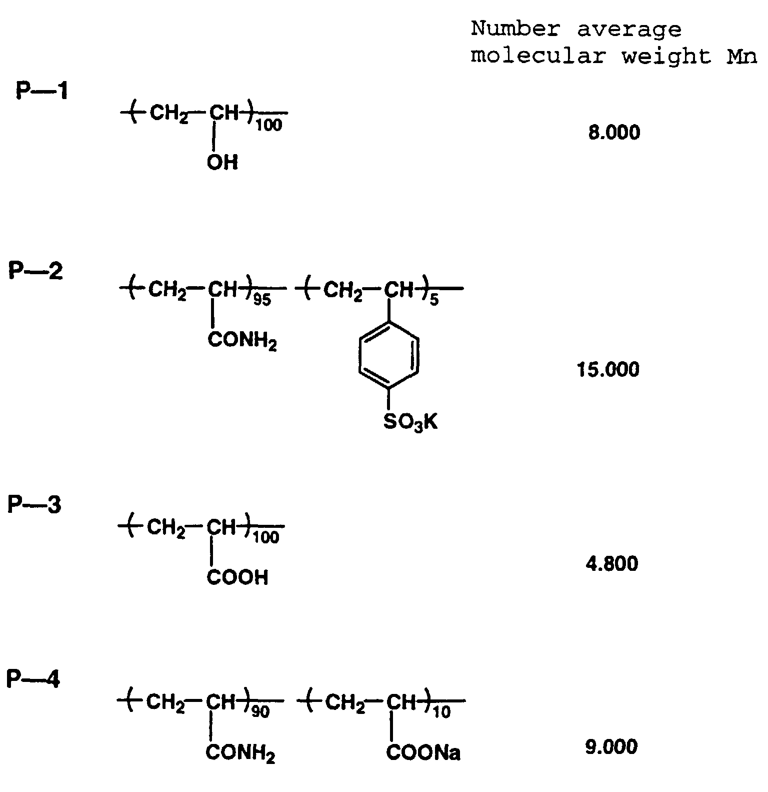

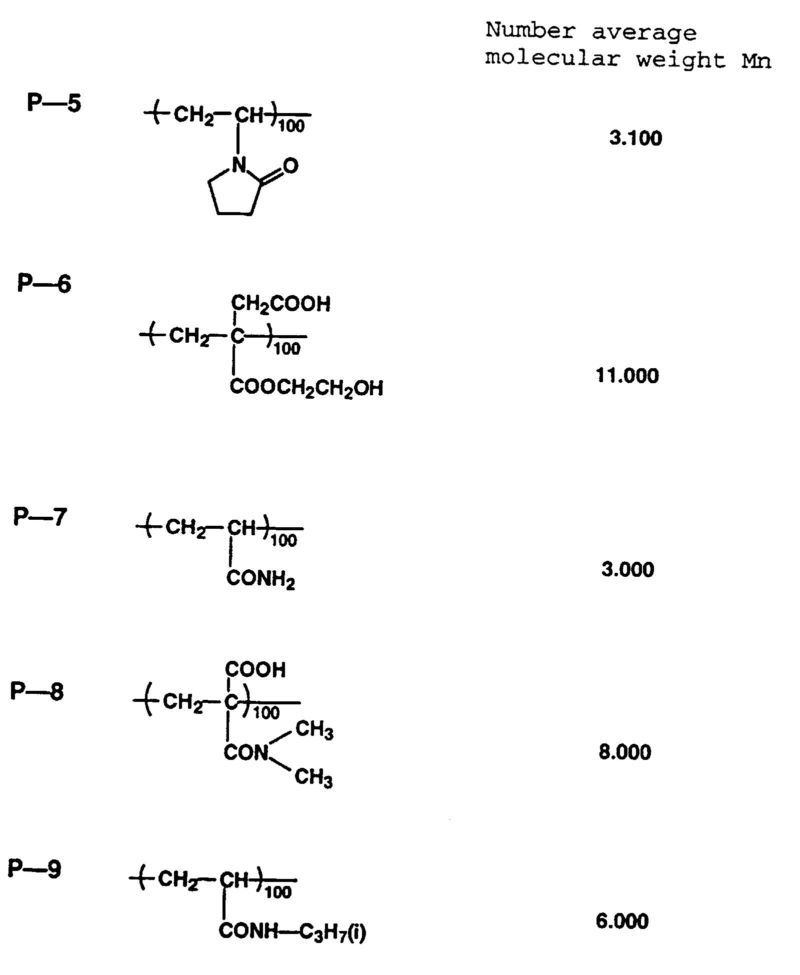

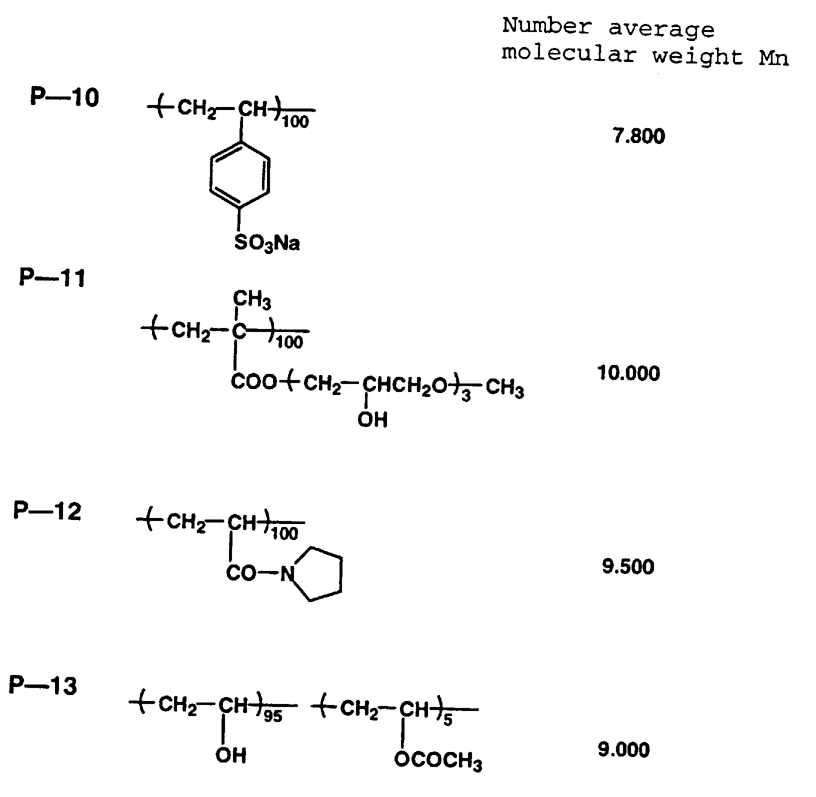

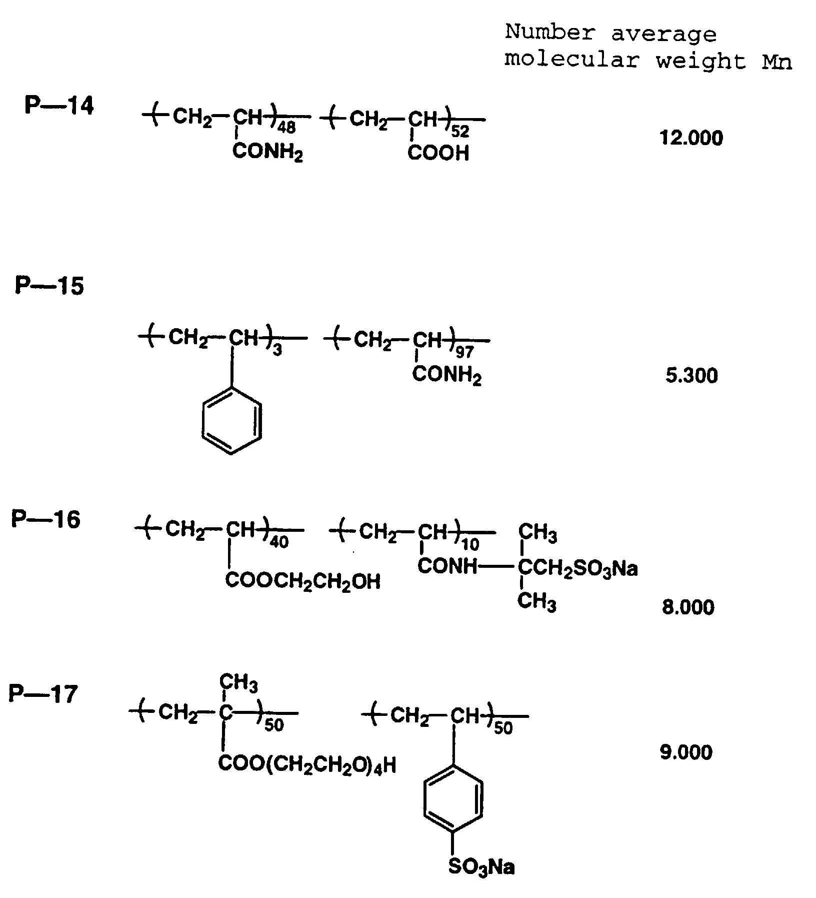

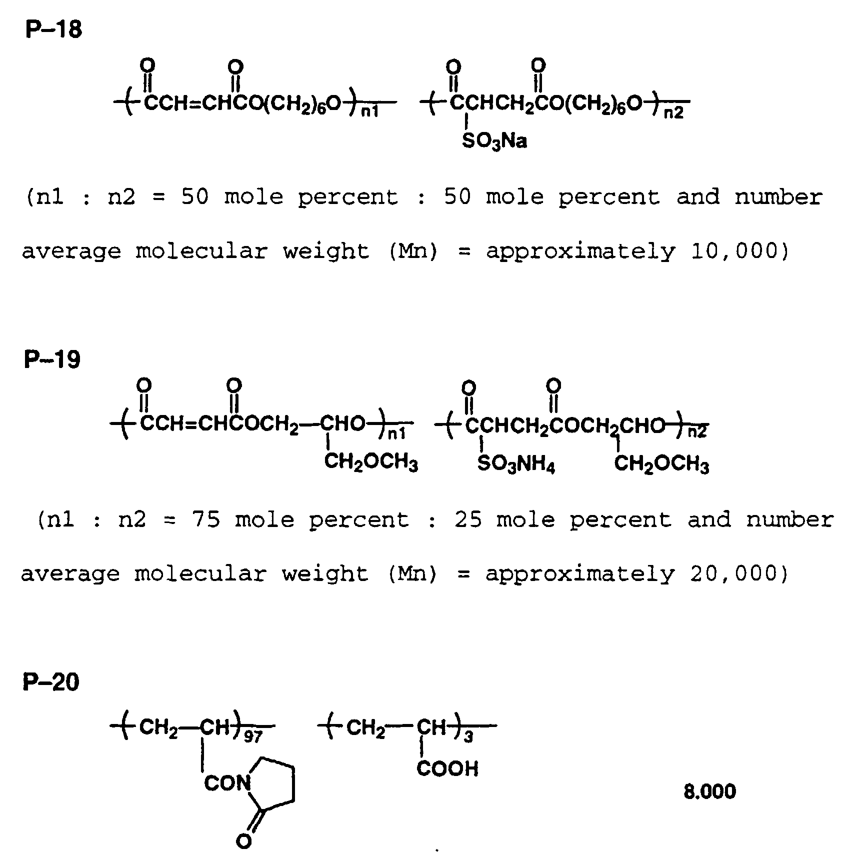

The number average molecular weight of the water-soluble synthetic polymer is preferably not more than 30,000, and more preferably not more than 15,000.

Water-soluble natural polymers are described in detail in "Sogo Gijutsu Shiryo-shu (General Technical Reference Collection)" (Keiei Kaihatsu Senta Shuppanbu (Administration Development Center Publishing Department)) on water-soluble polymer water dispersion type resins, and preferably include lignin, starch, pluran, cellulose, alginic acid, dextran, dextrin, gua gum, gum arabic, pectin, casein, agar, xanthane gum, cyclodextrin, locust bean gum, tragacanth gum, caragynun, glycogen, laminaran, lichenin, nigeran, etc. and derivatives thereof.

Furthermore, derivatives of water-soluble natural polymers preferably include those which are sulfonated, carboxylated, phosphated, carboxyalkylenated, or alkyl phosphated, and the salts thereof, polyoxyalkylenated (for example, ethylene, glycerin, propylene, etc.), alkylated methylated, ethylated, benzylated, etc.).

Not less than two water-soluble natural polymers may be employed in combination.

Furthermore, of water-soluble natural polymers, preferred are glucose polymers, and the derivatives thereof. Of the glucose polymers and the derivatives thereof, preferred are starch, glycogen, cellulose, lichenin, dextran, dextrin, cyclodextrin, nigeran, etc. and particularly, preferred are dextrin and cyclodextrin and derivatives thereof.

The added amount of water-soluble synthetic or natural polymers is preferably between 0.01 and 2 g/m² per surface, more preferably between 0.05 and 1 g/m², and most preferably between 0.1 and 0.5 g/m². Furthermore, the added layer is preferably an emulsion layer and the necessary amount may be added to other hydrophilic colloidal layers, if desired.

Water-soluble synthetic or natural polymers may be employed individually or in combinations of not less than two types, if desired.

The water-soluble synthetic or natural polymers are to be incorporated into a light-sensitive photographic material in an amount of not less than 10 weight percent of the total weight, preferably not less than 10 weight percent and not more than 30 weight percent.

The dextrin is a polymer of D-glucose subjected to α-1,4 linkage and covers various decomposition products reaching maltose, prepared generally by hydrolyzing starch. As scientifically important compounds, there are some which exhibit features in terms of the chemical structure. Except for these, the rest exhibits neither structural features nor definite molecular weight. There is a range from those having a high molecular weight, obtained by slightly hydrolyzing starch, to those having a low molecular weight, which undergo no iodostarch reaction, and there are a variety of types depending on hydrolysis methods and usage.

Specific examples of dextrin include those which are commercially available from Meito Sangyo Co., Ltd. under the product name of LLD, etc., from Nichiden Kagaku Co., Ltd. under the product name of Amikoru 1, Dextrin 102S, etc., and from Toa Kasei Kogyo Co., Ltd. under the product name of PO, etc.

Latexes (hereinunder, occasionally, referred to as polymer latex) will be explained below.

Ethylenic monomer compounds forming the polymer latex include, for example, acrylic acid esters, methacrylic acid esters, vinyl esters, olefins, styrens, crotonic acid esters, itaconic acid diesters, maleic acid diesters, fumaric acid diesters, acrylamides, allyl compounds, vinyl ethers, vinyl ketones, vinyl heterocycllc compounds, glycidyl esters, unsaturated nitriles, multifunctional monomers, and monomer compounds prepared by employing a compound selected from various types of unsaturated acids, or combinations of not less than two of these.

Specific examples of these monomer compounds are shown; acrylic acid esters include methyl acrylate, ethyl acrylate, n-propyl acrylate, isopropyl acrylate, n-butyl acrylate, isobutyl acrylate, sec-butyl acrylate, tert-butyl acrylate, amyl acrylate, hexyl acrylate, 2-chloroethyl acrylate, 2-bromoethyl acrylate, 4-chlorobutyl acrylate, cyanoethyl acrylate, 2-acetoxyethyl acrylate, dimethylaminoethyl acrylate, methoxybenzyl acrylate, 2-chlorohexyl acrylate, furfuryl acrylate, tetrahydrofurfuryl acrylate, phenyl acrylate, 2-hydroxyethyl acrylate, 5-hydroxypentyl acrylate, 2,2-dimethyl-3-hydroxypropyl acrylate, 2-methoxyethyl acrylate, 3-methoxybutyl acrylate, 2-ethoxyethyl acrylate, 2-iso-propoxy acrylate, 2-butoxyethyl acrylate, 2-(2-methoxyethoxy)ethyl acrylate, 2-(2-butoxyethoxy)ethyl acrylate, ω-methoxypolyethylene glycol acrylate (addition mole number n = 9), 1-bromo-2-methoxyethyl acrylate, 1,1-dichloro-2-ethoxyethyl acrylate.

Examples of methacrylic acid esters include methyl methacrylate, ethyl methacrylate, n-propyl methacrylate, isopropyl methacrylate, amyl methacrylate, chlorobenzyl methacrylate, sulfopropyl methacrylate, N-ethyl-N-phenylaminoethyl methacrylate, 2-(3-phenylpropyloxy)ethyl methacrylate, dimethylaminophenoxyethyl methacrylate, furfuryl methacrylate, tetrahydrofurfuryl methacrylate, phenyl methacrylate, cresyl methacrylate, naphthyl methacrylate, 2-hydroxyethyl methacrylate, 4-hydroxybutyl methacrylate, triethylene glycol monomethacrylate, dipropylene glycol monomethacrylate, 2-methoxyethyl methacrylate, 3-methoxybutyl methacrylate, 2-acetoxyethyl methacrylate, 2-acetacetoxyethyl methacrylate, 2-ethoxyethyl methacrylate, 2-iso-propoxyethyl methacrylate, 2-butoxyethyl methacrylate, 2-(2-methoxyethoxy)ethyl methacrylate, 2-(2-ethoxyethoxy)ethyl methacrylate, 2-(2-butoxyethoxy)ethyl methacrylate, ω-methoxypolyethylene glycol methacrylate (addition mole number n = 6), allyl methacrylate, methacrylic acid dimethylaminoethyl chloride salt, etc.

Examples of vinyl esters include vinyl acetate, vinyl propionate, vinyl butylate, vinyl isobutylate, vinyl caproate, vinyl chloroacetate, vinyl methoxy acetate, vinyl phenyl acetate, vinyl benzoate, vinyl salicylate, etc.

Examples of olefins include dicyclopentadiene, ethylene, propylene, 1-butene, 1-pentene, vinyl chloride, vinylidene chloride, isoprene, chloroprene, butadiene, 2,3-dimethylbutadiene, etc.

Styrenes include, for example, styrene, methylstyrene, dimethylstyrene, trimethylstyrene, ethylstyrene, isopropylstyrene, chloromethylstyrene, methoxystyrene, acetoxystyrene, chlorostyrene, dichlorostyrene, bromostyrene, trifluoromethylstyrene, vinyl methylbenzoate ester.

Examples of crotonic acid esters include, for example, butyl crotonate, hexyl crotonate, etc.

Furthermore, itaconic acid diethyl esters, for example, include dimethyl itaconate, diethyl itaconate, dibutyl itaconate, etc. Maleic acid diesters include, for example, diethyl maleate, dimethyl maleate, dibutyl maleate, etc. Fumaric acid diesters include, for example, diethyl fumarate, dimethyl fumarate, dibutyl fumarate, etc. Acrylamides include acrylamide, methylacrylamide, ethylacrylamide, propylacrylamide, butylacrylamide, tert-butylacrylamide, cyclohexylacrylamide, benzylacrylamide, hydroxymethylacrylamide, methoxyethylacrylamide, dimethylaminoethylacrylamide, phenylacrylamide, dimethylacrylamide, diethylacrylamide, β-cyanoethylacrylamide, N-(acetacetoxyethyl)acrylamide, etc.; methacrylamides include, methacrylamide, methylmethacrylamide, ethylmethacrylamide, propylmethacrylamide, butylmethacrylamide, tert-butylmethacrylamide, cyclohexylmethacrylamide, benzylmethacrylamide, hydroxymethylmethacrylamide, methoxyethylmethacrylamide, dimethylaminoethylmethacrylamide, phenylmethacrylamide, dimethylmethacrylamide, diethylmethacrylamide, β-cyanoethylmethacrylamide, N-(2-acetacetoxyethyl)methacrylamide, etc.; allyl compounds include, for example, allyl acetate, allyl caproate, allyl laurate, allyl bonzoate, etc.; vinyl ethers includes, for example, methyl vinyl ether, butyl vinyl ether, hexyl vinyl ether, methoxyethyl vinyl ether, dimethylaminoethyl vinyl ether, etc.; vinyl ketones include, for example, methyl vinyl ketone, phenyl vinyl ketone, methoxyethyl vinyl ketone, etc.; vinyl heterocyclic compounds include, for example, vinylpyridine, N-vinylimidazole, N-vinyloxazolidone, N-vinyltriazole, N-vinylpyrrolidone, etc.; glycidyl esters include, for example, glycidyl acrylate, glycidyl methacrylate, etc.; unsaturated nitriles include, for example, acrylonitrile, methacrylonitrile, etc.; multifunctional monomers include, for example, divinylbenzene, methylenebisacrylamide, ethylene glycol dimethacrylate, etc.

Furthermore, there are listed acrylic acid, methacrylic acid, itaconic acid, maleic acid, monoalkyl itaconate, for example, monomethyl itaconate, monoethyl itaconate, monobutyl itaconate, etc.; monoalkyl maleate, for example, monomethyl maleate, monoethyl maleate, monobutyl maleate, etc.; citraconic acid, methylenesulfonic acid, vinylbenzylsulfonic acid, vinylsulfonic acid, acryloyloxyalkylsulfonic acid, for example, acryloyloxymethylsulfonic acid, acryloyloxyethylsulfonic acid, acryloyloxypropylsulfonic acid, etc.; methacryloyloxyalkylsulfonic acid, for example, methacryloyloxydimethylsulfonic acid, methacryloyloxyethylsulfonic acid, methacryloyloxypropylsulfonic acid, etc.; acrylamidoalkylsulfonic acid, for example, 2-acrylamide-2-methylethanesulfonic acid, 2-acrylamide-2-methylpropanesulfonic acid, 2-acrylamide-2-methylbutanesulfonic acid, etc.; methacrylamidealkylsulfonic acids, for example, 2-methacrylamide-2-methylethanesulfonic acid, 2-methacrylamide-2-methypropanesulfonic acid, 2-methacrylamide-2-methylbutanesulfonic acid, etc.; acryloyloxyalkylphosphate, for example, acryloyloxyethylphosphate, 3-acryloyloxypropyl-2-phosphate, etc.; methacryloyloxyalkylphosphates, for example, methacryloyloxyethylphosphate, 3-methacryloyloxypropyl-2-phosphate, etc.; 3-allyloxy-2-hydroxypropanesulfonate having two hydrophilic groups, etc. Salts of these acids with alkali metals (for example, Na, K, etc.) or an ammonium ion may be employed as well. In addition, as other monomer compounds, can be employed cross-linking monomers described in U.S. Pat. Nos. 3,459,790, 3,438,708, 3,554,987, 4,215,195, and 4,247,673, and Japanese Patent Publication Open to Public Inspection No. 57-205735, etc. Examples of such cross-linking monomers specifically include N-(2-acetacetoxyethyl)acrylamide, N-{2-(2-acetacetoxyethoxy)ethyl}acrylamide, etc.

Of these monomer compounds, acrylic acid esters, methacrylic acid esters, vinyl esters, styrenes, olefins are preferably employed.

Specific examples of latexes preferably employed are shown below.

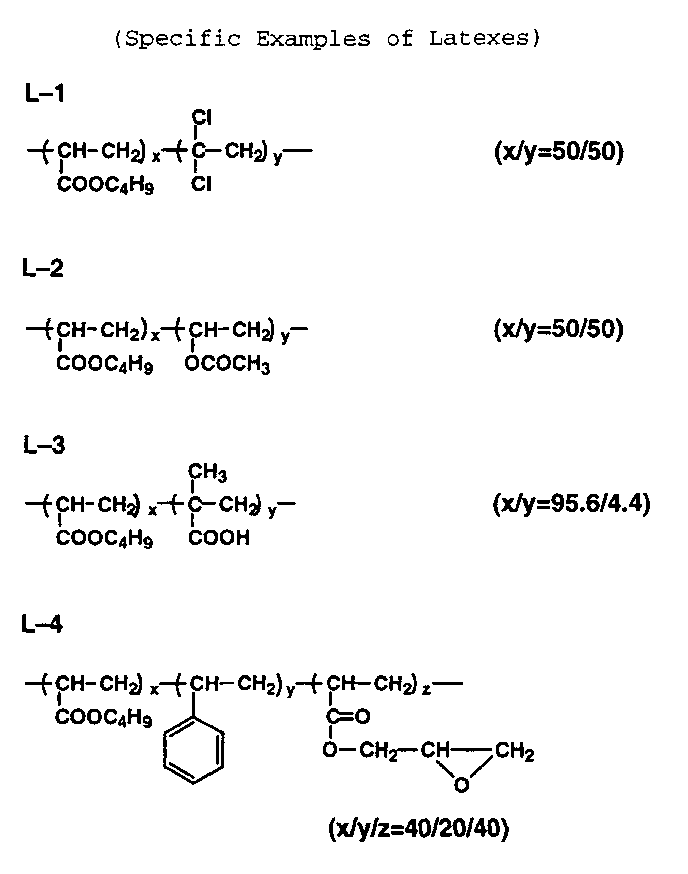

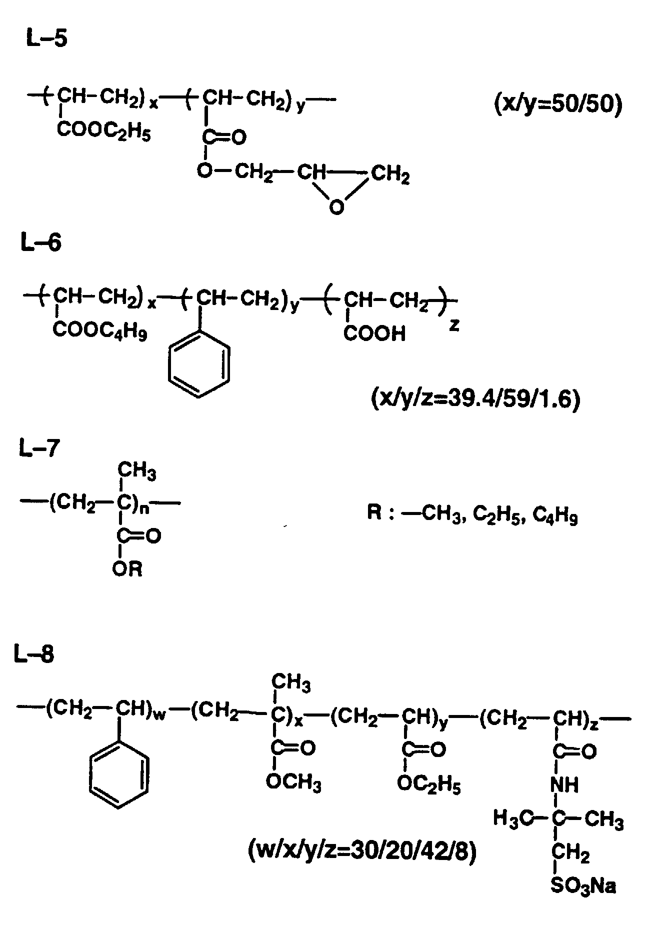

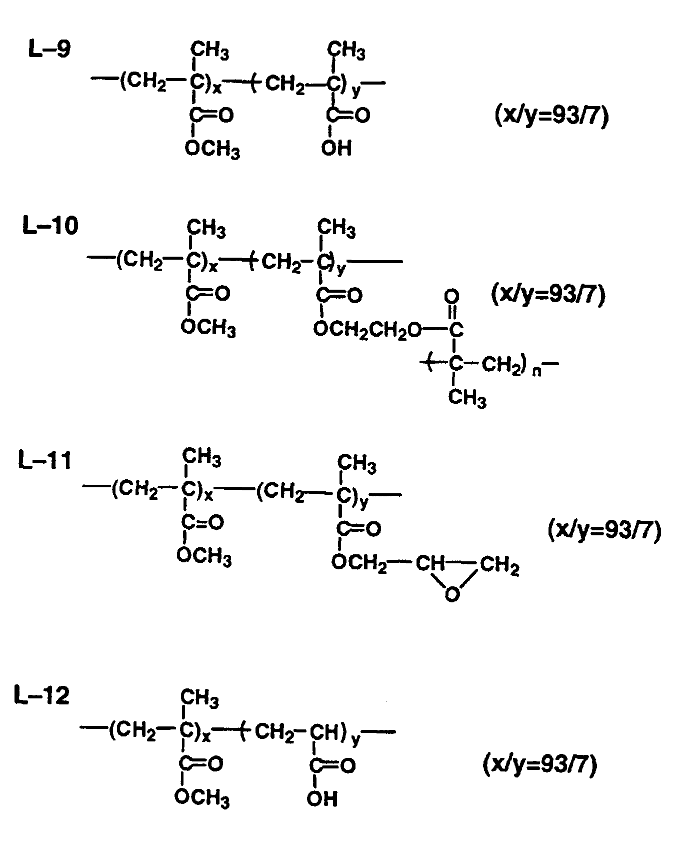

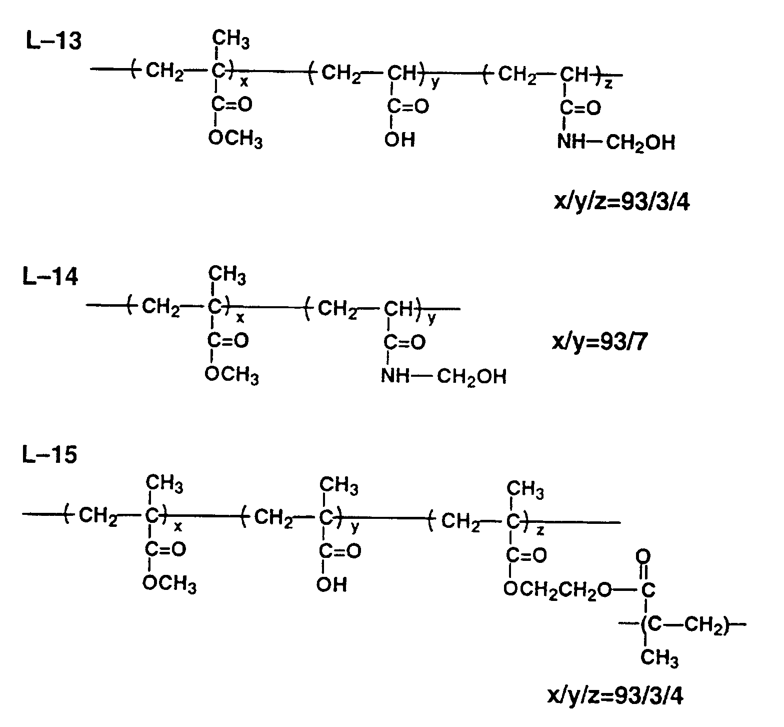

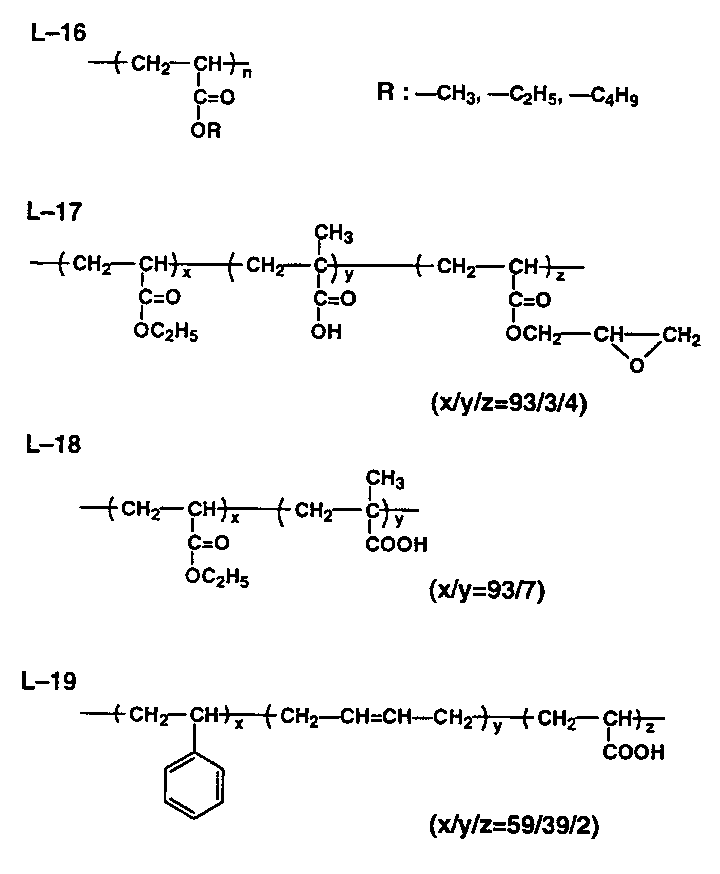

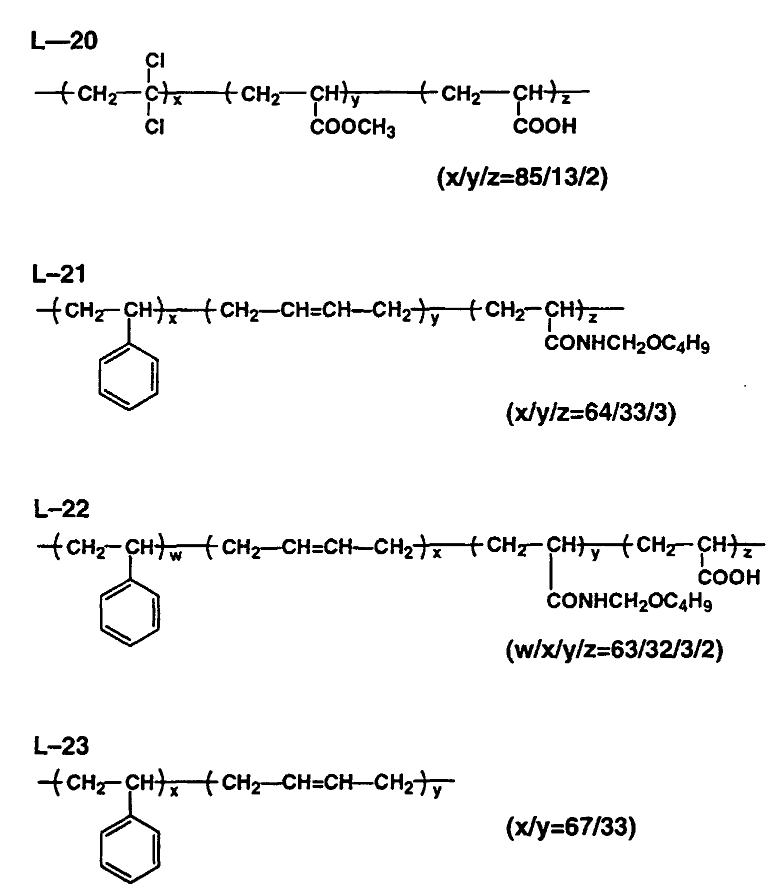

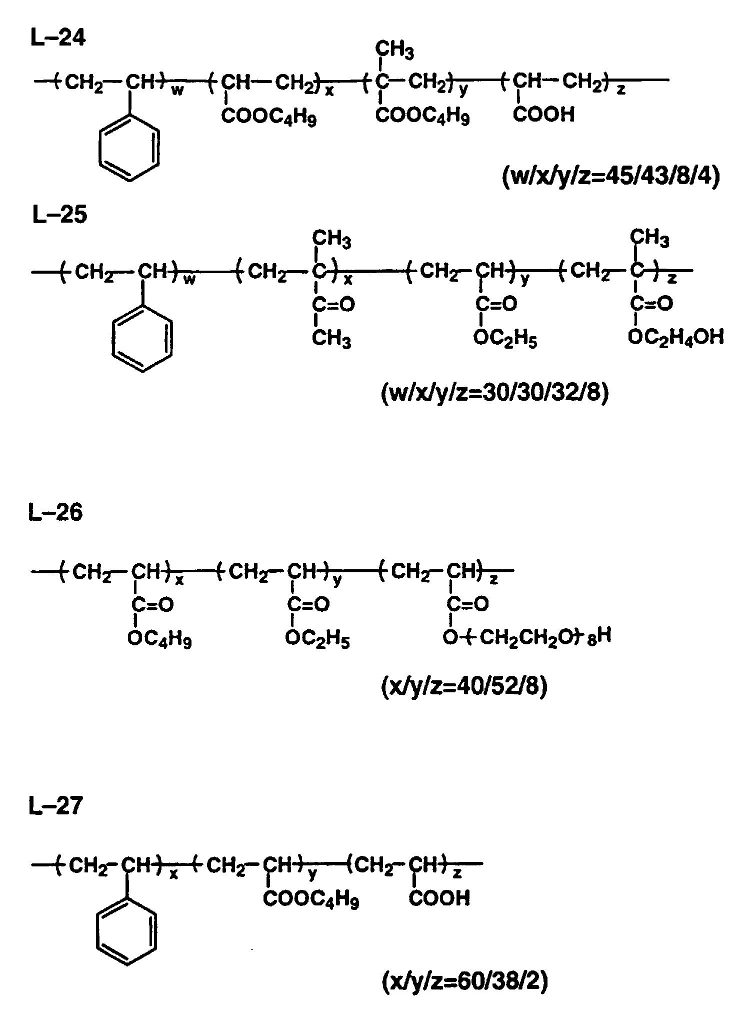

The average particle diameter of the polymer latex is most preferably between 0.01 and 0.8 µm, and any of these having an average particle diameter of 0.005 to 2.0 µm may be employed.

The particle size of the latex can be measured employing an electron microscope photographic method, a soap titration method, a light scattering method, a centrifugal sedimentation method, as described in "Kobunshi Ratekusu no Kagaku (Chemistry of Polymer Latexes)" (Kobunshi Kankokai, 1973). Of these, the light scattering method is preferably employed. As the apparatus of the light scattering method, DLS 700 (manufactured by Otsuka Denshi Co.) was employed.

Furthermore, the total molecular weight is preferably between 1,000 and 1,000,000 and more preferably between 2,000 and 500,000.

The polymer latex can be incorporated into a photographic constituting layer as it is or in the form of dispersing the latex into water.

The oleophilic will now be explained.

The preferred oleophilic components are those which are liquid and exhibit a boiling point, at normal pressure of not less than 165 °C, have a solubility in water of not more than 10 weight percent and are dispersed into a hydrophilic colloidal layer in the form of oil droplets. Furthermore, regarding the oil droplet diameter, dispersion is carried out so that oil droplets having a diameter between 0.1 and 0.4 µm occupy at least 75 percent of total number of droplets.

When dispersed, various surface active agents are preferably employed. For example, methods employing anionic surface active agents are described in U.S. Pat. Nos. 2,332,027, 2,801,170, and 2,801,171, and methods employing anionic and nonionic surface active agents are described in Japanese Patent Publication No. 48-9979.

Specific oleophilic components include diethyl adipate, dibutyl adipate, diisobutyl adipate, di-n-hexyl adipate, dioctyl adipate, dicyclohexyl acetate, di-z-ethylhexyl acetate, dioctyl sebacate, diisooctyl sebacate, dibutyl succinate, octyl stearate, dibenzyl phthalate, dibutyl succinate, octyl stearate, dibenzyl phthalate, diphenyl-mono-p-tert-butylphenyl phosphate, monophenyl-di-n-o-chlorophenyl phosphate, monobutyl-dioctyl phosphate, 2,4-di-n-amylphenol, 2,4-di-tert-amylphenol, 4-n-nonylphenol, 2-methyl-4-n-octylphenol, N,N-diethylcaprylamide, N,N-diethyllaurylamide, glycerol triallopionate, glycerol tributylate, glycerol monoacetate acetate, tributyl citrate, acetyltriethyl citrate, di-2-ethylhexyl adipate, dioctyl sebacate, di-isooctyl azelate, diethylene glycol dibenzoate, dipropylene glycol dibenzoate, triethyl citrate, tri(2-ethylhexyl) citrate, acetyltri-n-butyl citrate, di(isodecyl)-4,5-epoxytetrahydrophthalate, oligovinyl ethyl ether, dibutyl fumarate, polyethylene oxide (n > 16), glycerol tributylate, ethylene glycol dipropionate, di(2-ethylhexyl)isophthalate, butyl laurate, tri-(2-ethylhexyl) phosphate, triphenyl phosphate, tricresyl phosphatre, silicone oil, dimethyl phthalate, diethyl phthalate, dipropyl phthalate, dibutyl phthalate, diisooctyl phthalate, diamyl phthalate, di-n-octyl phthalate, diamylnaphthalene, triamylnaphthalene, monocaprin, monolaurin, monomyristin, monopalmitin, monostearin, monoolein, dicaprin, dilaurin, dimyristin, dipalmitin, distearin, diolein, 1-stearo-2-palmitin, 1-palmito-3-stearin, 1-palmito-2-stearin, triacetin, tricaprin, trilaurin, trimyristin, tripalmitin, tristearin, triolein, tripetroselin, triercin, triricinolein, linoleodistearin, linoleodilinolein, oleodiercin, linoleodiercin, palmitooleoninolelenin, paraffin; drying oils such as linseed oil, soy bean oil, perilla oil, tung oil, hemp seed oil, kaya oil, walnut oil, soy sauce oil, poppy oil, sunflower oil, catalpa oil, arrowhead oil, safflower oil, etc.; semi-drying oils such as cotton seed oil, corn oil, sesame oil, rape oil, rice bran oil, croton mustard oil, kapok oil, dehydrated castor oil, etc.; peanut oil, olive oil, tsubaki oil, sasanqua oil, tea seed oil, castor oil, hydrogenated castor oil, almond oil, sokuhaku oil, ben oil, chaulmoogra oil.

Furthermore,

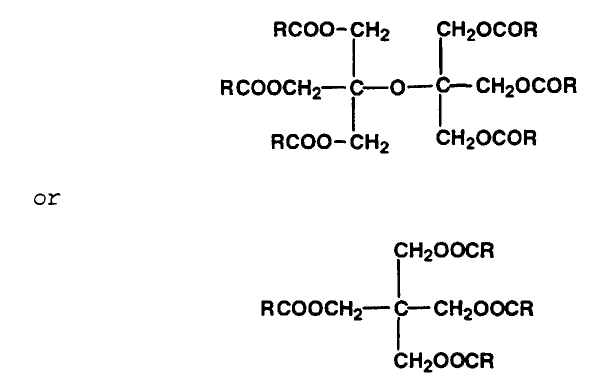

Compounds represented by the above-mentioned formulas (wherein R represents an alkyl group having from 1 to 8 carbon atoms) and compounds except the above-mentioned compounds, described in Japanese Patent Publication Open to Public Inspection Nos. 50-23832, 50-62632, 51-26035, 51-2603651-26037, etc. can also be employed as oil agents.

Of these, esters of adipic acid, phthalic acid, sebacic acid, succinic acid, fumaric acid, maleic acid, isophthalic acid, phosphoric acid, etc., and paraffin, etc. are conveniently employed because these exhibit no adverse effect on a light-sensitive material; readily commercially available; and chemically stable and easily handled. Further, those are particularly preferred which are tricresyl phosphate, dibutyl phthalate, di-n-octyl phthalate, tricresyl phosphate, glycerol tributylate, glycerol tripropionate, dioctyl sebacate, paraffin, and silicone oil. As a particularly preferred compound, di-n-octyl phthalate is listed.

The used amount of this oleophilic component is preferably between 10 and 500 mg per m² of one side of a silver halide light-sensitive photographic material, more preferably between 50 and 400 mg, and most preferably between 100 and 300 mg.

A layer containing the oil agent can be composed of gelatin, hydrophobic polymers, hydrophilic polymers, etc. except the oil agent, and furthermore, surface active agents, hardeners, etc. may be incorporated.

When oil droplets are formed, a low boiling point organic compound, which leaves almost no residue after coating and drying, can be employed in combination. Specific examples include methanol, ethanol, propyl alcohol, fluorinated alcohol, acetonitrile, dimethylformamide, dioxane, methyl isobutyl ketone, diethylene glycol monoacetate, chloroform, methyl acetate, ethyl acetate, propyl acetate, butyl acetate, cyclohexynol, cyclohexanetetrahydrofuran, etc.

The incorporation of di-n-octyl phthalate as the oil component into the oil agent-containing layer exhibits advantageously the objective effects of the invent. Further, an average particle diameter, when di-n-octyl phthalate oil agent is dispersed, is preferably between 0.10 and 0.2 µm.

As the matting agents, those known in the art can be employed. Those can be incorporated which are, for example, inorganic compound particles such as silica described in Swiss Patent No. 330,158, glass powder described in French Patent No. 1,296,995, and carbonate salts of alkali earth metals or cadmium, zinc, etc. described in U.K. Patent No. 1,173,181; and organic compound particles such as starch described in U.S. Pat. No. 2,322,037, starch derivatives described in Belgian Patent No. 625,451 or U.K. Patent No. 981,198, polyvinyl alcohol described in Japanese Patent Publication No. 44-3643, polystyrne or polymethyl methacrylate described in Swiss Patent No. 330,158, polyacrylonitrile described in 3,079,257, and polycarbonate described in U.S. Pat. 3,022,169.

These matting agents may be employed individually or in combination. The shape of the matting agent is preferably spherical as the ordinarily shaped matting agent. However, other shapes, for example, a tabular shape, or a cubic shape may be employed. The size of the matting agent is represented by the diameter obtained by converting the volume of a matting agent into a sphere. The diameter of the matting agent denotes the diameter obtained from a converted sphere as described above.

Furthermore, in order to achieve the basic functions of the matting agent, some part of the matting agent is preferably exposed on a surface. In addition, the exposed matting agent on the surface may be a part or whole part of the addition. The matting agent is previously dispersed into a coating composition and then coated.

As binders or protective colloid which can be employed in the silver halide emulsion or hydrophilic colloidal layer of the light-sensitive material, gelatin is advantageously employed. The total amount of gelatin coated on the silver halide emulsion layer coating surface of the support is preferably not more than 3.7 g/m², more preferably in the range of 1.0 to 3.7 g/m² and most preferably in the range of 1.6 to 3.7 g/m². The amount of the coated gelatin of more than 3.7 g/m² is not preferred because drying properties and remaining color are much degraded.

As gelatin, alkali-treated gelatin, acid-treated gelatin, and modified gelatin (modified gelatin, etc. described, for example, in Japanese Patent Publication Nos. 38-4854 and 40-12237, and U.K. Patent No. 2,525,753, etc.) can be employed individually or in combination.

The pH of the emulsion coating composition at the time of coating the light-sensitive material is not less than 4.0. The pH of not more than 4 is not preferred due to remarkable degradation of coating properties. On the other hand, the pH of not less than 6.9 causes a remarkable increase in fog after processing a light-sensitive material. Accordingly, the preferred pH range is between 4.0 and 6.9, and the more preferred pH range is between 5.0 and 6.5.

The composite polymer is explained.

As inorganic particles employed in the composite polymer together with a hydrophobic polymer, metal oxides, nitrides, sulfides can be listed. However, those preferred are metal oxides. As metal oxides, individual or combined oxide particles of metals such as Na, K, Ca, Ba, Al, Zn, Fe, Cu, Ti, Sn, In, W, Y, Sb, Mn, Ga, V, Nb, Tu, Ag, Bi, B, Si, Mo, Ce, Cd, Mg, Be, Pb, etc. are preferred. Individual or combined oxide particles of metals such as Y, Sn, Ti, Al, V, Sb, In, Mn, Ce, B, and Si are particularly preferred from the point of compatibility with an emulsion. The composite polymer is compoition which is obtained by emulsion polymerization in the presence of inorganic particles. The polymer of the composite polymer is preferably hydrophobic polymer. The hydrophobic polymer is preferably soluble not less than 0.05g, more preferably 0.01 g in 100 g of water at 20 °C.

Such metal oxides can be preferably employed irrespective of being crystalline or non-crystalline. However, particularly, non-crystalline metal oxide particles are preferred.

The average particle diameter of the metal oxide is preferably between 0.5 and 3,000 nm and most preferably between 3 and 500 nm. Such a metal oxide is preferably dispersed into water and/or water-soluble solvent. The composite polymer is preferably incorporated in the silver halide emulsion layer.

Number average molecular weight of the polymer of the composite polymer is preferably 20,000 to 300,000.

The added amount of the metal oxide is preferably between 1 and 2,000 weight percent of a hydrophobic polymer, and most preferably between 30 and 1,000 weight percent. Examples of preferred metal oxides are shown below.
- SO-1: SiO₂
- SO-2: TiO₂
- SO-3: ZnO
- SO-4: SnO₂
- SO-5: MgO
- SO-6: MnO₂
- SO-7: Fe₂O₃
- SO-8: ZnSiO₄
- SO-9: Al₂O₃
- SO-10: BeSiO₄
- SO-11: Al₂SiO₅
- SO-12: ZrSiO₄
- SO-13: CaWO₄
- SO-14: CaSiO₃
- SO-15: InO₂
- SO-16: SnSbO₂
- SO-17: Sb₂O₅
- SO-18: Nb₂O₅
- SO-19: Y₂O₃
- SO-20: CeO₂
- SO-21: Sb₂O₃
- SO-22: Na₂O

Hydrophobic monomers, which form hydrophobic polymers forming composite polymers, include, for example, acrylic acid esters, methacrylic acid esters, vinyl esters, olefins, styrens, crotonic acid esters, itaconic acid diesters, maleic acid diesters, fumaric acid diesters, vinyl ethers, vinyl ketones, vinyl heterocyclic compounds, glycidyl esters, unsaturated nitriles, and hydrophobic monomers prepared by combining one or more than two selected from various unsaturated acids. Hydrophobic monomers forming the hydrophobic polymers are preferably acrylic acid esters and/or methacrylic acid esters, and styrenes, and the number of carbon atoms of the ester group is most preferably not less than 6. It is preferred to employ the hydrophobic monomer having a glycidyl group. The content ratio is preferably between 1.0 and 20 weight percent and most preferably between 20 and 100 weight percent.

The hydrophobic polymer forming the composite polymer is prepare by preferably copolymerize a hydrophilic polymer in addition to the hydrophobic monomer. As such hydrophilic monomers, can be preferably employed carboxyl group containing monomers such as acrylic acid, methacrylic acid, etc.; hydroxyl group containing monomers such as hydroxyethyl acrylate, etc.; monomers containing alkylene oxide, acrylic amides, methacrylic amides, sulfonic group containing monomers, amino group containing monomers. However, those containing the sulfonic acid monomer is particularly preferred. The addition amount of these monomers is preferably adjusted to the range of 0.1 to 30 weight percent and most preferably in the range of 1.0 and 20 weight percent, because such hydrophilic monomer, when a large amount is added, is dissolved in water.

The composite polymer can be changed to a composite polymer having a cross linking group by employing a hydrophobic monomer having a cross linking group such as, for example, a carboxyl group, a glycidyl group, an amino group, an amido group, an N-methylol group, etc. through selecting the type of the above-mentioned hydrophobic monomer and/or hydrophilic monomer.

The composite polymer can contain at least two copolymerizable ethylenic unsaturated monomers. As such monomers, can be listed, for example, those having two vinyl groups such as divinylbenzene, ethylene glycol diacrylate, ethylene glycol dimethacrylate, diethylene glycol diacrylate, diethylene glycol dimethacrylate, N,N-metylenebisacrylamide, etc.; those having three vinyl groups such as trivinylcyclohexane, trimethylolpropane triacrylate, trimethylolpropane trimethacylate, pentaerythritol trimethacrylate, etc.; and those having four vinyl groups such as pentaerythritol tetraacrylate, pentaerythritol tetramethacrylate, etc.

The average particle diameter of the composite polymer is most preferably between 0.01 and 0.8 µm, in terms of weight average particle diameter, and any of those having the diameter of 0.005 to 3.0 µm can be preferably employed.

As polymerization methods of the composite polymers are listed, for example, an emulsification polymerization method, a solution copolymerization method, a massive polymerization, a suspension polymerization, a radiation polymerization method, etc.

In solution polymerization, a composite polymer is prepared in such a manner that a mixture of monomers having an optional concentration (a mixture of generally not more than 40 weight percent of a solvent, and preferably between 15 and 25 weight percent) undergoes polymerization at temperatures of about 10 to about 200 °C, preferably 30 to 120 °C for about 0.5 to 48 hours, preferably for 2 to 20 hours in the presence of an initiator.

As the initiators, those can be employed which are soluble in a polymerization solvent, and can be listed, for example, organic solvent series initiators such as benzoylperoxide, azobisisobutylonitrile (AIBN), tert-butylperoxide, and water-soluble initiators such as ammonium persulfate (APS), potassium persulfate, 2,2'azobis-(2-aminodipropane)-hydrochloride, etc.; and redox series polymerization initiators combined these with a reducing agent such as Fe²⁺ salts, sodium hydrogensulfite, etc.

As solvents, those can be employed which dissolve a mixture of monomers and can be listed, for example, water, methanol, ethanol, dimethyl sulfoxide, dimethylformamide, dioxane, or a mixture solvent consisting of at lease two of these solvents. After polymerization, the reaction mixture is poured into a medium which does not dissolve the resulting copolymer to precipitate the resulting, followed by drying to enable the separation and removal of non-reacted mixture.

In the emulsification polymerization, a composite polymer is prepared in such a manner that the monomer of 10 to 50 weight percent in respect to water, 0.05 to 5 weight percent of a polymerization initiator in respect to the monomer, and 0.1 to 20 weight percent of a dispersing agent are employed, and the resulting mixture undergoes polymerization at temperatures of about 30 to 100 °C, preferably at 60 to 90 °C for about 3 to 4 hours. The concentration of a monomer, the amount of the initiator, reaction temperature, and time, etc. can be widely and easily changed.

As initiators, can be listed water-soluble peroxides (for example, potassium persulfate, ammonium persulfate, etc.), water-soluble azo compounds (for example, 2,2'-bisazo-(2-aminodipropane)-hydrochloride, etc.), and furthermore, redox series polymerization initiators can be listed which are employed in combination of these with a reducing agent such as Fe²⁺ salt or sodium hydrogensulfite, etc.

As dispersing agents, water-soluble polymers are employed. In addition, any of anionic surface active agents, nonionic surface active agents, cationic surface active agents and amphoteric surface active agents can be employed.

Next, examples of water-soluble polymers employed as a dispersing aid includes water-soluble synthetic and natural polymers are listed and any of these can be preferably employed. Of these, the water-soluble synthetic polymers include compounds which have, in the molecular structure, a nonionic group, an anionic group, a cationic group, and nonionic and anionic groups, and nonionic and cationic groups, etc. The nonionic groups include, for example, an ether group, an alkylene oxide group, a hydroxy group, an amido group, an amino group, etc. The anionic groups include, for example, a carboxylic acid group or salts thereof, a phosphoric acid or salts thereof. The cationic groups include, for example, a quaternary ammonium salt group, a tertiary amino group, etc.

Furthermore, as water-soluble natural polymers, are listed those having, in the molecular structure, for example a nonionic group, an anionic group, a cationic group, and nonionic and anionic groups, and nonionic and cationic groups, etc.

As the water-soluble polymers, in either case of the water-soluble synthetic or natural polymers, those having an anionic group and nonionic and anionic group are preferably employed.

The water-soluble polymer exhibits a solubility of not less than 0.05 g per 100 g of water at 20 °C and preferably a solubility of not less than 0.1 g. As the water-soluble synthetic polymers, those are listed which have the repeated unit represented by general formula (I) and/or (II) shown below in an amount of 10 to 100 mole percent per molecule. 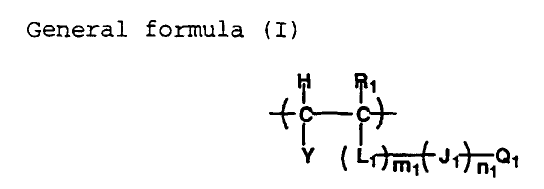 wherein R₁ represents a hydrogen atom, an alkyl group, a halogen atom or a -CH₂COOM group, and preferably an alkyl group having from 1 to 4 carbon atoms. L₁ represents a divalent linking group and includes, for example, -CONH-, -NHCO-, -COO-, -OCO-, -CO- or -O-, etc. J₁ represents an alkylene group, an arylene group, or an oxyalkylene group. Q₁ represents -M, -NH₂, -SO₃M, -COOM, or

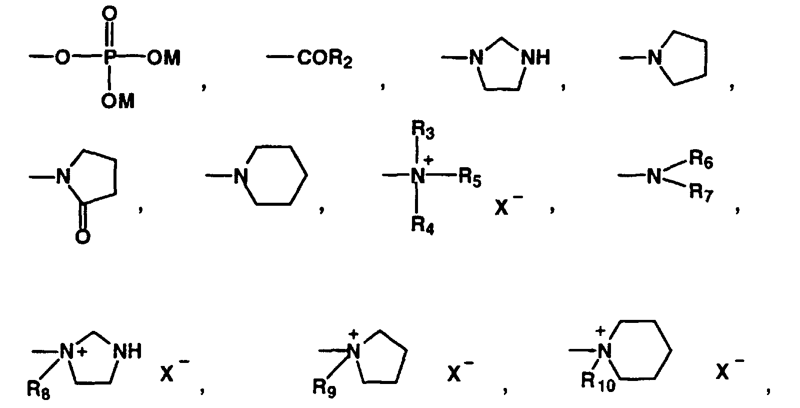

Of these, -COOM and -SO₃M are preferred and particularly, -SO₃M is preferably employed. M represents a hydrogen atom or a cation (for example, an alkali metal ion, and an ammonium ion), and R₂, R₃, R₄, R₅, R₆, R₇, R₈, R₉, and R₁₀ each represents an alkyl group having from 1 to 20 carbon atoms, and X represents an anion. m₁ and n₁ each represents 0 or 1. Y represents a hydrogen atom or -(L₂)m₂-(J₂)n₂-Q₂ and L₂, J₂, Q₂, m₂, and n₂ each is the same as L₁, J₁, Q₁, m₁, and n₁, respectively. 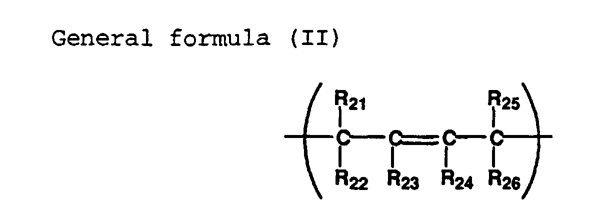 wherein R_{21,} R₂₂, R₂₃, R₂₄, R₂₅, and R₂₆ each represents a hydrogen atom, an alkyl group having from 1 to 8 carbon atoms, an aryl group having from 6 to 20 carbon atoms, or -SO₃M, and herein X represents a hydrogen atom, an alkali metal atom, an alkali earth metal atom, an ammonium group or an amino group, and at least one of R₂₁ through R₂₆ is -SO₃X.

The water-soluble synthetic polymer having repeated unit represented by general formulas (I) and (II) may be a homopolymer of the unit represented by general formula (I) and (II) and may contain other components.

Other components include, for example, acrylic acid esters, methacrylic acid esters, vinyl esters, olefins, styrenes, crotonic acid esters, itaconic acid diesters, maleic acid diesters, fumaric acid diesters, allyl compounds, vinyl ethers, vinyl ketones, glycidyl esters, components composed of one or more than two in combination selected from unsaturated nitriles, and these preferred are acrylic acid esters, methacrylic esters, styrenes. Specific examples of water-soluble synthetic polymers represented by general formulas (I) and (II) are illustrated below.

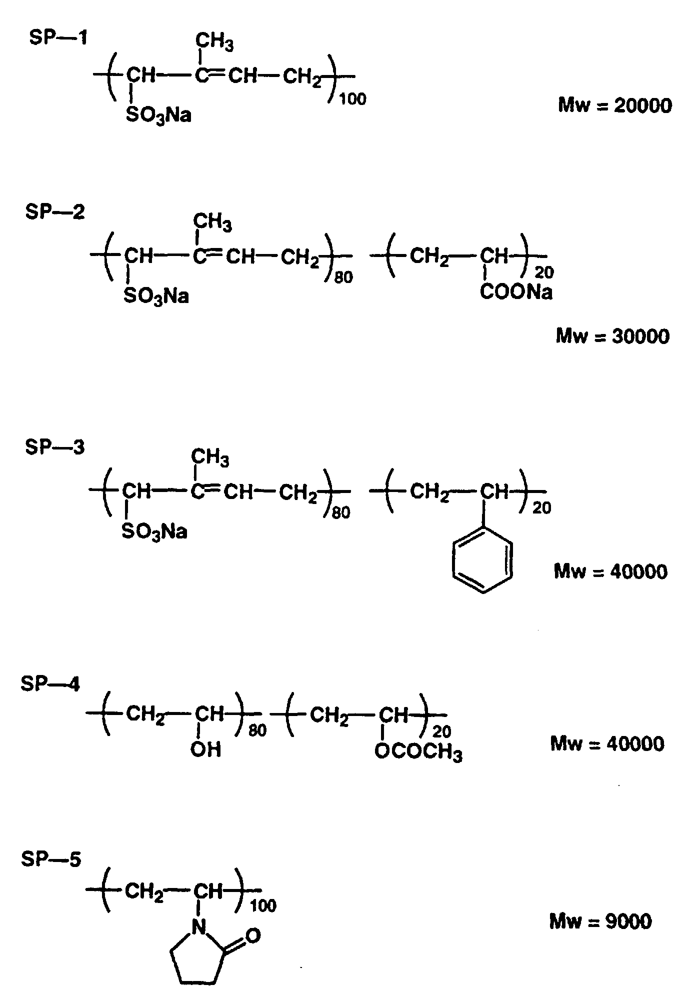

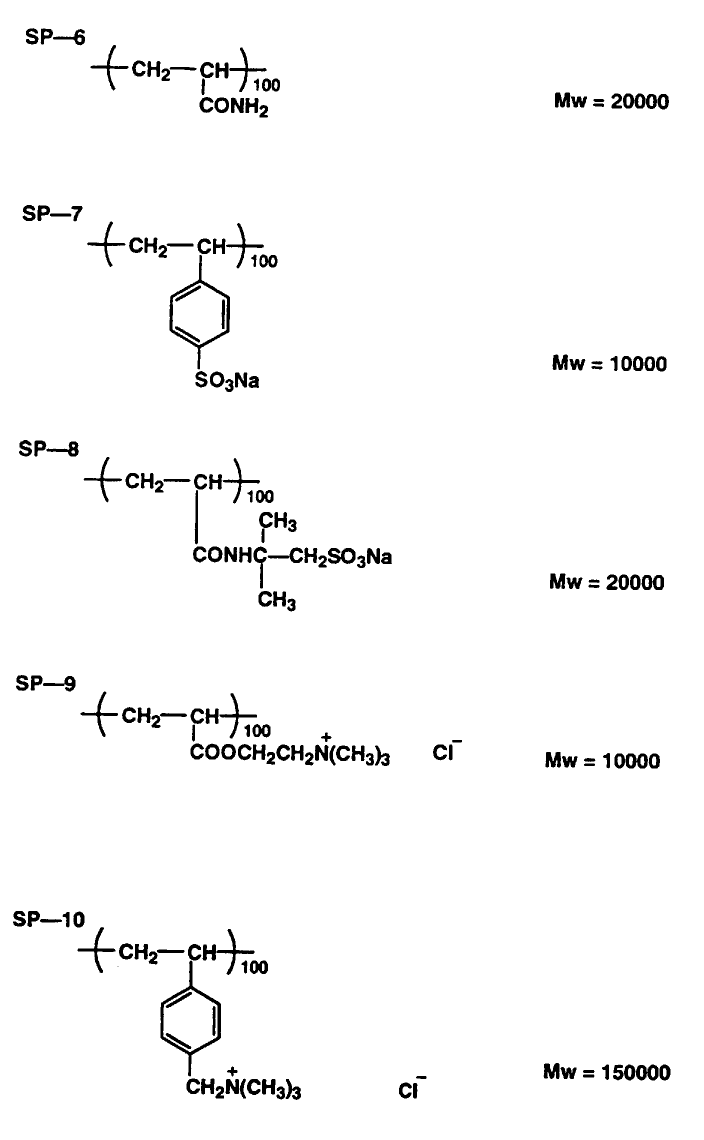

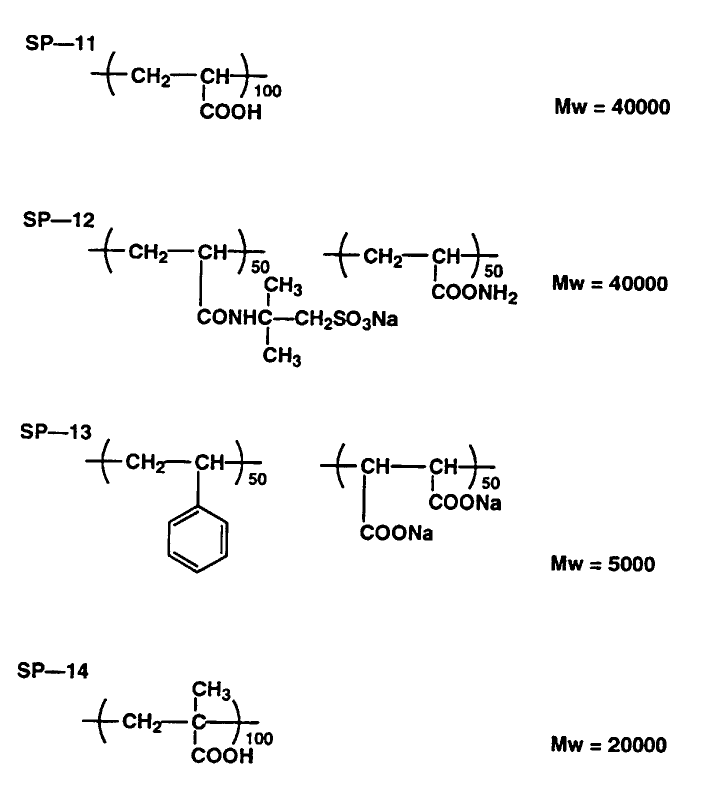

Water-soluble natural polymers include those described in "Suiyosei Kobunshi Mizubunsanho no Sogo Gijutsu Shiryo (General Reference Collection on Water-soluble Polymer Water-dispersion Method Resins)" (Keiei Kaihatsu Senta). Those preferred are rignin, starch, pullulan, cellulose, dextran, dextrin, glycogen, alginic acid, gelatin, collagen, gua gum, gum Arabic, laminaran, lichenin, nigeran, etc. and derivatives thereof. Furthermore, as derivatives of water-soluble natural polymers, are preferably employed those which are sulfonated, carboxylated, phosphated, sulfoalkylated, carboxyalkylenated, alkyl phosphated, and the salts thereof. Those particularly preferred are glucose, gelatin, dextran, cellulose, pullulan, glucomannan, dextrin, jeran gum, locust bean gum, xanthane gum, and derivatives thereof.

When the composite polymer is prepared by polymerization, metal alkoxides are preferably employed. Some metal alkoxides are termed coupling agents, and various types are available on the market, such as silane coupling agents, titanium coupling agents, aluminum coupling agents, zirconium coupling agents, etc. Silane coupling agents and titanium coupling agents are preferred.

Examples of preferred metal alkoxides are illustrated below.

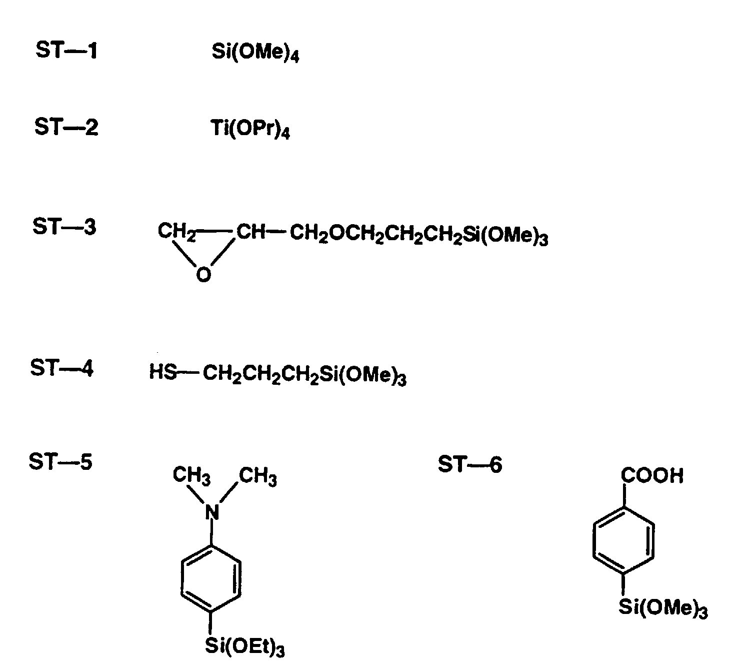

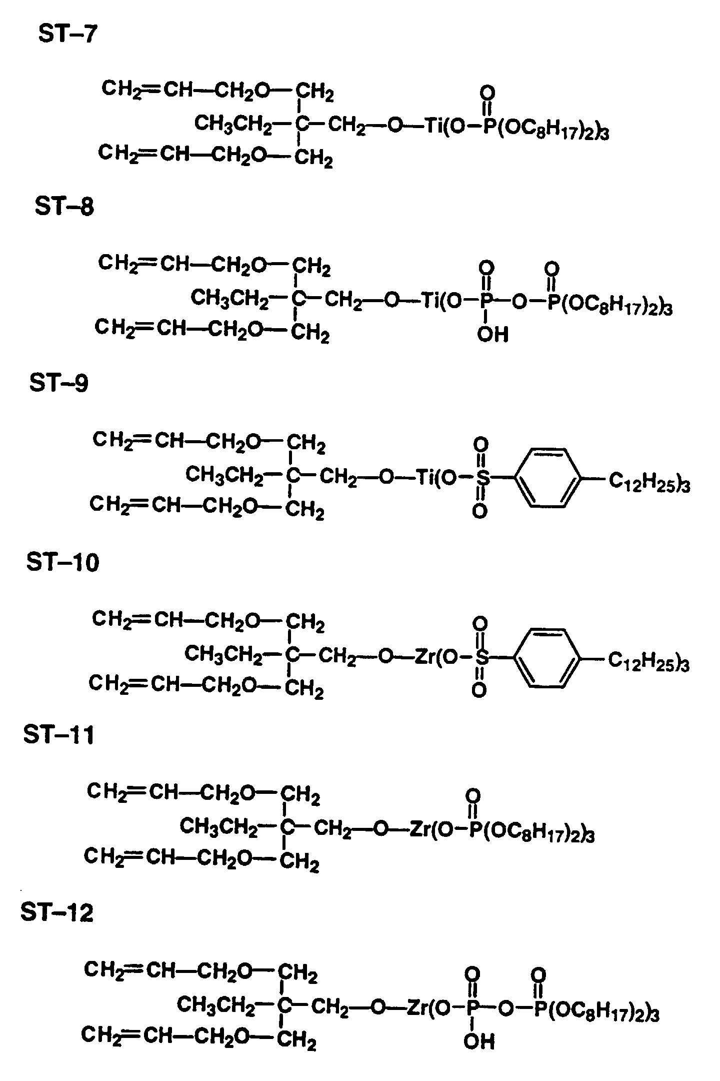

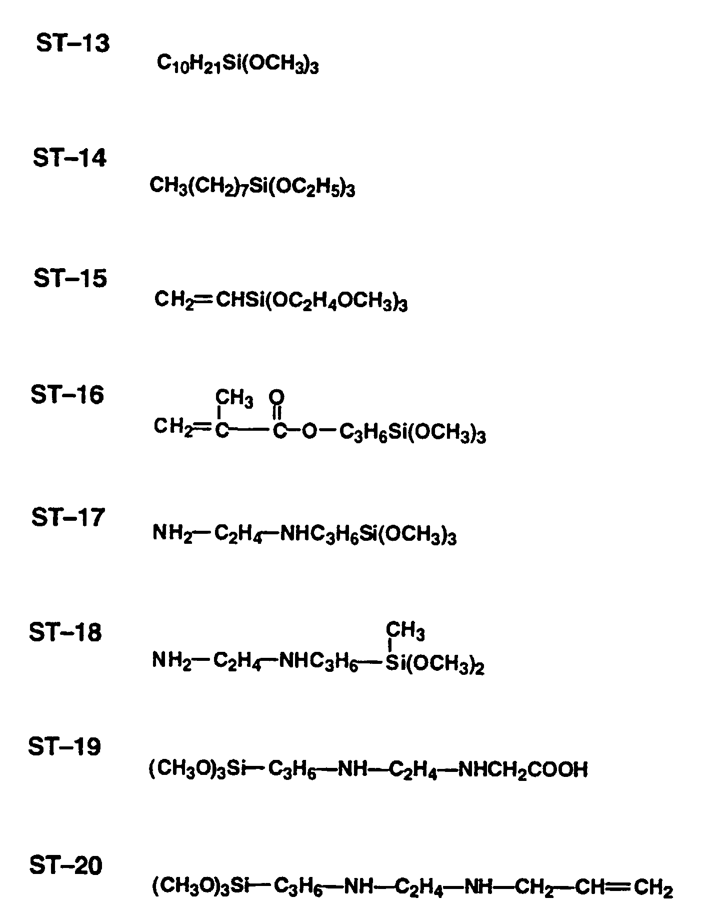

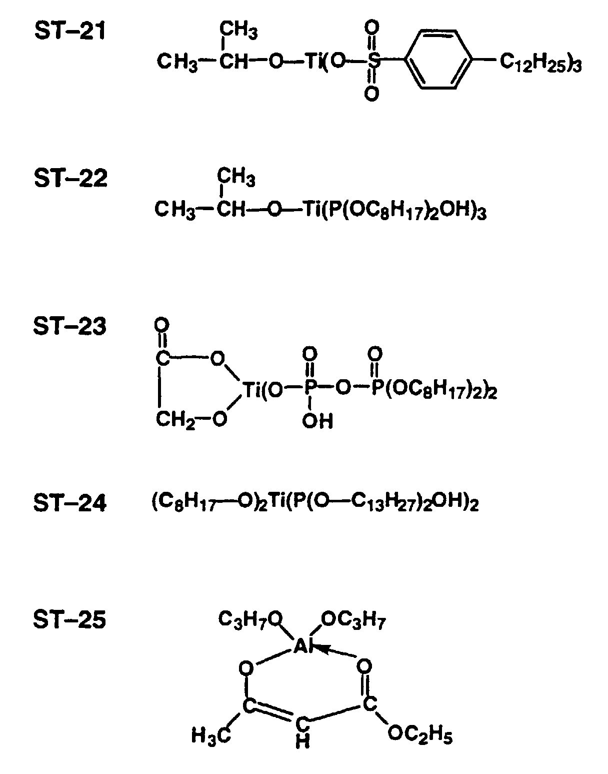

The composite polymer can be incorporated into a photographic constitution layer, as it is, or upon being dissolved in water or dispersed to water. As the dispersion method, are preferably employed an ultrasonic homogenizer, a ball mill, an atlighter, a pearl mill, a three-roll mill, a high speed grinding machine, etc.

The employed amount of the composite polymer is preferably between 5 and 90 weight percent in respect to the binder in a photographic constituting layer, and most preferably between 10 and 70 weight percent. Those may be added to silver halide emulsion layers irrespective of a light-sensitive layer and a nonlight-sensitive layer.

Specific examples of the composite polymers are shown below.

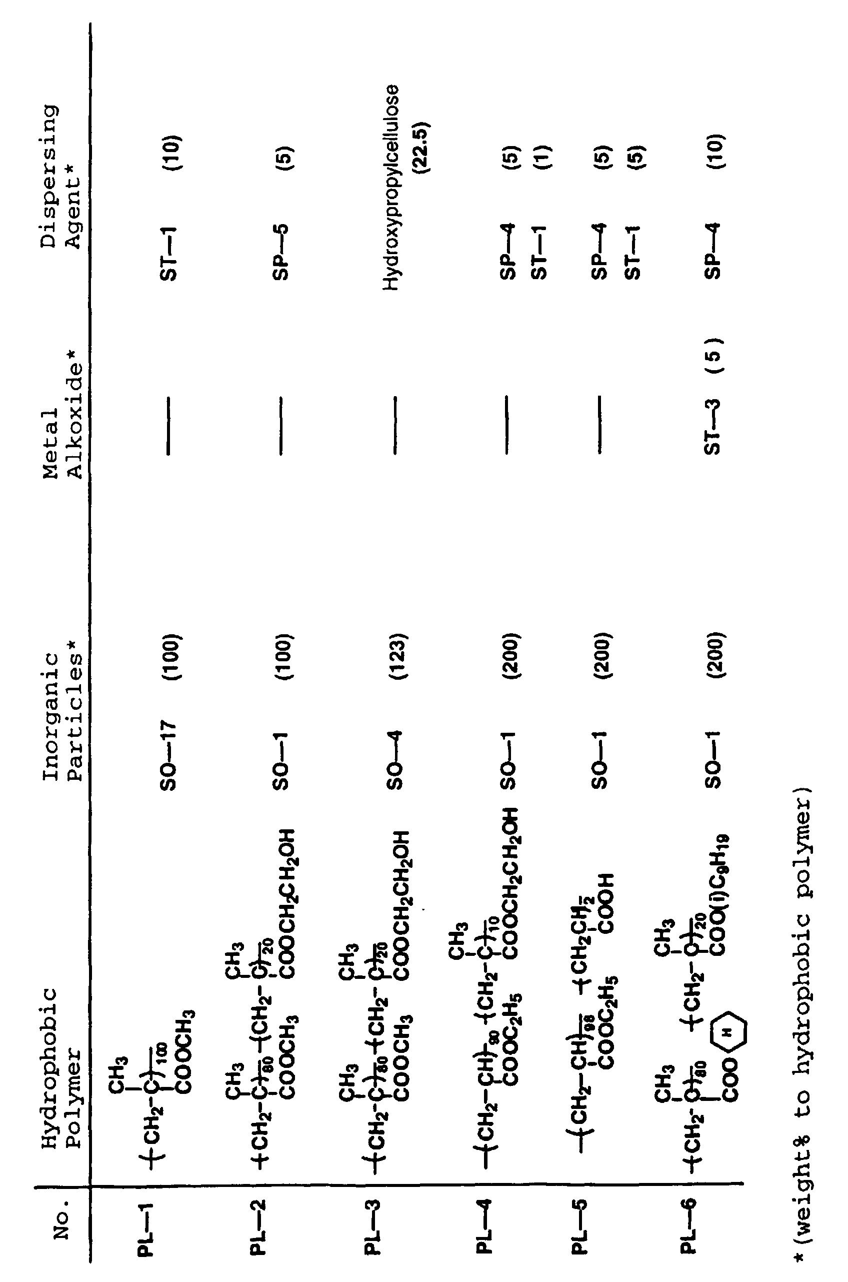

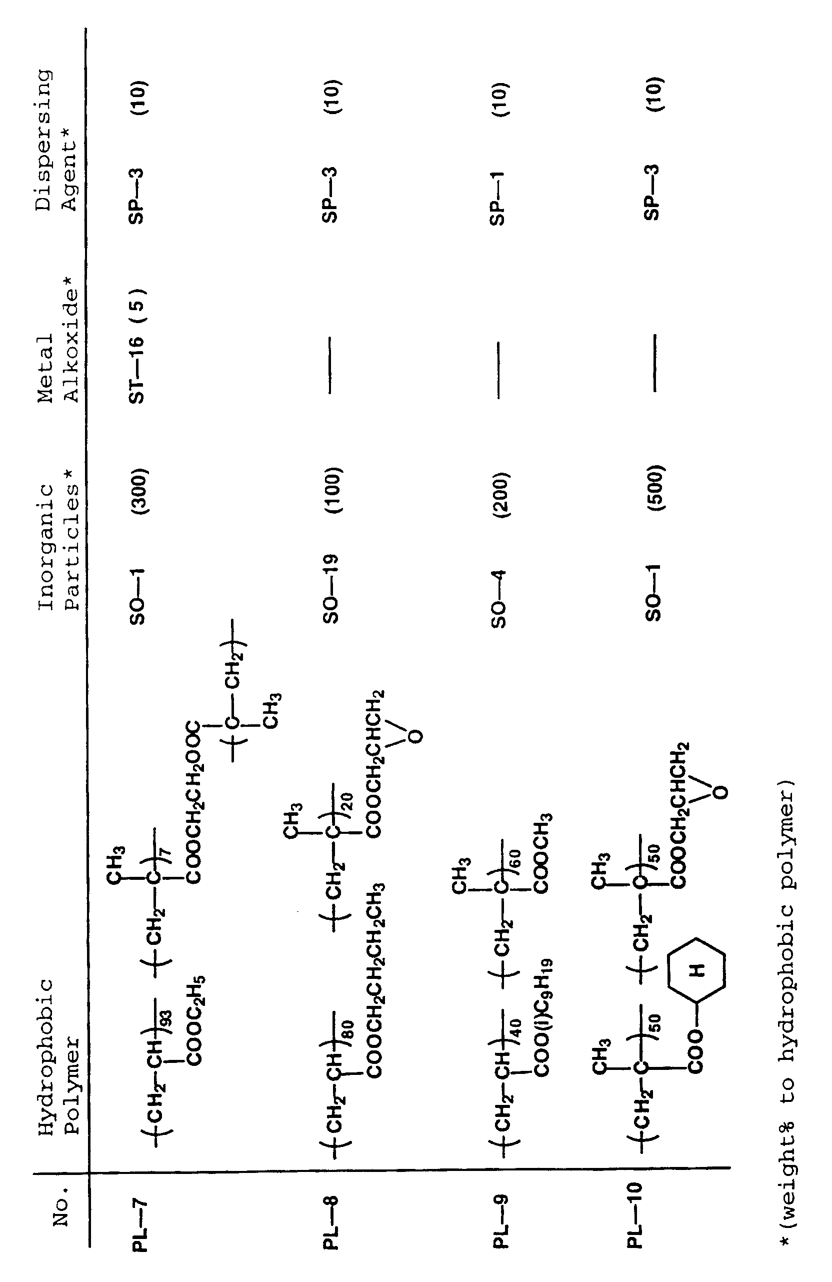

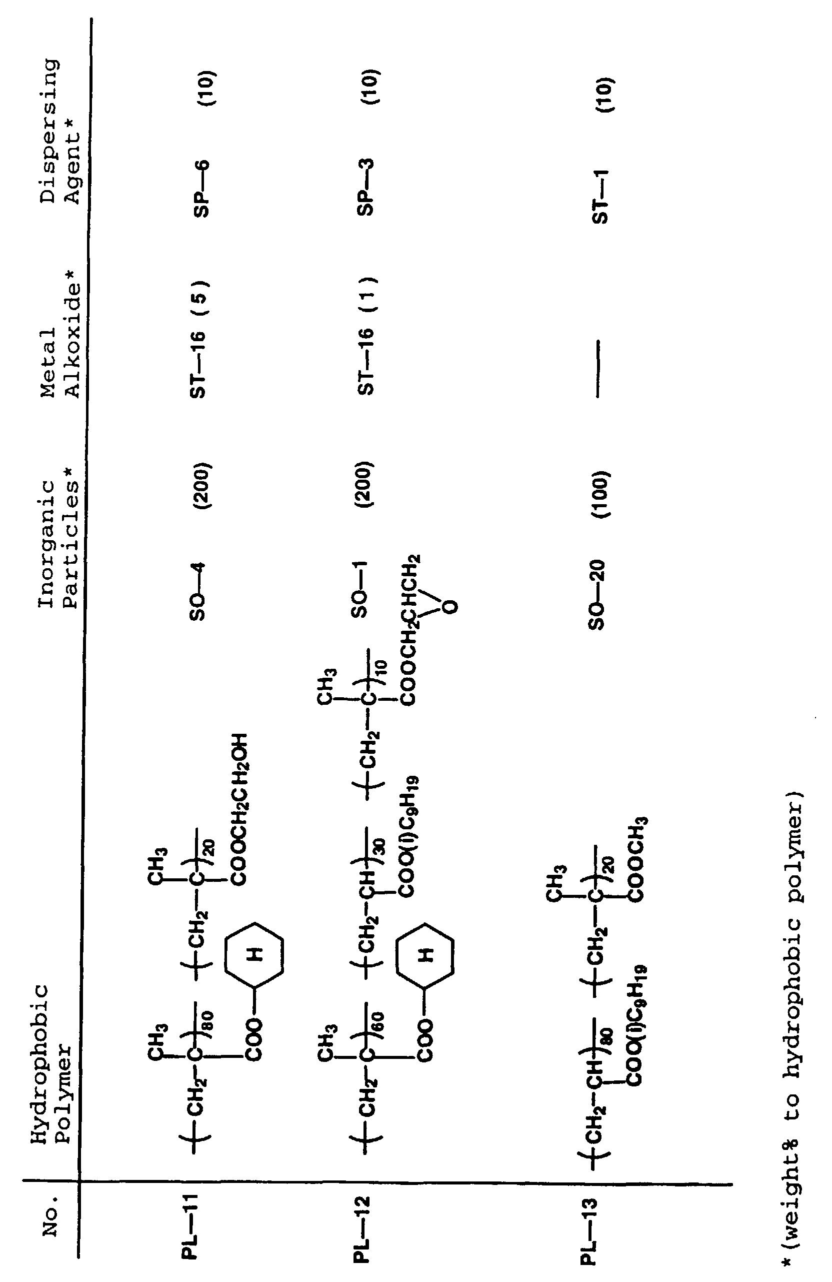

Hydrazine derivativesinclude compounds represented by general formula (H) described below.

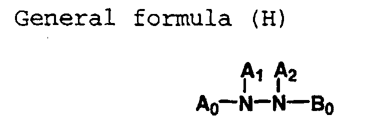

In the general formula (H), A₀ represents an aliphatic group, an aromatic group or a heterocyclic group, and the aliphatic groups represented by A₀ are preferably those having from 1 to 30 carbon atoms, and straight or branched chain or cyclic alkyl groups are particularly preferred. Specific examples include a methyl group, an ethyl group, a butyl group, an octyl group, a cyclohexyl group, a benzyl group, etc. These groups may be substituted with a suitable substituent (for example, an aryl, alkoxy, aryloxy, alkylthio, arylthio, sulfoxy, sulfonamido, sulfamoyl acylamino, ureido group, etc.).

In the general formula (H), the aromatic group represented by A₀ is preferably an aryl group having a single, or condensed ring, and includes, for example, a benzene ring or a naphthalene ring. As the heterocyclic group represented by A₀, a heterocyclic ring containing at least one of hetero atoms selected from nitrogen, sulfur and oxygen atoms with a single or condensed ring, and include, for example, pyrrolidine, imidazole, tetrahydrofuran, morpholine, pyridine, pyrimidine, quinoline, thiazole, benzothiazole, thiophene, or furan ring. As A₀, an aryl group and a heterocyclic group are particularly preferred, and the aromatic group and heterocyclic group of A₀ may have a substituent, and particularly preferred groups include substituents having an acidic group with a pKa of 7 to 11, specifically, a sulfonamido group, a hydroxyl group, a mercapto group, etc.

Furthermore, in the general formula (H), A₀ preferably contains at least one of a diffusion-proof group or a silver halide adsorption group. As the diffusion-proof group, a ballast group is preferred which is generally employed in immobilized photographic additives such as couplers. The ballast groups include those having not less than 8 carbon atoms, which are photographically inactive, such as, for example, an alkyl group, an alkenyl group, an alkynyl group, an alkoxy group, a phenyl group, a phenoxy group, an alkylphenoxy group, etc.

In the general formula (H), the silver halide adsorption groups include a thiourea group, a thiourethane group, a mercapto group, a thioether group, a thione group, a heterocyclic group, a thioamido heterocyclic group, a mercapto-heterocyclic group or an adsorption group described in Japanese Patent Publication Open to Public Inspection No. 64-90439.

In the general formula (H), B₀ represent a blocking group, and preferably represents -G0-D₀ group and G₀ represents a -CO- group, a -COCO- group, a -CS- group, a -C(=G₁D₁)- group, a -SO- group, a -SO₂- group or a -P(O)(G₁D₁)-group. Preferred G₀ includes -CO- group and -COCO- group, and particularly preferred group is -COCO- group. G₁ represents a simple linking group such as a -O- group, a -S- group, or a - N(D₁)- group, and d₁ represents an aliphatic group, an aromatic group, a heterocyclic group or a hydrogen atom. When a plurality of D₁s are present in a molecule, those may be the same or different.

In the general formula (H), D₀ represents a hydrogen atom, an aliphatic group, an aromatic group, a heterocyclic group, an amino group, an alkoxy group, an aryloxy group, an alkylthio group, and as preferred D₀, are listed a hydrogen atom, an alkoxy group, and an amino group. A₁ and A₂ both represent hydrogen atoms, or one represents a hydrogen atom, while the other represents an acyl group (acetyl, trifluoroacetyl, benzoyl, etc.), a sulfonyl group (methanesulfonyl, toluenesulfonyl, etc.), or an oxalyl group (ethoxalyl, etc.).

As more preferred embodiments of the compounds represented by the general formula (H), compounds represented by general formula (H-2) are listed.

R₀-SO₂NHAr-NHNH-G₀-D₀ General formula (H-2)

In the general formula (H-2), R₀ represents a substituted or unsubstituted alkyl group, an aryl group, a heterocyclic group; Ar represents two substituted or unsubstituted arylene groups, and a heterocyclic group, and G₀ and D₀ are the same as the general formula (H).

Specific examples of compounds represented by the general formula (H) are shown below.

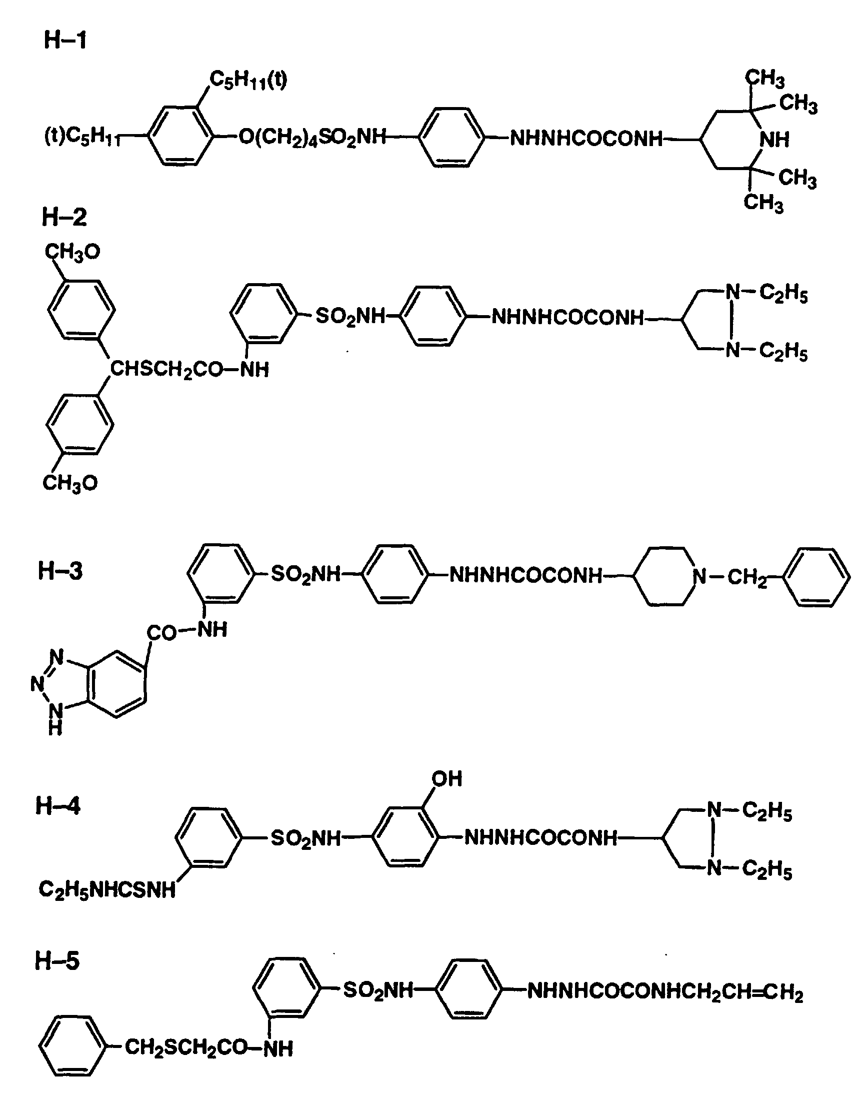

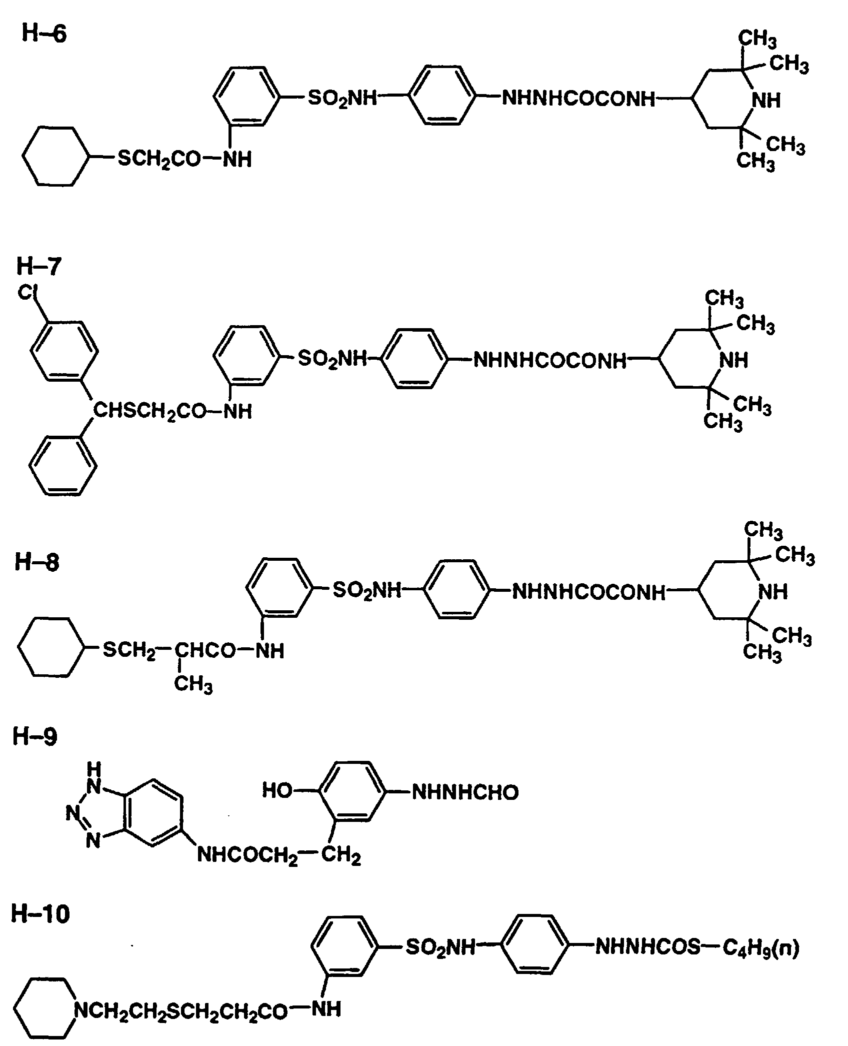

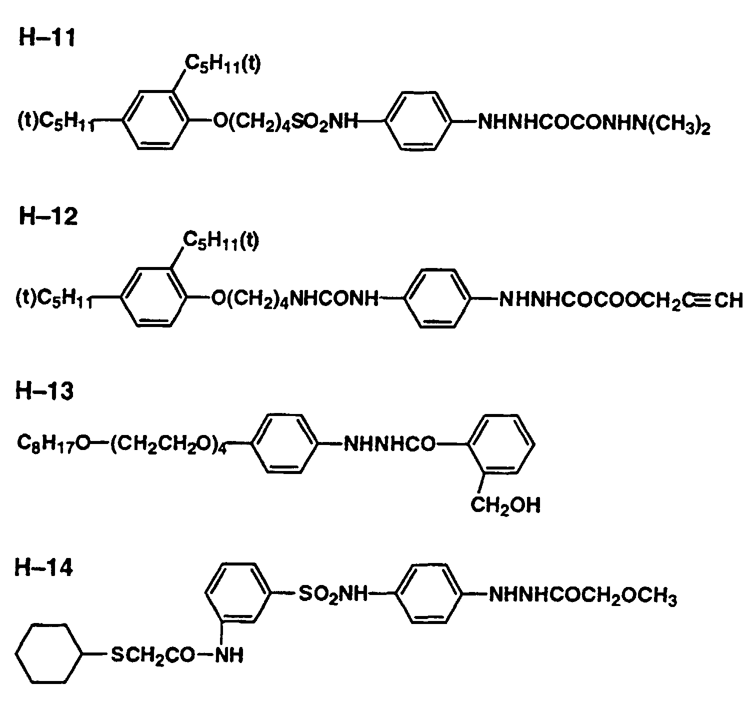

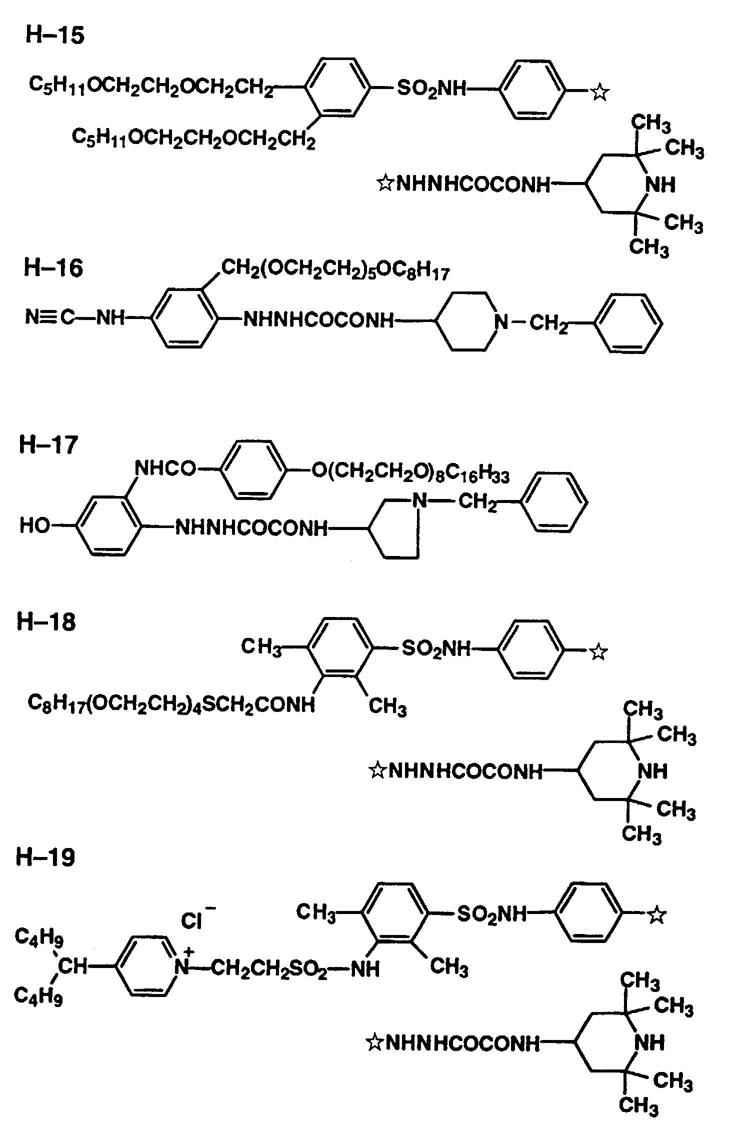

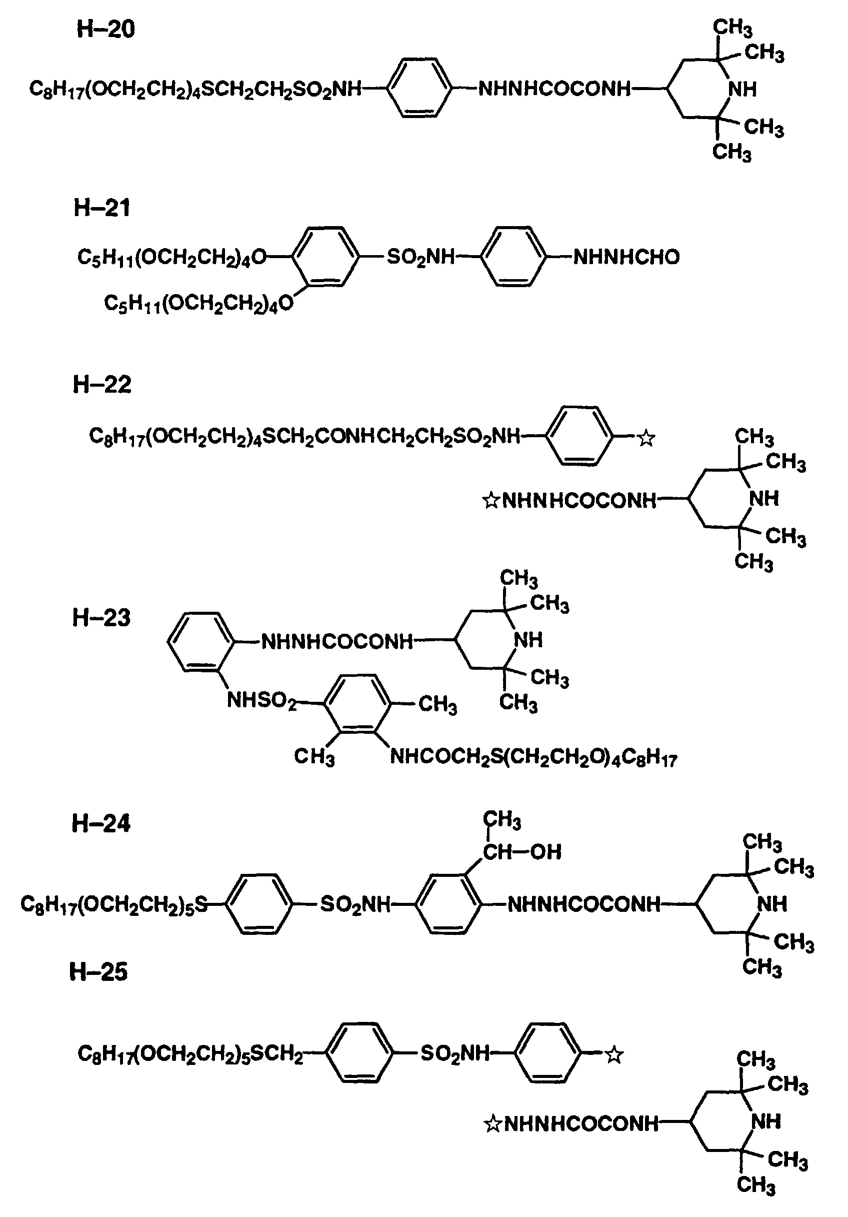

In order to improve contrast increasing effects, it is inevitable to employ a nucleation accelerator. As nucleation accelerators, compounds represented by general formula (Na) or (Nb) are preferably employed.

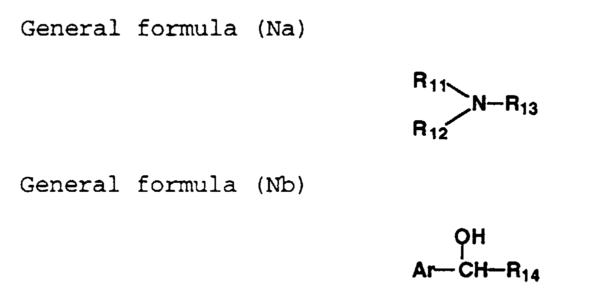

In the general formula (Na), R₁₁, R₁₂, and R₁₃ each represents a hydrogen atom, an alkyl group, a substituted alkyl group, an alkenyl group, a substituted alkenyl group, an alkynyl group, an aryl group, a substituted aryl group, and a ring can be completed employing R₁₁, R₁₂, and R₁₃.

Specifically, aliphatic tertiary amines are preferred. These compounds which have a diffusion-proof group or a silver halide adsorption group are preferred. In order to have the diffusion-proof group, compounds having a molecular weight of not less than 100 are preferred and those having a molecular weight of not less than 300 are particularly preferred. Preferred adsorption groups include a heterocyclic group, a mercapto group, a thioether group, a selenoether group, a thione group, a thiourea group, etc.

Specific examples of these nucleation accelerators are shown below.

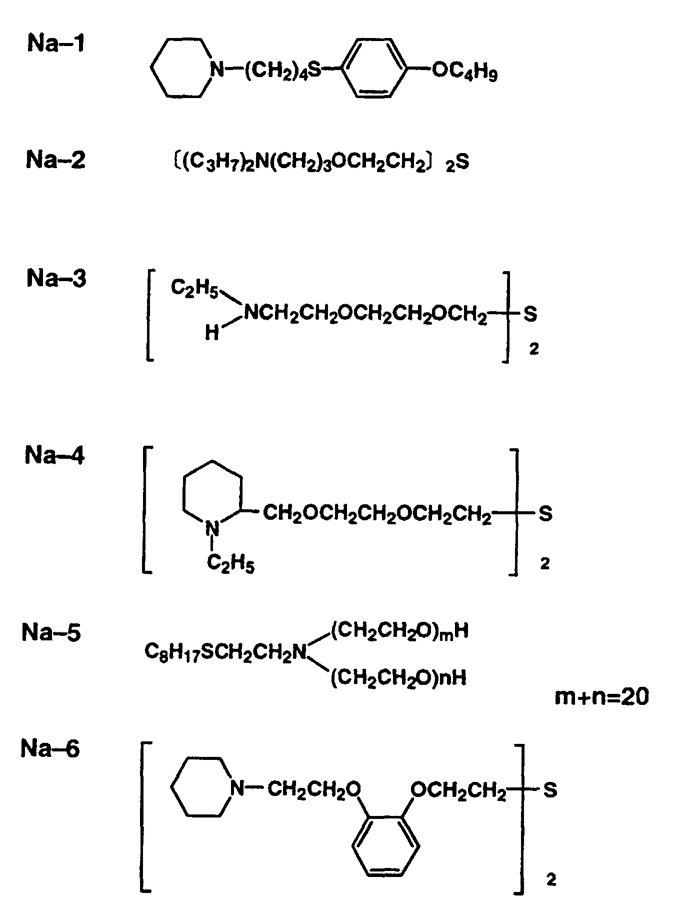

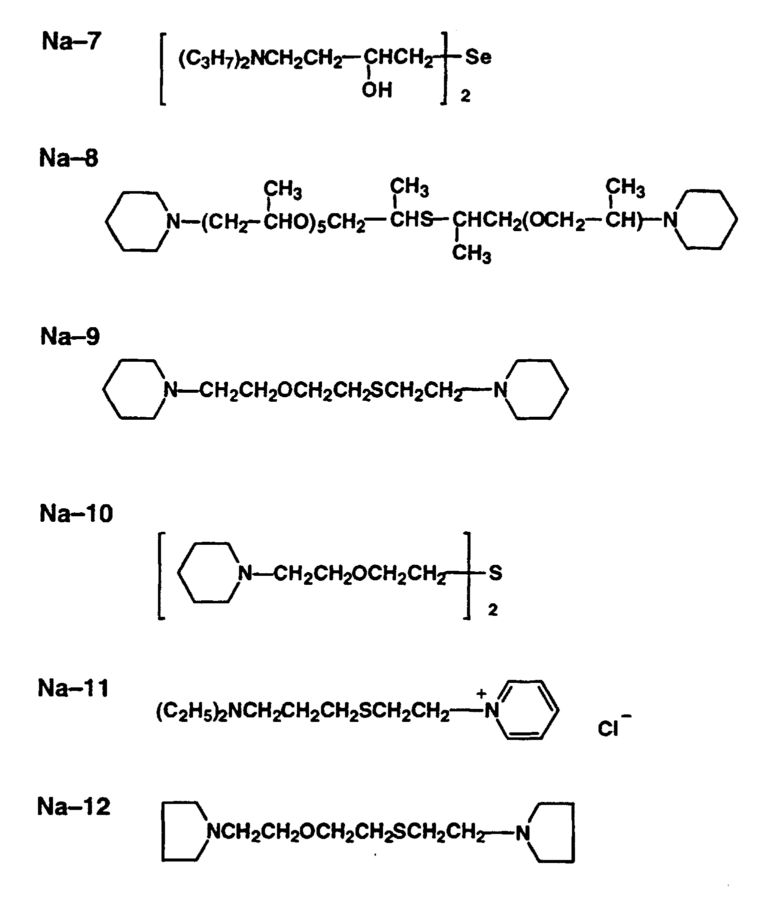

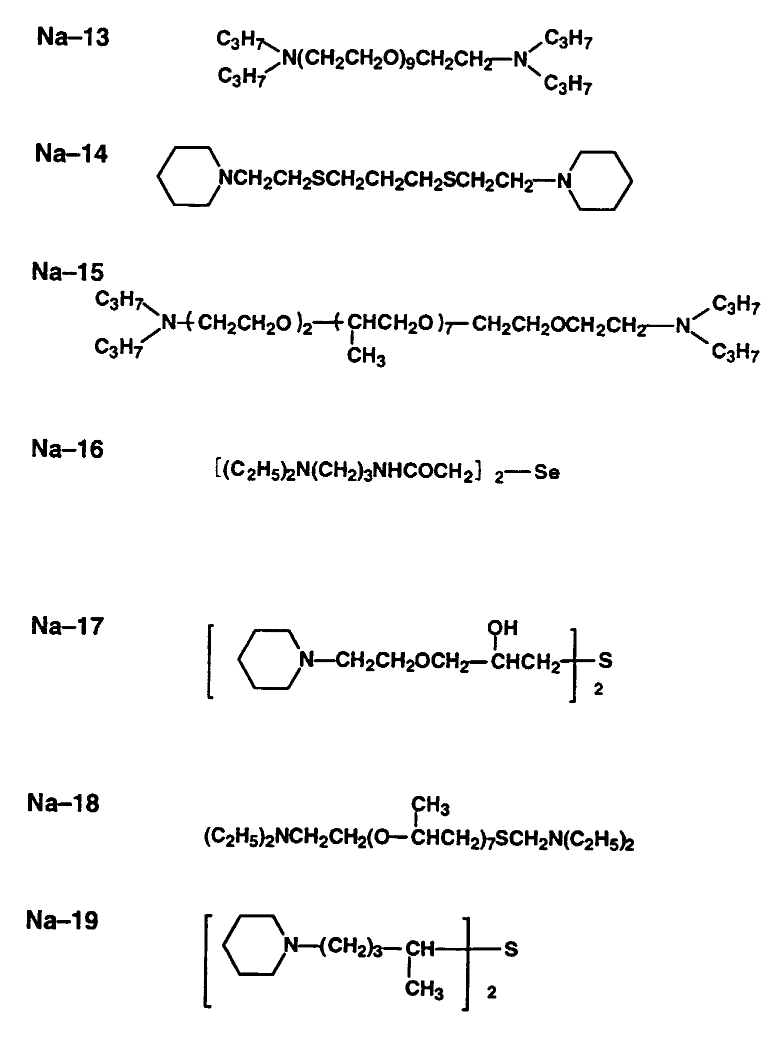

Further, as preferred embodiments of (Na), compounds represented by general formula (Na2) shown below are illustrated.

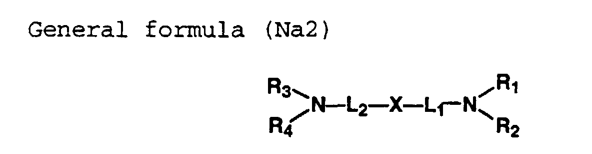

In the general formula (Na2), R₁, R₂, R₃, and R₄ each represents a hydrogen atom, an alkyl group, a substituted alkyl group, an alkenyl group, a substituted alkenyl group, an alkynyl group, a substituted alkynyl group, an aryl group, a substituted aryl group, a saturated or unsaturated heterocyle, and these can link with each other to complete a ring. Furthermore, combination of either R₁ and R₂ or R₃ and R₄ represents no hydrogen atoms at the same time.

In the general formula (Na2), X represents an atom of S, Se, or Te, and L₁ and L₂ each represents a divalent linking group. Specifically, are listed combinations of groups shown below and groups having a substituent (for example, an alkylene group, an alkenylene group, an arylene group, an acylamino group, a sulfonamido group, etc.) of the above-mentioned group.

-CH₂-, -CH=CH-, -C₂H₄-, pyridinyl, -N(Z₁)-(Z₁ represents a hydrogen atom, an alkyl group or an aryl group), -O-, -S-, -(CO)-, -(SO₂), -CH₂N-, or in a linking group, more than one of structures shown below are preferably contained.
-(CH₂CH₂O)-, -[C(CH₃)HCH₂O]-, -[OC(CH₃)HCH₂O]-, -[OCH₂C(OH)HCH₂]-

In the general formula (Nb), Ar represents a substituted or unsubstituted aromatic group or a heterocyclic group; R₁₄ represents a hydrogen atom, an alkyl group, an alkynyl group, an aryl group; and Ar and R₁₄ may complete a ring upon being linked through a linking group. These compounds preferably have a diffusion-proof group or a silver halide adsorption group in the molecule. In order to incorporate a preferred diffusion-proof group into the molecule, the molecular weight is preferably not less than 120, and more preferably not less than 300. Furthermore, preferred silver halide adsorption groups include the same as those of compounds represented by the general formula (H).

Specific examples of compounds represented by the general formula (Nb) are shown below.

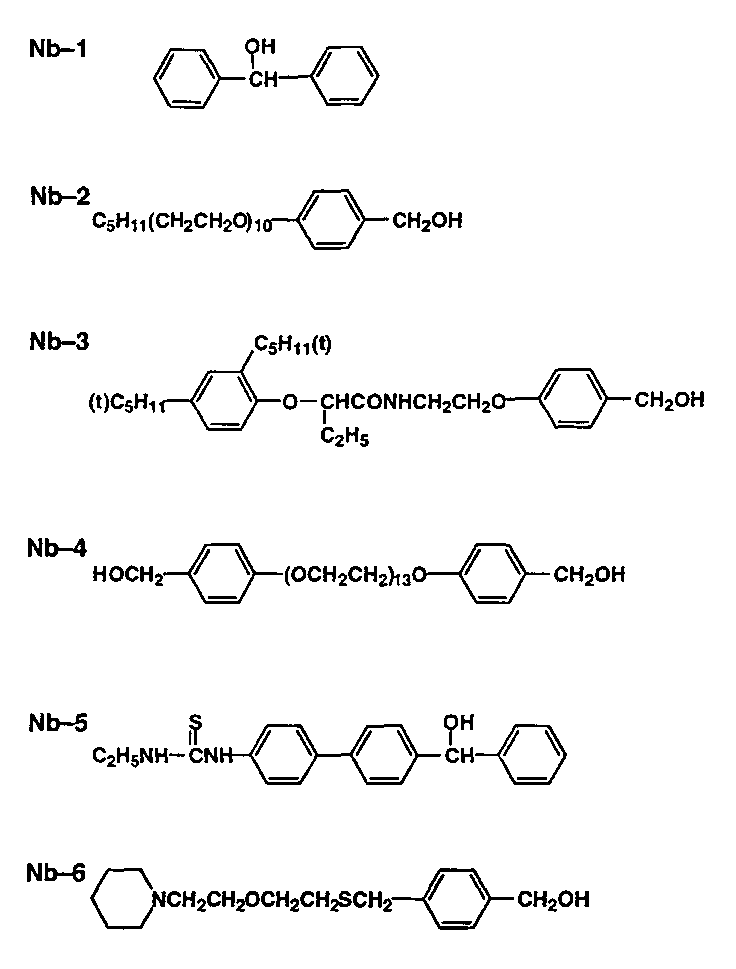

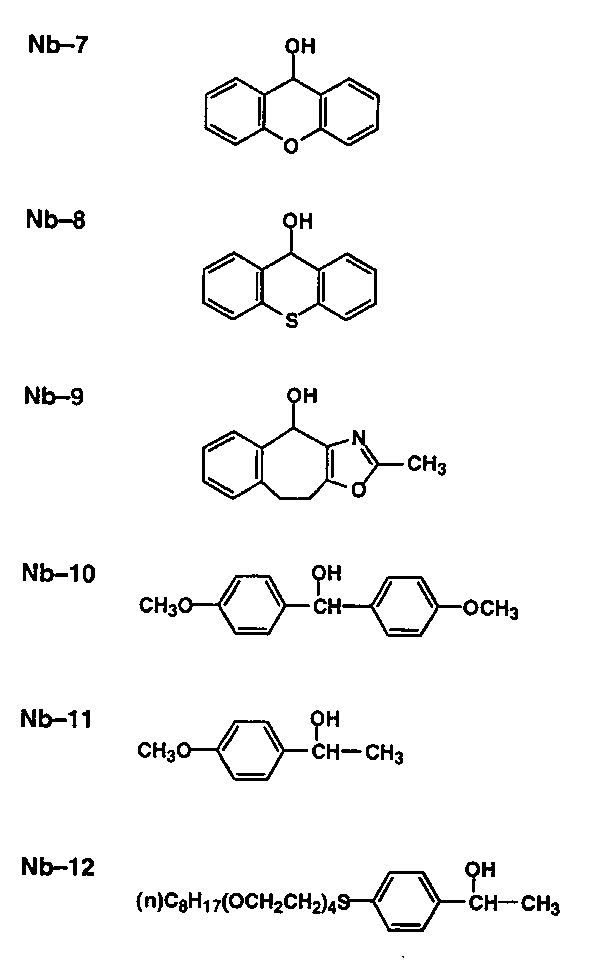

When a nucleation accelerator having a molecular weight of not more than 500 is employed, the advantages of the inv are further exhibited.

A layer, into which a hydrazine derivative and a nucleation accelerator are incorporated, is a silver halide emulsion layer or the layer adjacent to the emulsion layer.

Furthermore, an optimum addition amount is not definite, depending on a silver halide grain diameter, silver halide composition, chemical sensitization degree, retarder type, etc. However, generally, the addition amount is preferably in the range of 10⁻⁶ to 10⁻¹ mole per mole of silver halide and more preferably in the range of 10⁻⁵ to 10⁻² mole.

In addition, nucleation accelerators preferably employed include onium salts described in Japanese Patent Publication Open to Public Inspection No. 7-270957; compounds represented by general formula I described in Japanese Patent Publication Open to Public Inspection No. 7-104420; and thiosulfonic acids described from the 19th line of the lower right column on page 17 to the 4th line of the upper right column on page 18, and from the 1st line to the 5th line of the lower right column on the same page of Japanese Patent Publication Open to Public Inspection No. 2-103536, and further in Japanese Patent Publication Open to Public Inspection No. 1-237538.

Silver halide emulsion is described. For sensitizing silver halide emulsion, generally known sulfur sensitization, Se sensitization, Te sensitization, reduction sensitization and noble metal sensitization methods may be appropriately selected and employed in combination. No chemical sensitization may be carried out.

As sulfur sensitizers, in addition to sulfur compounds contained in gelatin, various sulfur compounds, for example, thiosulfate salts, thioureas, rhodanines, polysulfides, etc. may be employed. As Se sensitizers, triphenylselenophosphine, etc. are preferably employed.

As selenium sensitizers, wide-ranging types of selenium compounds can be employed. For example, compounds described in U.S. Pat. Nos. 1.574.944, 1,602,592, and 1,623,499; Japanese Patent Publication Open to Public Inspection Nos. 60-150046, 4-25832, 4-109240, 4-147250, etc. can be employed. Useful selenium sensitizers include colloidal metal selenium, isoselenocyantes (for example, allylisoselenocyanate, etc.), selenoureas (for example, N,N-dimethylselenourea, N,N,N'-triethylselenourea, N,N,N'-trimethyl-N'-heptafluoroselenourea, N,N,N'-trimethyl-N'-heptafluoropropylcarbonylselenourea, N,N,N'-trimethyl-N'-4-nitrophenylcarbonylselenourea, etc.), selenoketones (for example, selenoacetone, selenoacetophenone, etc.), selenoamides (for example, selenoacetoamide, N,N-dimethylselenobenzamide, etc.), selenocarboxylic acids and selenoesters (for example, 2-selenopropionic acid, methyl-3-seleno butyrate, etc.), selenophosphates (for example, tri-p-selenophosphate, etc.), selenides (for example, triphenylphosphine selenide, diethyl selenide, diethyl diselenide, etc.). Particularly, preferred selenium sensitizers are selenoureas, selenoamides, selenoketones, and selenides.

Specific examples of application techniques of these selenium sensitizers are disclosed, for example, in U.S. Pat. Nos. 1,574944, 1,602,592, 1,623,499, 3,297,446, 3,297,447, 3,320,069, 3,408,196, 3,408,197, 3,442,653, 3,420,670, and 3,591,385; French Patent Nos. 2,693,038 and 2,093,209; Japanese Patent Publication Nos. 52-34491, 52-34492, 53-295, and 57-22090; Japanese Patent Publication Open to Public Inspection Nos. 59-180536, 59-185330, 59-181337, 59-187338, 59-192241, 60-150046, 60-151637, 61-246738, 3-4221, 3-24537, 3-111838, 3-116132, 3-148648, 3-237450, 4-16838, 4-25832, 4-32831, 4-96059, 4-109240, 4-140738, 4-140739, 4-147250, 4-149437, 4-184331, 4-190225, 4-191729, and 4-195035; U.K. Patent Nos. 255,846 and 861,984. Furthermore, examples are disclosed in scientific references such as H. E. Spencer, et al, Journal of Photographic Science, Vol. 31, pages 158 to 169 (1983), and the like.

Though the employed amount of a selenium sensitizer varies depending on a used selenium compound, silver halide grains, chemical ripening conditions, etc., generally, 10⁻⁸ to 10⁻⁴ mole per mole of silver halide is employed.

Chemical ripening temperature employing the selenium sensitizer is preferably in the range of 40 to 90 °C and more preferably between 45 and 80 °C. The pH is preferably in the range of 4 to 9 and the pAg is preferably in the range of 6 to 9.5.

As addition methods of these sensitizers, if these are water soluble, direct addition may be carried out. When these are not water-soluble, various methods can be employed. For example, there is a method in which a sulfur sensitizer, and a selenium or tellurium sensitizer are previously mixed well with a gelatin solution and then added. Or, a method can be employed in which, after dissolving a sensitizer in a low boiling point organic solvent which dissolves the sensitizer, the resulting solution is emulsifying-dispersed in the presence of a surface active agent and added. When this method is employed, it is preferred to remove the low boiling point organic solvent after the emulsifying dispersion. Further, according to a method disclosed in Japanese Patent Publication Open to Public Inspection No. 4-140739, addition can be carried out in the form of an emulsifying dispersion of a solution prepared by mixing the sensitizer with a water-insoluble and an organic solvent-soluble polymer. Furthermore, a method can be employed in which employing high speed impeller dispersion, sand mill dispersion, ultrasonic dispersion, ball mill dispersion, etc., dispersion is optionally carried out so that the average particle diameter is in the range of 0.01 to 6 µm.

Of noble metal sensitization methods, the gold sensitization method is representative, and gold compounds, mainly gold complexes, are employed. Complexes of noble metals, other than gold, such as platinum, palladium, rhodium, etc. may also be incorporated.

As reduction sensitizers, stannous salts, amines, formamidinesulfinic acid, silane compounds, etc. may also be employed.

Furthermore, during production process of a light-sensitive material, an oxidizing agent for silver can be employed. Oxidizing agents include inorganic oxidizing agents of oxygen acids such as, for example, hydrogen peroxide (aqueous solution), hydrogen peroxide addition products (for example, NaBO₂·H₂O₂·3H₂O, 2NaCO₃·3H₂O₂, Na₄P₂O₇·2H₂O₂, 2Na₂SO₄·H₂O₂·2H₂O, etc.), peroxy acid salts (for example, K₂S₂O₈, K₂C₂O₆, K₄P₂O₈, etc.), peroxy complexes (for example, [Ti(O₂)C₂O₄]·3H₂O, 4K₂SO₄·Ti(O₂)·SO₄·2H₂O, Na₂[VO(O₂](C₂O₄)₂·6H₂O, etc.), permanganic acid salts (for example, KMnO₄, etc.), chromic acid salts (for example, K₂CrO, etc.); halogen elements such as iodine, bromine, etc.; perhalogen acid salts (for example, potassium periodate); high valent metal salts (for example, potassium ferricyanide, etc.); and thiosulfonic acid salts, etc.

Furthermore, as organic oxidizing agents, are exemplified quinones such as p-quinone, etc., organic peroxides such as peracetic acid, perbenzoic acid, etc., active halogen releasing compounds (for example, N-bromosuccinimide, chloramine-T, chloramine-B, etc.).

Particularly preferred oxidizing agents are ozone, hydrogen peroxide and addition products thereof, halogen element inorganic oxidizing agents, quiones and active halogen releasing organic oxidizing agents.

The added amount of the oxidizing agent for silver is preferably between 10⁻⁷ and 10⁻¹ mole per mole of silver halide, more preferably between 10⁻⁶ and 10⁻² mole , and most preferably between 10⁻⁵ and 10⁻³.

In order to add the oxidizing agent for silver during chemical sensitization process, any ordinary method may be employed which is ordinarily employed to add an additive to a photographic emulsion. For example, a water-soluble compound is dissolved in water to make an aqueous solution having an appropriate concentration, and a no water-soluble or slightly water-soluble compound is dissolved in a suitable organic solvent, such as, for example, alcohols, glycols, ketones, esters, amides, which shows no adverse effects on photographic properties and is compatible with water and can be added. Alternately, addition can be carried out in the form of solid dispersion.

The oxidizing agent for silver may be added during any time of the production processes of a silver halide light-sensitive material. However, the preferred time is from the preparation process of silver halide grains to the process immediately prior to coating on a support.

The silver halide in a silver halide emulsion is preferably composed of pure silver chloride, silver chlorobromide containing silver chloride of not less than 60 mole percent, or silver iodobromide containing silver chloride of not less than 60 mole percent.

The average grain diameter of silver halide is preferably not more than 0.7 µm, and most preferably between 0.5 and 0.1 µm. A term, "average grain diameter", is generally used with experts in the field of photographic science and easily comprehended. The "grain diameter" denotes a grain diameter when the grain is sphere or can be approximated to a sphere. When the grain is cubic, the sphere having the same volume is obtained and the diameter of the sphere is regarded as the grain diameter. Regarding detailed method to measure the average grain diameter, C.E. Mees and T.H. James, "The Theory of the Photographic Process", Third Edition, pages 36 to 43, 1966, published by Macmillan may be referred.

There is no limitation on the shape of silver halide grains, and the shape may be any of tabular, spherical, cubic, tetradecahedral, regular octahedral shapes or other shapes. Furthermore, the narrower the grain diameter distribution, the more preferred. Particularly, a so-called monodisperse emulsion is preferred in which 90 percent, preferably 95 percent of the number of total grains is in the range of ±40 percent of the average grain diameter.

As methods to react water-soluble silver salts with water-soluble halide salts, any of a single-jet method, a double-jet method, and combination of thereof may be employed.

A method (so-called reverse precipitation) can be employed in which grains are formed in the presence of excessive silver ions. As one of types of the double-jet method, a method in which the pAg in a liquid phase in which silver halide is formed, namely, a so-called controlled double-jet method, can be employed. When this method is employed, a silver halide emulsion having regular crystal form and nearly uniform grain diameter is prepared.

During grain formation processes or one of those, to the silver halide grains employed in a silver halide emulsion, are preferably added complex salts containing elements, belonging to Group 3 to Group 13 of Periodic Table, such as cadmium, zinc, lead, thallium, iridium, rhodium, lutetium, osmium, iron, copper, platinum, palladium, etc. As ligands of these complex salts, can be employed a halogen atom, a nitrosyl group, a cyano group, an aquo group, an alkyl group, a pseudohalogen group, an alkoxy group, an ammonium group, and optional combinations thereof, etc.

Furthermore, the halogen composition on the surface of a silver halide grain can be controlled employing a water-soluble halides or fine sliver halide grains. This technique is widely known termed as conversion in this industry society.

The composition of a silver halide grain may be uniform from the interior to the surface and the grain may be composed of a plurality of layers in which halogen composition, a type and amount of a doping agent, lattice defect distribution, etc. are different.

A plurality of types of grains are employed in combination, which are different in production conditions, surface state, chemical sensitization state, etc. such as a grain diameter, sensitivity, crystal habit, photosensitive wavelength, halogen composition, monodisperse degree, the amount and type of a doping agent, electrical potential, pH, a salt removal method, etc. In that case, these silver halide grains may be incorporated into the same layer or a plurality of different layers.

Silver halide emulsions and preparation thereof are described in detail in Research Disclosure Item 176, 17643, pages 22 to 23 (December 1978) and references cited therein.

Sensitizing dyes, which can be employed in a silver halide emulsion, include cyanine dyes, merocyanine dyes, composite cyanine dyes, composite merocyanine dyes, homopolar cyanine dyes, hemicyanine dyes, styryl dyes, and hemioxnol dyes. Any of nuclei generally employed in cyanine dyes as a basic heterocyclic nucleus can be applied to these dyes; that is, a pyrophosphoric nucleus, oxazoline nucleus, a thiazoline nucleus, a pyrrole nucleus, an oxazole nucleus, a thiazole nucleus, a selenazole nucleus, an imidazole nucleus, a tetrazole nucleus, a pyridine nucleus, etc.; nuclei formed by uniting these nuclei with alicyclic rings; nuclei formed by uniting these nuclei with aromatic hydrocarbon rings, that is, an indolenine nucleus, a benzindolenine nucleus, an indole nucleus, a benzoxazole nucleus, a naphthoxazole nucleus, a benzothiazole nucleus, a naphthothiazole, nucleus, a benzoselenazole nucleus, a benzimidazole nucleus, a quinoline nucleus, etc. These nuclei may be substituted onto a carbon atom. To merocyanine dyes or composite merocyanine dyes, can be applied, as a nucleus having a ketomethylene structure, 5-to 6-member heterocycles such as a pyrazoline-5-on nucleus, a thiohydantoin nucleus, 2-thioxazolidine-2,4-dion nucleus, a thiazolidine-2,4-dion nucleus, a rhodanine nucleus, a thiobarbituric acid nucleus, etc. Specifically, can be employed those described in Research Disclosure, Vol. 176, Item 17643 (published in December 1978), pages 2 and 3, and U.S. Pat. Nos. 4,425,425 and 4,425,426. Furthermore, sensitizing dyes may be dissolved employing ultrasonic vibration described in U.S. Pat. No. 3,485,634. In addition, as methods in which the sensitizing dyes are dissolved or dispersed followed by the addition to an emulsion, are employed those described in U.S. Pat. Nos. 3,482,981, 3,585,195, 3,469,987, 3,425,835, and 3,342,605; U.K. Patent Nos. 1,271,329, 1,038,029, and 1,121,174; and U.S. Pat. Nos. 3,660,101 and 3,658,546. These sensitizing dyes may be individually employed and may be employed in combination. The combination of sensitizing dyes is frequently employed specifically for the purpose of supersensitization. Combinations of dyes which exhibit useful supersensitization and compounds which exhibit supersensitization are described in Research Disclosure, Vol. 176, Item 17643 (published in December 1978) page 23 IV J part.

Into the light-sensitive material, various compounds can be incorporated in order to minimize fog during production process of the light-sensitive material, storage, or photographic processing, or to stabilize photographic properties; namely, many compounds, which are known as antifoggants or stabilizers, can be employed such as azoles, for example, benzothiazolium salts, nitroindazoles, nitrobenzimidazoles, chlorobenzimidazoles, bromobenzimidazoles, mercaptothiazoles, mercaptobenzothiazoles, mercaptobenzimidazoles, mercaptothiadiazoles, aminotriazoles, benzotriazoles, nitrobenzotriazoles, mercaptotetrazoles (particularly, 1-phenyl-5-mercaptotetrazole), etc.; mercaptopyrimidines, mercaptotriazines; thioketo compounds such as, for example, oxazolinethione; azaindenes, for example, triazaindenes, tetraazaindenes (particularly, 4-hydroxy substituted-1,3,3a,7-tetraazaindenes), pentaazaindenes; benzenethiosulfonic acid, benzenesulfinic acid, benzenesulfonic acid amide, potassium bromide, etc. Those particularly preferred are substituted or unsubstituted heterocycles or heterocondensed cycles containing any of N, O, S, and Se, and water-soluble halides.

Inorganic or organic hardeners may be incorporated into a photographic emulsion and nonlight-sensitive hydrophilic colloid. Hardeners include, for example, chromium salts (chrome alum, chromium acetate, etc.), aldehydes (formaldehyde, glyoxal, glutaraldehyde, etc.), N-methylol compounds (dimethylolurea, methyloldimethylhydantoin, etc.). dioxane derivatives (2,3-dihydroxydioxane, etc.), active vinyl compounds (1,3,5-triacryloyl-hexahydro-s-triazine, bis(vinylsulfonyl) methyl ether, N,N'-metylenebis-[β-(vinylsulfonyl)propionamide], etc.), active halogen compounds (2,4-dichloro-6-hydroxy-s-triazine, etc.), mucohalogenic acids (mucochloric acid, phenoxymucochloric acid, etc.), isoxazoles, dialdehyde starch, 2-chloro-6-hydroxytriadinylated gelatin, isocyanates, carboxyl group active hardeners, etc. These can be employed individually or in combination.

Into a light-sensitive emulsion layer and/or a nonlight-sensitive hydrophilic colloidal layer, may be incorporated various surface active agents known in the art for various purposes such as coating aid, static minimization, improvement in sliding property, emulsification and dispersion, adhesion minimization and improvement in photographic properties.

Gelatin is advantageously employed as a photographic emulsion binder or protective colloid. However, besides gelatin, hydrophilic colloids can be employed. For, example, gelatin derivatives, graft polymers of gelatin with other polymers, protein such as albumin, casein, etc.; cellulose derivatives such as hydroxy cellulose, carboxymethyl cellulose, cellulose sulfuric acid ester, etc.; sugar derivatives such as sodium alginate, starch derivatives, etc.; single or copolymer-like hydrophilic synthetic polymers such as polyvinyl alcohol, polyvinyl alcohol partial acetal, poly-N-vinylpyrrolidone, polyacrylic acid, polymethacrylic acid, polyacrylamide, polyvinyl imidazole, polyvinyl pyrazole, etc.

As gelatin, in addition to the lime-treated gelatin, acid-treated gelatin may be employed, and gelatin hydrolyzed products and gelatin enzyme decomposed products can be employed.

A photographic emulsion can be comprised of a dispersion of water-insoluble or hardly water-soluble synthetic polymer for the purpose of improvement in dimensional stability, minimization of silver sludge, etc. For example, employed can be, individually or in combination, alkyl acrylates, alkyl methacrylates, alkoxylacryl acrylates, alkoxylacryl methacrylates, glycidyl acrylate, glycidyl methacrylate, acrylic amide, methacrylic amide, vinyl esters (for example, vinyl acetate), acrylonitrile, oleffins, styrenes, etc., or polymers which are composed of monomer components prepared by combining these with acrylic acid, methacrylic acid, α, β-unsaturated dicarboxylic acids, hydroxyalkyl acrylates, hydroxyalkyl methacrylates, sulfoalkyl acrylates, sulfoalkyl methacrylates, styrene sulfonic acid, etc. Furthermore, monomers having a plurality of ethylenic unsaturated groups may be employed as a monomer component. These monomers may have water-soluble groups such as an hydroxyl group, a sulfone group, a carboxyl group, an amido group, and may have a primary, secondary, tertiary, or quaternary amine group, a phosphonium group, an aliphatic group, an aromatic group, -NR₆₁NR₆₂-R₆₃ (R₆₁, R₆₂, and R₆₃ may be different each other and each represents an optional group which links via a hydrogen atom, an aliphatic group, an aromatic group, a sulfinic acid residual group, a carbonyl group, an oxaryl group, a carbamoyl group, an amino group, a sulfonyl group, a sulfoxy group, an iminomethylene group, an alkenyl group, an alkynyl group, an aryl group, an alkoxy group, an alkenyloxy group, an alkynyloxy group, an aryloxy group, etc. a cation group, etc. These compounds may be synthesized employing ordinary synthesis methods and in addition to these methods, may be polymerized in the presence of water-soluble organic compounds such as gelatin, polyvinyl alcohols, etc. Furthermore, after the synthesis, shelling may be carried out employing gelatin or a silane coupling agent.

In the light-sensitive material, various other additives are employed. For example, are listed desensitizers, plasticizers, oils, colloidal silica, etc.

In the light-sensitive material, water soluble polymer, composite polymer, lubricant, latex, matting agent, oleophilic component are preferably added. More preferably combination of some component selected from water soluble polymer, composite polymer, lubricant, latex, matting agent, oleophilic component. Practical examples include a combination of water soluble polymer and lubricant, a combination of composite polymer and lubricant, a combination of water soluble polymer, composite polymer and lubricant.

The protective layer provided on the same side as the silver halide emulsion layer is a hydrophilic colloidal layer provided farther portion than the silver halide emulsion layer.

As these and the above-mentioned additives, can be employed those described in Research Disclosure No. 176 (previously cited) pages 22 to 31, etc.

In the light-sensitive material, photographic constituting layers are coated onto a surface or both surfaces of a flexible support generally employed in light-sensitive materials. Useful flexible supports include films (may comprise colored dyes) composed of synthetic polymers such as cellulose acetate, cellulose acetate-butyrate, polystyrene, polyethylene terephthalate, polyethylene terenaphthalate, or paper supports which are coated with polymers such as polyethylene, polyethylene terephthalate, etc. These supports may have a magnetic recording layer, an antistatic layer, and a peeling layer.

Developing agents include dihydroxybenzenes (for example, hydroquinone, chlorohydroquinone, bromohydroquinone, 2,3-dichlorohydroquinone, methylhydroquinone, isopropylhydroquinone, 2,5-dimethylhydroquinone, etc.), 3-pyrazolidones (for example, 1-phenyl-3-pyrazolidone, 1-phenyl-4-metyl-3-pyrazolidone, 1-phenyl-4,4-dimethyl-3-pyrazolidone, 1-phenyl-4-ethyl-3-pyrazolidone, 1-phenyl-5-methyl-3-pyrazolidone, etc.), aminophenols (for example, o-aminophenol, p-aminophenol, N-methyl-o-aminophenol, N-methyl-p-aminophenol, 2,4-diaminophenol, etc.), pyrogallol, ascorbic acid, 1-aryl-3-pyrazolines (for example, 1-(p-hydroxyphenyl)-3-aminopyrazoline, 1-(p-methylaminophenyl)-3-aminopyrazoline, 1-(p-aminophenyl)-3-aminopyrazoline, 1-(p-amino-N-methylphenyl)-3-aminopyrazoline, etc.), transition metal complexes (complexes of transition metals such as Ti, V, Cr, Mn, Fe, Co, Ni, Cu etc. in order to employ these as a developer, these may form a structure having a reducing power, for example, forming a complex of Ti³⁺, V²⁺, Cr²⁺, Fe²⁺, etc., and ligands include aminopolycaroxylic acids and the salts thereof such as ethylenediaminetetraascetic acid (EDTA), diethylenetriaminepenatacetic acid (DTPA), etc., phosphoric acids and the salts thereof such as hexametapolyphosphoric acids, tetrapolyphosphoric acids, etc.), etc. These can be employed individually or in combination. It is preferred to employ in combinations such as 3-pyrazolidones with dihydroxybenzenes, aminophenols with dihydroxybenzenes, 3-pyrazolidones with ascorbic acid, aminophenols with ascorbic acid, 3-pyrazolidones with transition metal complexes, aminophenols with transition metal complexes. Furthermore, the developing agent is preferably employed generally in an amount of 0.01 to 1.4 moles/liter.

Silver sludge minimizing agents include compounds described in Japanese Patent Publication No. 62-4702, Japanese Patent Publication Open to Public Inspection Nos. 3-51844, 4-26838, 4-362942, 1-319031, and 7-13303.

Furthermore, a developer waste can be regenerated upon running electricity. Specifically, a cathode (for example, an electrical conductor such as stainless steal wool, or a semiconductor) is put in the developer waste and an anode (for example, insoluble electrical conductor such as carbon, gold, platinum, titanium, etc.) is put in an electrolyte solution and the developer waste tank and the electrolyte solution tank are in contact with each other via an anion exchange membrane. Generation is then carried out upon running electricity on both electrodes. During running electricity, the light-sensitive material can also be processed. During that time, various additives added to the developer, for example, preservatives, alkali agents, pH buffering agents, sensitizers, antifoggants, silver sludge minimizing agents, etc, which can be added to the developer can be additionally added. When the developer is employed upon regeneration, as the employed developing agent, transition metal complexes are preferred.

Sulfite salts and metabisulfite salts employed as preservatives include sodium sulfite, potassium sulfite, ammonium sulfite, sodium metabisulfite, etc. The added amount of sulfite salts is preferably not less than 0.25 mole/liter and most preferably not less than 0.4 mole/liter.

Into a developer, if desired, can be incorporated alkali agents (sodium hydroxide, potassium hydroxide, etc.), pH buffering agents (for example, carbonates, phosphates, borates, boric acid, acetic acid, citric acid, alkanolamines, etc.), sensitizers (for example, polyethylene glycols, the esters thereof, alkanolamines, etc.), coating aids (for example, nonionic surface active agents containing polyoxyethylenes, quaternary ammonium compounds, etc.), surface active agents, antifoaming agents, antifoggants (for example, halides such as potassium bromide and sodium bromide, nitrobenzindazole, nitrobenzimidazole, benzotriazole, benzothiazole, terazoles, thiazoles, etc.), chelating agents (for example, ethylenediaminetetraacetic acid or the alkali metal salts thereof, nitrilotriacetates, polyphosphates, etc.), development accelerators (for example, compounds described in U.S. Pat. No. 2,304,025 and Japanese Patent Publication No. 47-45541), hardeners (for example, glutaraldehyde or the bisulfite addition products, etc.). The pH is preferably adjusted between 8 and 12, and more preferably between 9 and 11.

In the processing method of the silver halide light-sensitive photographic material, can be employed developer substantially containing no hydroquinones (for example, hydroquinone, chlorohydroquinone, bromohydroquinone, methylhydroquinone, hydroquinone monosulfonate, etc.). "Substantially containing no hydroquinones" denotes the amount of not more than 0.01 mole per liter of the developer.

In this case, the compound represented by general formula (21) shown below is preferably contained.

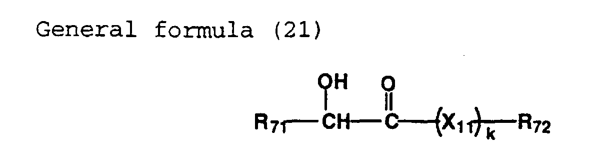

In the above-mentioned general formula (21), R₇₁ and R₇₂ each independently represents a substituted or unsubstituted alkyl group, a substituted or unsubstituted alkoxy group, a substituted or unsubstituted alkylthio group, and R₇₁ and R₇₂ may link with each other to complete a ring. K represents 0 or 1, and when k is 1, K₁₁ represents -CO- or -CS-.

Of the compounds represented by the general formula (21), the general formula (21-a) shown below are preferred in which R₇₁ and R₇₂ link with each other to complete a ring. 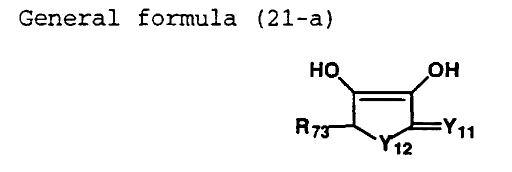 wherein R₇₃ represents a hydrogen atom, a substituted or unsubstituted alkyl group, a substituted or unsubstituted aryl group, a substituted or unsubstituted amino group, a substituted or unsubstituted alkoxy group, a sulfone group, a carboxyl group, an amido group, a sulfonamido group; Y₁₁ represents O or S; and Y₁₂ represents O, S, or NR₇₄. R₇₄ represents a substituted or unsubstituted alkyl group and a substituted or unsubstituted aryl group.

As the alkyl group in the general formula (21) or (21-a), a lower alkyl group is preferred, for example, an alkyl group having from 1 to 5 carbon atoms; as the amino group, an unsubstituted or an amino group substituted with a lower alkyl group is preferred; as the alkoxy group, a lower alkoxy group is preferred; the aryl group is preferably a phenyl group, a naphthyl group, etc.; and these groups may have a substituent; as the preferred substituents, are listed a hydroxyl group, a halogen atom, an alxoxy group, a sulfo group, a carboxyl group, an amido group, a sulfonamido group, etc.

Specific examples of the compounds represented by the above-mentioned general formula (21) or (21-a) are shown below.

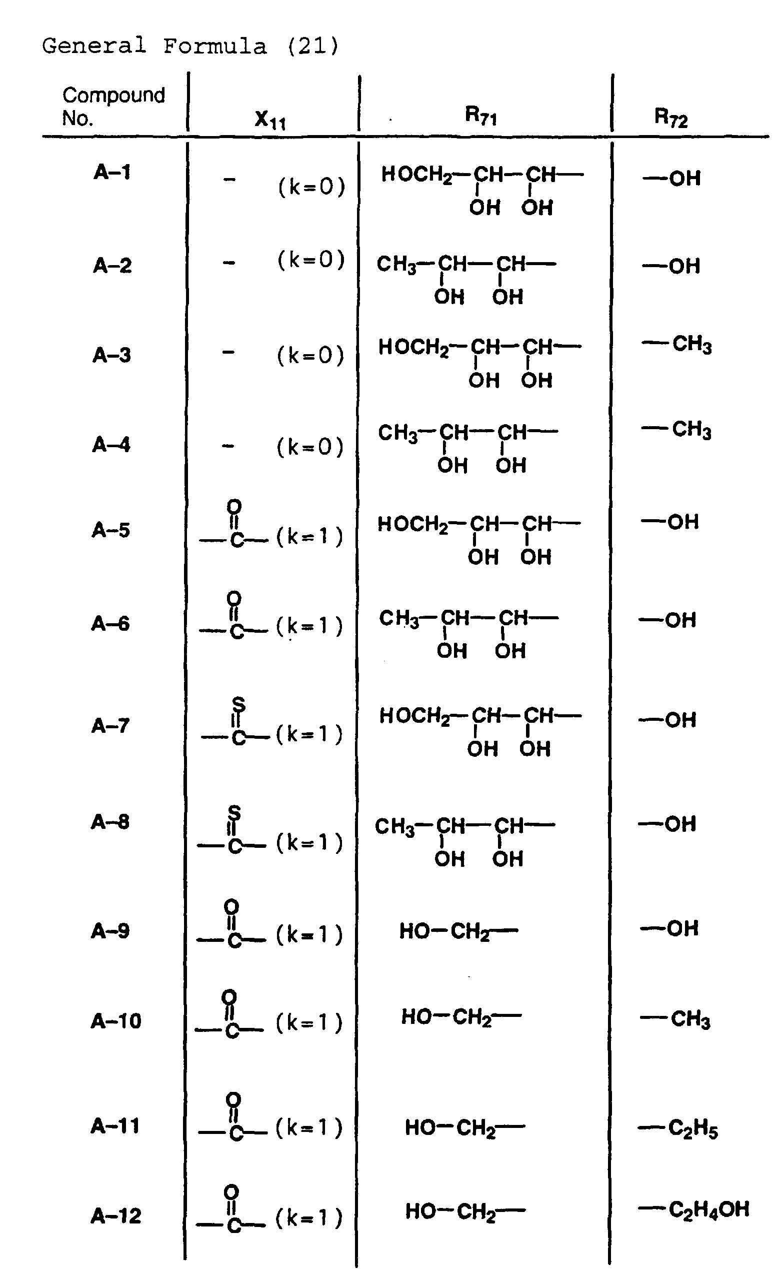

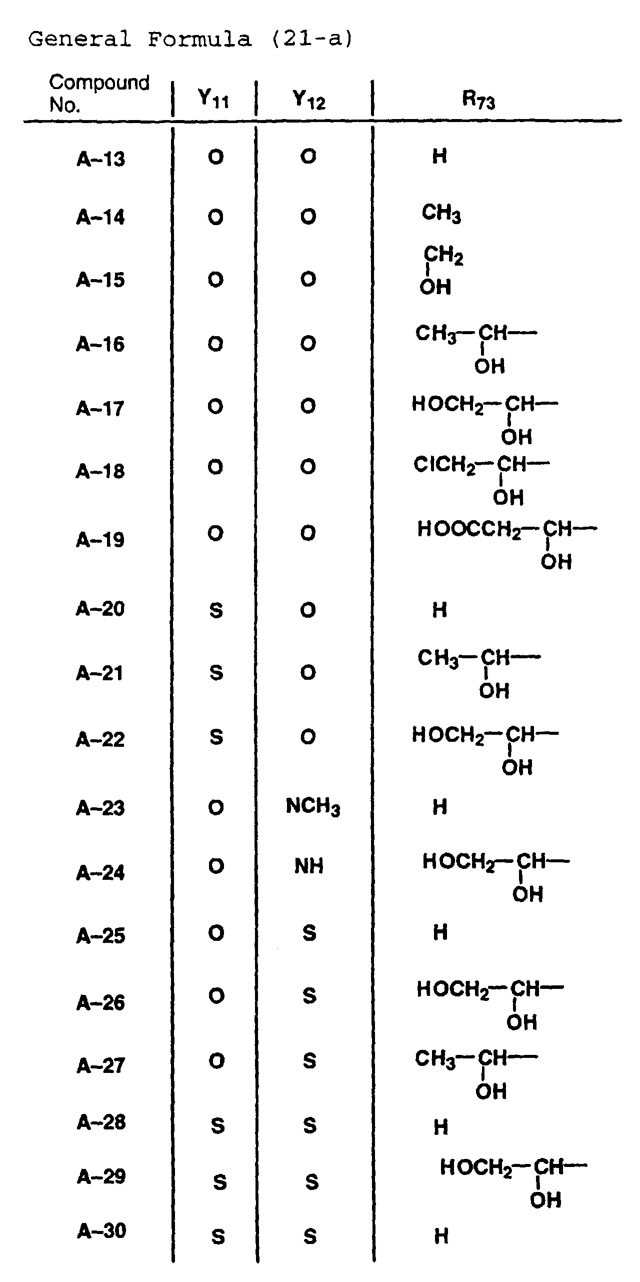

The representative compounds are ascorbic acid or erythorbic acid or derivatives derived from these. These are readily commercially available or are readily synthesized according to the method known in the art.

The developing agent composed of the transition metal complex can be employed in combination with a developing agent such as 3-pyrazolidones (for example, 1-phenyl-3-pyrazolidone, 1-phenyl-4-methyl-3-pyrazolidone, 1-phenyl-4,4-dimethyl-3-pyrazolidone, 1-phenyl-4-ethyl-3-pyrazolidone, 1-phenyl-5-methyl-3-pyrazolidone, etc.), aminophenols (for example, o-aminophenol, p-aminophenol, N-methyl-o-aminophenol, N-methyl-p-aminophenol, 2,4-diaminophenol, etc.). When employed in combination, the added amount of 3-pyrazolidones or aminophenols is preferably between 0.01 and 1.4 moles per liter of an ordinary developer.

As a particular type of development process of the light-sensitive material, the process employing an activator processing solution may be carried out in such a manner that a developing agent is incorporated into a light-sensitive material, for example, into the emulsion layer, and the resulting material is subjected to development upon being processed in an aqueous alkali solution. Such a development process is combined with a silver salt stabilization process employing thiocyanate and can be frequently employed as one of quick processing methods of a light-sensitive material. It is possible to apply to such a processing solution. In such a quick process, excellent advantages of the in are specifically exhibited.

As a fixer, one which is composed of generally used composition can be employed. The fixer is an aqueous solution generally composed of a fixing agent and others and the pH is generally between 3.8 and 5.8. As fixing agents can be employed thiosulfates such s potassium thiosulfate, ammonium thiosulfate, etc.; thiocyanates such as sodium thiocyanate, potassium thiocyanate, ammonium thiocyanate, etc.; and in addition, those known as fixing agents which are organic sulfur-containing compounds capable of forming water-soluble stable silver complex.

To the fixer, can be added water soluble aluminum salts, for example, aluminum chloride, aluminum sulfate, potassium alum, etc. which work as a hardener.

Into the fixer, if desired, can be incorporated a preservative (for example, sulfite, bisulfite, etc.), a pH buffering agent (for example, acetic acid,), a pH adjusting agent (for example, sulfuric acid), a chelating agent showing water softening capability, etc.

In the photographic processing, water washing is carried out after fixing. A system may be employed in which fresh water of a few liters per minute is supplied to a water washing tank in accordance with processing. Systems are employed in which washing water is circulated and is treated with chemicals, filters, ozone, light, etc. and reused, or as a water washing bath, a stabilization bath comprising stabilizing agents is employed and is replenished with a small amount of stabilizing replenisher in accordance with a processed volume. These processes are carried out at the normal temperature, but may be carried out at a temperature of 30 to 50 °C upon heating. Furthermore, when the stabilization bath is employed, processing can be carried out without employing pipe arrangement directly connected to city water. Furthermore, before or after each processing tank, a rinse bath can be arranged.

As mother solutions or replenishers of a developer and a fixer, those are generally supplied which are working solutions or are prepared by diluting the concentrated solution just prior to usage. The mother solution or concentrated solution may be stored in the form of the working solution, concentrated solution, viscous liquid in a semi-kneading state. Alternatively, a method may be employed in which a single component chemical or mixed chemicals in a solid state are dissolved when employed. When mixed chemicals are employed, methods may be employed in which components which hardly react with each other are in contact with each other and packaged in a layer form and are subjected to vacuum packing and are dissolved upon unpacking when employed, or chemicals are shaped into tablets. Particularly, the method in which chemicals are shaped into tablets are put in dissolving tanks or directly in processing tanks is most preferably employed because the method is markedly excellent in easy work, room saving, and preservability.

When the development is carried out, the development temperature may be set at the ordinary temperature range of 20 to 50 °.

The black-and-white light-sensitive material is preferably processed employing an automatic processor. At the time, the processing is carried out, while the definite amount of a developer and a fixer, proportional to the area of the light-sensitive material, is being replenished. The replenishment rates of the developer and fixer are preferably not more than 300 ml per m² to reduce the volume of solution wastes, and more preferably between 75 and 200 ml per m².

In order to meet the required decrease in development time, when processed employing an automatic processor, the total processing time (Dry to Dry time) from the time when the leading edge of a film is inserted in an automatic processor to the time when the edge comes out from the drying zone is preferably between 10 and 60 seconds. The total processing time as described herein denotes the total time consumed in each process, specifically, the total times for development, fixing, bleaching, washing, stabilization process, drying, etc., which are required for processing, that is, Dry to Dry time.

Furthermore, in the drying zone of the automatic processor, generally, a drying system using warm blown air is employed. In addition, included are those which have a drying zone employing a heat transfer body of not less than 90 °C (for example, a roller heated at 90 to 130 °C, etc.); a radiation body of not less than 150 °C (with an electric current directly applied, for example, to tungsten, carbon, nichrome, a mixture of zirconium oxide, yttrium oxide, thorium oxide, silicon carbide, etc. to be heated and radiated, or from a resistance exothermic body, heat energy is transmitted to a radiator constituted of copper, stainless steel, nickel, or various ceramics to radiate infrared rays upon generating heat), or those equipped with any of the several drying means known in the art, such as a dehumidifier, a microwave generator, water absorptive resins, etc. Furthermore, control mechanism of a dry state may be arranged as described in Japanese Patent Publication Open to Public Inspection Nos. 1-315745 and 2-108051.

In the image forming method, by processing the silver halide light-sensitive photographic material employing a developer having a pH of 9.5 to 13, a high contrast image having a gamma of 6 to 30 is preferably formed. When processed at a pH of not more than 9.5, no high contrast image can be formed and as a result, in the fine and accurate so-called FM screening system, particularly, the resulting image is not preferred due to it having no commercial availability. Furthermore, when processed at a pH of not lower than 13, the resulting image is not acceptable due to an increase in degradation of fog and black spots. When processed at a pH of not more than 6, no high contrast image is obtained, and in the fine and accurate so-called FM screening system, the resulting image is not preferred due to it having no commercial viability. Furthermore, when the gamma is not less than 30, the resulting image is not acceptable because it is not commercially viable due to the large deviation from the linearity between the exposure amount and the image density.

The embodiment of the invention is described below.

In a silver halide light-sensitive photographic material comprising at least one silver halide light-sensitive emulsion layer and at least one hydrophilic colloidal layer, the silver halide light-sensitive photographic material characterized by comprising at least one of the compounds represented by general formula (1) or (2) described below and at least one lubricant, 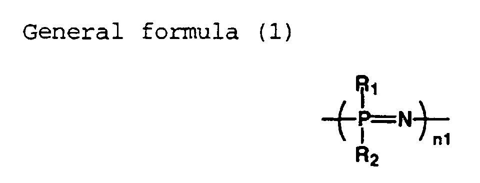 wherein R₁ and R₂ each represents an alkyl group, an alkoxy group, an aryloxy group, an aryl group, an isothiocyanate group, an amino group, an alkylthio group, an arylthio group, an azide group, or derivatives thereof, and R₁ and R₂ are the same or different; n₁ represent a positive integer of 1 or more and when n₁ is plural, R₁ and R₂ may be the same or different, 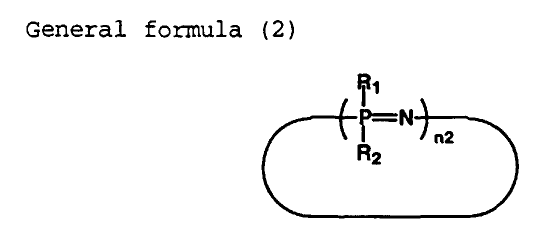 wherein R₁ and R₂ each represents the same group represented by R₁ and R₂ in the above-mentioned general formula (1), and R₁ and R₂ may be the same or different; n₂ represents a positive integer of 3 or more and when n₂ is plural, R₁ and R₂ may be the same or different.

In a silver halide light-sensitive photographic material comprising at least one silver halide light-sensitive emulsion layer and at least one hydrophilic colloidal layer, the silver halide light-sensitive photographic material characterized by comprising at least one of compounds represented by the above-mentioned general formula (1) or (2) and at least one water-soluble polymer.

In a silver halide light-sensitive photographic material comprising at least one silver halide light-sensitive emulsion layer and at least one hydrophilic colloidal layer, the silver halide light-sensitive photographic material characterized by comprising at least one of the compounds represented by the above-mentioned general formula (1) or (2) and at least one latex.

In a silver halide light-sensitive photographic material comprising at least one silver halide light-sensitive emulsion layer and at least one hydrophilic colloidal layer, the silver halide light-sensitive photographic material characterized by comprising at least one of compounds represented by the above-mentioned general formula (1) or (2) and at least one lipophilic component.

In a silver halide light-sensitive photographic material comprising at least one silver halide light-sensitive emulsion layer and at least one hydrophilic colloidal layer, the silver halide light-sensitive photographic material characterized by comprising at least one of the compounds represented by the above-mentioned general formula (1) or (2) and at least one matting agent.

In a silver halide light-sensitive photographic material comprising at least one silver halide light-sensitive emulsion layer and at least one hydrophilic colloidal layer, the silver halide light-sensitive photographic material characterized by comprising at least one of the compounds represented by the above-mentioned general formula (1) or (2) and a total coated gelatin amount of not more than 3.7 g/m² on the silver halide emulsion layer side in respect to the support.

In a silver halide light-sensitive photographic material comprising at least one silver halide light-sensitive emulsion layer and at least one hydrophilic colloidal layer, the silver halide light-sensitive photographic material characterized by comprising at least one of the compounds represented by the above-mentioned general formula (1) or (2) and in that the pH of a coating composition comprising a compound represented by the above-mentioned general formula (1) or (2) is not less than 4.0.

In a silver halide light-sensitive photographic material comprising at least one silver halide light-sensitive emulsion layer and at least one hydrophilic colloidal layer, the silver halide light-sensitive photographic material characterized by comprising at least one of the compounds represented by the above-mentioned general formula (1) or (2) and at least one composite polymer.

A silver halide light-sensitive photographic material characterized by comprising an contrast increasing amount of a hydrazine derivative in at least one layer selected from the above-mentioned silver halide emulsion layer and a hydrophilic colloidal layer adjacent to the emulsion layer.

An image forming method of a silver halide light-sensitive photographic material characterized by forming a high contrast image with a gamma of 6 to 30 by processing the silver halide light-sensitive photographic material mentioned above, employing a developer having a pH of 9.5 to 13.

### EXAMPLES

The invention is explained in detail with reference to examples below.

### Example 1

A subbed polyethylene terephthalate film was subjected to corona discharging with energy of 6 W/m²·minute. Thereafter, an antistatic liquid composed of the composition described below was coated onto the film at a speed of 70 m/minute employing a roll fit coating pan and an air knife so that the coated amount described below was obtained.

### (Preparation of a Support Having an Electrical Conductive Layer)

A subbed 100 µm polyethylene terephthalate film was subjected to corona discharging. Thereafter, an antistatic liquid with the composition described below was coated onto the film at a speed of 70 m/minute employing a roll fit coating pan and an air knife so that the coated amount described below was obtained.

| | |
|---|---|
| Water-soluble electrically conductive polymer P-56 | 0.6 g/m² |
| Hydrophobic polymer particles L-50 | 0.4 g/m² |
| Polyethylene oxide compound Ao-1 | 0.06 g/m² |
| Hardener E-8 | 0.2 g/m² |

The resulting coating was dried at 90 °C for 2 minutes and thermally treated at 140 °C for 90 seconds. A sample was prepared by coating this electrically conductive layer onto a surface of the support.

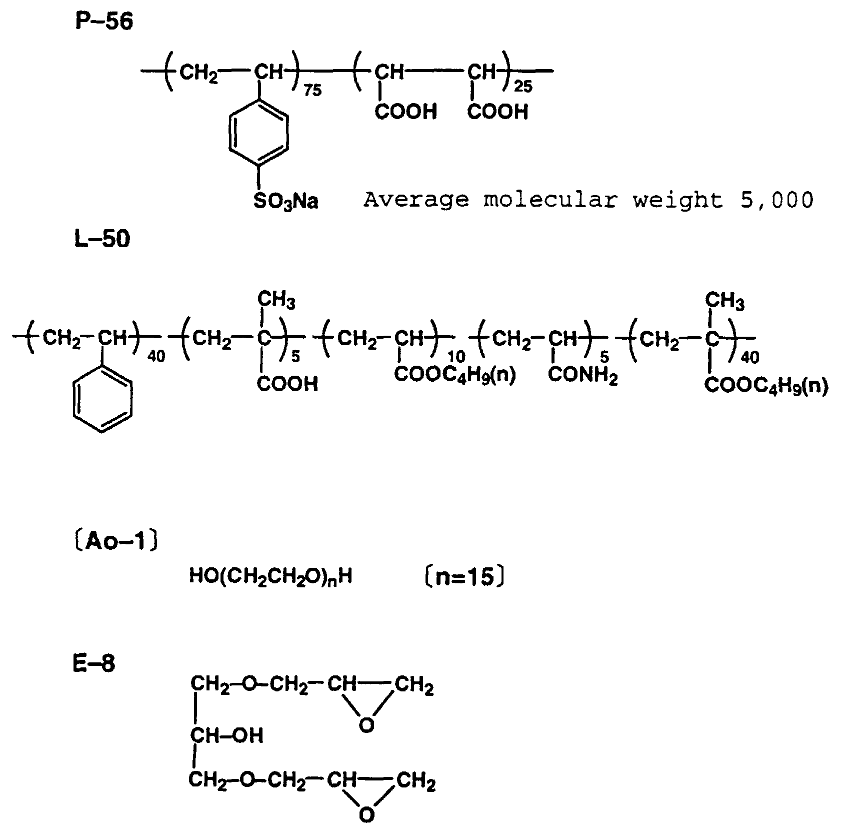

### (Preparation of Silver Halide Emulsion)

A silver chloroiodobromide emulsion (silver chloride 62 mole percent, silver iodide 0.5 mole percent, and silver bromide for the remaining mole percent) was prepared employing a double jet method.

Further, during the mixing process from the time when 5 percent of grains reached the desired average grain diameter to the time when all the grains reached the desired grain diameter, 8 × 10⁻⁸ mole of potassium hexabromorhodiate and 8 × 10⁻⁷ mole of potassium hexachloroiridate were added per mole of silver.

The resulting emulsion was subjected to salt removal employing gelatin modified with phenyl isocyanate and an ordinary flocculation method, followed by being dispersed into a gelatin solution. Thereafter, antiseptics (A), (B), and (C), described below were added and an emulsion comprised of monodisperse cubic grains (variation coefficient 10 percent) was prepared.

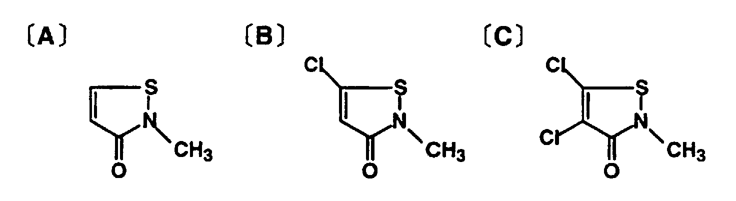

After citric acid, sodium chloride, and 1-phenyl-5-mercaptotetrazole were added to this emulsion, chloroauric acid and sodium thiosulfate were also added. The resulting emulsion underwent chemical ripening at 60 °C. After reaching maximum sensitivity, ripening was terminated by adding 1 g of 4-hydroxy-6-methyl-1,3,3a,7-tatraazaindene per mole of silver. Thereafter, 600 mg of potassium bromide and 150 of a sensitizing dye SD-1, having the structure described below were added per mole of silver halide.

### (Preparation of Emulsion Layer Coating Composition)

To this emulsion, were added, per mole of silver halide, 4 g of hydroquinone, 15 g of exemplified polymer latex L-1 having the structure described below, 150 mg of retarder STB-1, 2 g of a styrene-maleic acid copolymer, an aqueous 1N sodium hydroxide solution, 1.5 g of S-1 having the structure shown below, and saponin as a coating aid, sodium 2,4-dichloro-6-hydroxy-1,3,5-triazine sodium salt.

### (Preparation of Emulsion Protective Layer Coating Composition)

Per m², to an aqueous solution containing 1.1 g of gelatin, were added 1 mg of a sodium bisulfite formalin addition product, 5.5 mg of 1-phenyl-4-hydroxymethyl-3-pyrazolidone, 15 mg of each of monodisperse silicas with an average grain diameter of 3 µm and 8 µm, S-2 having the structure shown below as a coating aid, and citric acid, and further, formalin as a hardener. In addition, fluorine series surface active agent FA-3 was added so as to yield the coated amount of 3 × 10⁻⁶ mole/m².

### (Preparation of Backing Layer Coating Composition)

Per m², to an aqueous solution containing 2.3 g of gelatin, were added and stirred 100 mg of water-soluble dye III-1, 25 mg of water-soluble dye III-2, and 100 mg of water-soluble dye III-3 shown below, 350 mg of polymer latex P-1, 60 mg of a styrene-maleic acid copolymer, 150 mg of colloidal silica, mixture of (A), (B), and (C), sodium dodecylbenzenesulfonate as a coating aid, glyoxal as a hardener, and 55 mg of E-2.

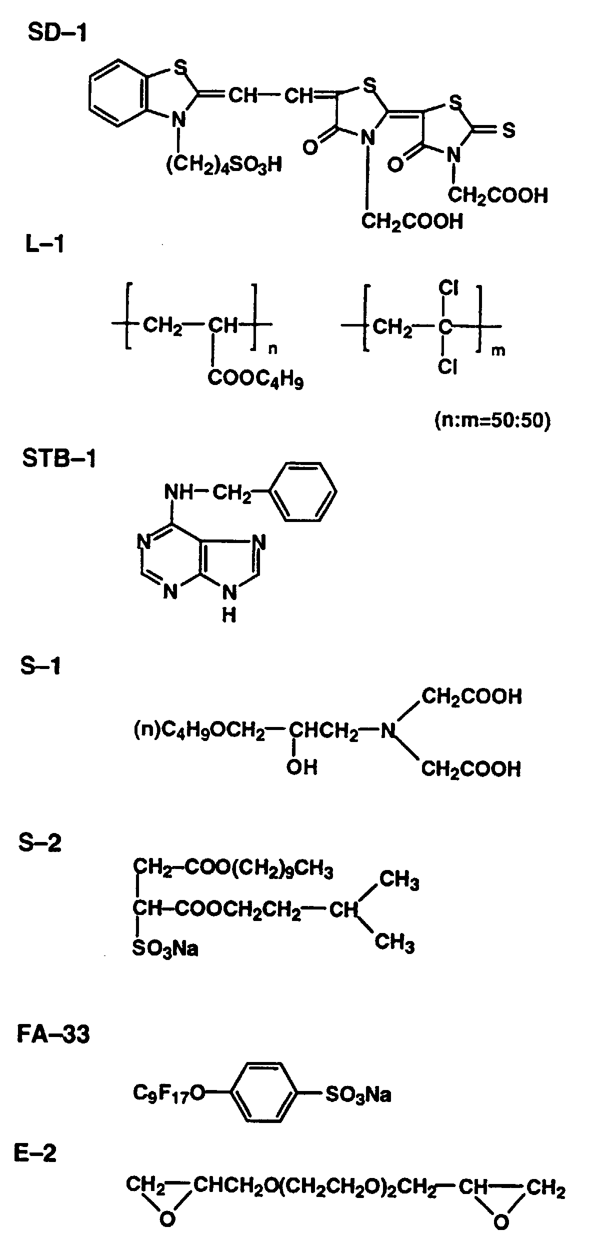

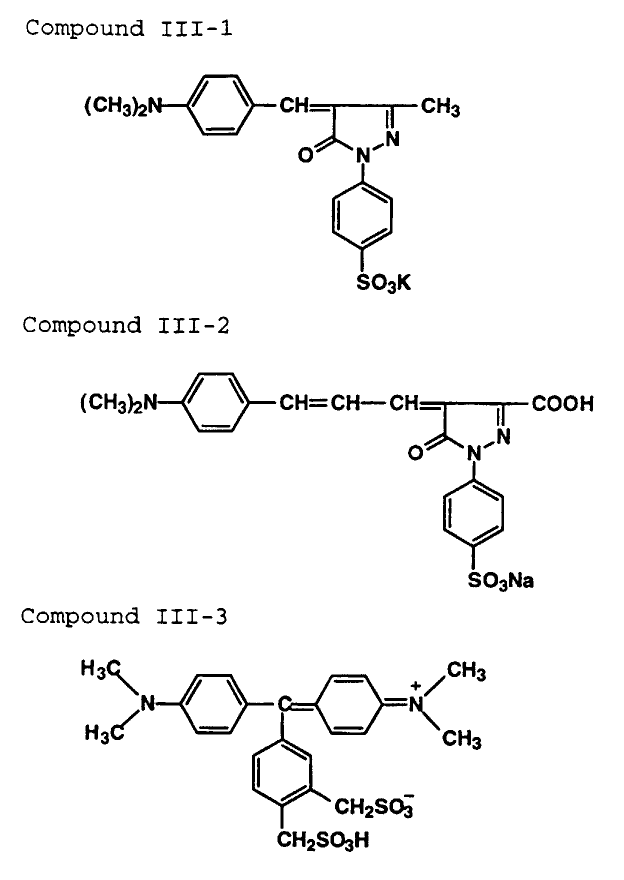

### (Preparation of Backing Layer Protective Layer Coating Composition)

Per m², to an aqueous solution containing 0.7 g of gelatin, are added and stirred 7 mg of S-2, a monodisperse polymethyl methacrylate dispersion with an average diameter of 5.5 µm, a mixture of (A), (B), and (C), a styrene-maleic acid copolymer, and further, glyoxal and 2,4-dichloro-6-hydroxy-1,3,5-triazine sodium salt serving as hardeners.

### (Preparation of Samples)

One surface of a polyethylene terephthalate film support having the above-mentioned antistatic layer was subjected to corona discharging with energy of 15 W/m²·minute. Thereafter, onto the surface of the above-mentioned antistatic layer, the backing layer coating composition and backing layer protective layer prepared as described above were applied. Furthermore, after one surface of the support was subjected to corona discharging with energy of 15 W/m²·minute, an emulsion layer and an emulsion layer protective layer coating composition were applied. The pH of the coating composition was 4.5. Further, the emulsion layer and emulsion layer protective layer were coated and dried so that the silver amount was 4.0 g/m², the gelatin amount of emulsion layer was 1.7 g/m², and gelatin amount of protective layer was 1.1 g/m², and light-sensitive Material·Sample 101 was thus prepared. The total gelatin amount on the support of the side of silver halide emulsion layer and hydrophillic colloidal gelatin layer was consequently 2.8 g/m². Subsequently, Samples 102 through 116 were prepared in the same manner as Sample 101, except that variations were made as shown in Table 1.

Subsequently, photographic processing was carried out by an automatic plate-making processor GQ·26SR (manufactured by Konica Corp.) employing a developer and a fixer under conditions described below.

### (Developer Formula)

| | |
|---|---|
| Disodium ethylenediaminetetraacetate | 2 g |
| Diethylene glycol | 25 g |
| Potassium sulfite (55% W/V aqueous solution) | 114 ml |
| Potassium carbonate | 55 g |
| Hydroquinone | 20 g |
| 5-Methylbenzotriazole | 300 mg |
| 8-Mercaptoadenine | 1.0 × 10⁻³ mole |
| Potassium hydroxide | amount to adjust pH of working solution to 10.5 |
| Potassium bromide | 3.3 g |
| 1-Phenyl-3-pyrazolidone | 750 mg |

These were dissolved in deionized water to make 1 liter and employed.

### (Fixer Formula)

| (Composition A) | |
|---|---|
| Ammonium thiosulfate (aqueous 72.5% W/V solution) | 230 ml |
| Sodium sulfite | 9.5 g |
| Sodium acetate trihydrate | 28 g |
| Boric acid | 6.7 g |
| Sodium citrate dihydrate | 2 g |
| Acetic acid Deionized water | amount to adjust the pH of a working solution to 17 ml |

| (90% W/W aqueous solution) | |
|---|---|
| Deionized water | 17 ml |
| Sulfuric acid (aqueous 50% W/W solution) | 2.5 g |
| Aluminum sulfate (aqueous 8.1% W/W solution in terms of weight of Al₂O₃) | 21 g |

When a fixer was employed, the above-mentioned Compositions A and B were dissolved in 500 ml of water in this order to make 1 liter and employed.

### (Photographic Processing Conditions)

| Process | Temperature | Time |
|---|---|---|
| Development | 38 °C | 12 seconds |
| Fixing | 35 °C | 10 seconds |
| Water washing | Normal temperature | 10 seconds |
| Drying | 50 °C | 13 seconds |
| Total | | 45 seconds |

The time of each process includes a so-called crossing transport time to the next process.

### 〈Evaluation Method〉

### 〈Evaluation on Silver Sludge (referred to as silver staining, development staining)〉

As a developer replenisher and a fixer replenisher, employed were those which had the same composition as the developer and the fixer, respectively. While replenishing 160 cc/m² for development and 190 cc/m² for fixing, 30 m² of Sample were processed (Running-1). In order to evaluate silver staining after processing, 3.5 × 12 cm of an unexposed piece of film was processed and staining on the film surface was visually evaluated. Regarding evaluation on development staining, 5-rank evaluation was carried out; the worst staining was ranked to be 1 and no staining was ranked to be 5. A product evaluated at Rank 2 or 1 is not commercially viable.

### 〈Sensitivity (Development Rate)〉

Each Sample was subjected to exposure for 10⁻⁶ second employing a He-Ne laser and photographic processing under the above-mentioned conditions. The resulting sensitivity was expressed in terms of relative sensitivity.

### 〈Maximum Density〉

The maximum density part of a processed Sample was measured employing PDA-65 (Konica Digital Densitometer).

### 〈Fog〉

The unexposed part of a processed Sample was measured employing a PDA-65 (Konica Digital Densitometer).

### 〈Dot Quality〉

Halftone dots were formed employing SG-747RU and visually evaluated. The resulting dots were classified into five ranks, 5, 4, 3, 2, and 1 in quality order. Rank 1 and 2 are not acceptable in terms of commercial viability.

### 〈Abrasion〉

The moisture content of each Sample was regulated for 60 minutes at 23 °C and 48% relative humidity. Thereafter, prior to processing, a 3.5 × 30 cm nylon mesh cleaning pad was placed on the resulting Sample at a load of 300 g applied to a 2 × 2 cm area, and the Sample was rubbed at a speed of 30 cm per second. The rubbed Sample was then subjected to the same processing as described above and abrasion was visually evaluated according to the standards described below.
- 5:: no abrasion found
- 4:: slight abrasion blackening found
- 3:: though overall density is low, abrasion blackening was found; being at the lowest limit for commercial viability
- 2:: black density was fairly high, and overall abrasion blackening found; and if introduced onto the market, complaints will result
- 1:: no commercial viability

Tables 1 and 2 show the above results.

**Table 1**

| Light-Sensitive Sample No | Phosphazene Derivative | | Addition Position | Additive | |
|---|---|---|---|---|---|
| | Compound Type | Added Amount mg/m² | | Additive Type | Added Amount |
| 101 | | 0 | Added to Emulsion Protective Layer | | |
| 102 | C-61 | 10 | Added to Emulsion Protective Layer | Lubricant Ls-21 | 30mg/m² |
| 103 | C-61 | 50 | Added to Emulsion Protective Layer | Lubricant Ls-21 | 30mg/m² |
| 104 | C-61 | 100 | Added to Emulsion Protective Layer | Lubricant Ls-21 | 30mg/m² |
| 105 | C-61 | 50 | Added to Emulsion Protective Layer | Water-soluble Polymer: Dextran MW = 40,000 | 300mg/m² |
| 106 | C-61 | 50 | Added to Emulsion Layer | Water-soluble Polymer: Dextran MW = 10,000 | 300mg/m² |
| 107 | C-61 | 50 | Added to Emulsion Layer | Latex instead of L-1: L-5 | 500mg/m² |
| 108 | C-61 | 50 | Added to Emulsion Layer | Oleophilic Component: di-n-octyl phthalate | 750mg/m² |
| 109 | C-61 | 50 | Added to Emulsion Protective Layer | Polymethyl methacrylate* instead of Silica | 25mg/m² |
| 110 | C-61 | 50 | Added to Emulsion Protective Layer | Gelatin Amount: Pro = 2, Em = 1.8 | |
| 111 | C-61 | 50 | Added to Emulsion Protective Layer | Gelatin Amount: Pro = 1.7, Em = 1.4 | |
| 112 | C-40 | 50 | Added to Emulsion Protective Layer | Gelatin Amount: Pro = 0.5, Em = 1.0 | |
| 113 | C-40 | 50 | Added to Emulsion Layer | pH of Emulsion Layer Coating Composition: 6.5 | |
| 114 | C-40 | 50 | Added to Emulsion Layer | pH of Emulsion Layer Coating Composition: 5.2 | |
| 115 | C-40 | 50 | Added to Emulsion Layer | Emulsion Layer: Composite Polymer PL-10 | 750mg/m² |
| 116 | C-40 | 50 | Added to Emulsion Layer | Emulsion Layer: Composite Polymer PL-15 | 750mg/m² |

| | | | | | |
|---|---|---|---|---|---|
| *: with a grain diameter of 3 µm | | | | | |

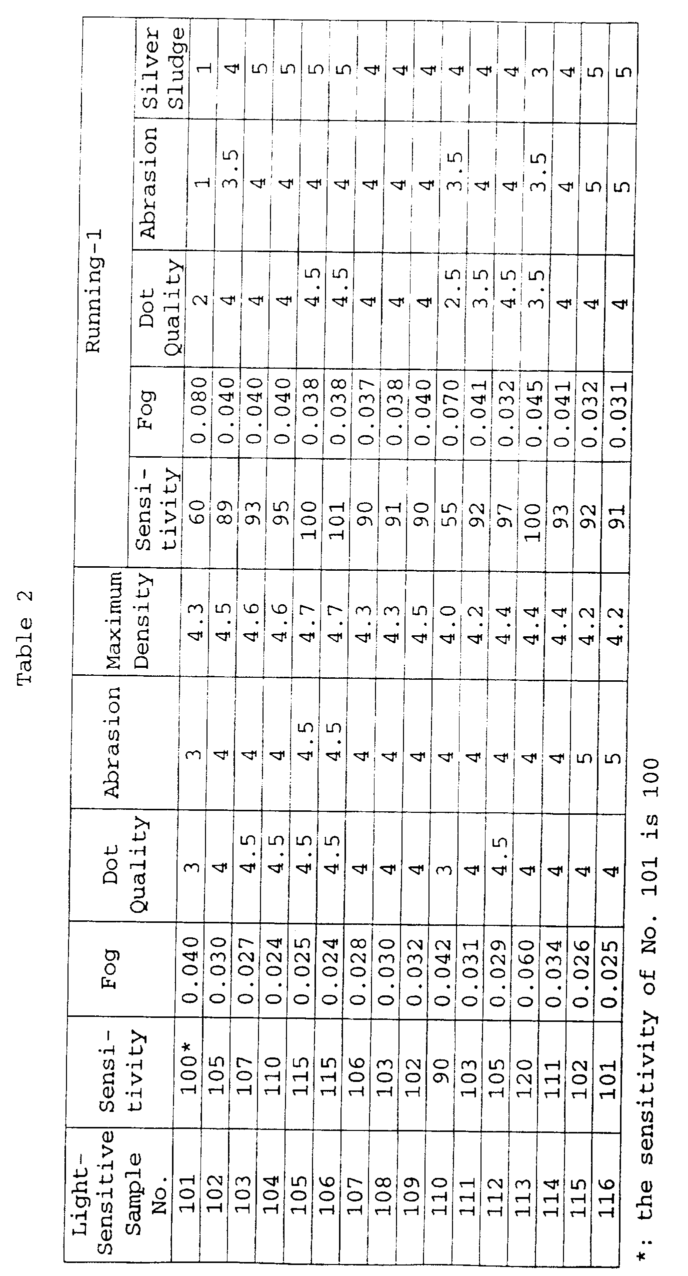

As can clearly be seen in Tables 1 and 2, Samples of the invention exhibit excellent abrasion resistance, and minimum degradation of dot quality, abrasion resistance, and silver sludge minimization during running processing.

Further, all the Samples of the exhibited gamma of not less than 15.

### Example 2

### 〈Preparation of Sample Containing a Compound Represented by General Formula (T)〉

A monodisperse cubic silver chlorobromide grain emulsion with an average grain diameter of 0.15 µm, which was composed of 98 mole percent of silver chloride and 2 mole percent of silver bromide, was prepared employing a double jet-method. At mixing, 7 × 10⁻⁵ mole of K₃Rh(H₂O)Br₅ was added per mole of silver. Furthermore, prior to salt removal process, in which water-soluble salts were removed employing a conventional method, 0.6 g of 4-hydroxy-6-methyl-1,3,3a,7-tetraazaindene (TAI) was added per mole of silver (hereinafter, the addition amount is per mole of silver, unless otherwise specified).

The resulting emulsion was heated to 60 °C, and was added with 60 mg of TAI and 0.75 mg of sodium thiosulfate; 60 minutes after the TAI addition, was, further, added with 600 mg of TAI, and was chilled to set.

Subsequently, additives were added so that the amounts per m² became those shown below and a coating composition was prepared.

### 〈Emulsion Layer Coating Composition〉 (pH of the coating composition was adjusted to 4.2)

| | |
|---|---|
| 10% gelatin solution | 5.26 ml/m² |
| 0.5N NaOH solution | 4.39 ml/m² |
| Compound b | 6.53 mg/m² |
| Compound T-7 | 30 mg/m² |
| Quillaiasaponin | 107 mg/m² |
| Compound c | 18.5 mg/m² |
| Compound d | 9.8 mg/m² |
| Gelatin latex | 480 mg/m² |
| Sodium polystyrenesulfonate | 52.2 mg/m² |

### 〈Preparation of Lower Protective Layer〉

| | |
|---|---|
| Gelatin | 0.5 g/m² |
| Compound e | 62.0 mg/m² |
| Citric acid | 4.1 mg/m² |
| Formalin | 1.7 mg/m² |
| Sodium polystyrenesulfonate | 11.0 mg/m² |

### 〈Preparation of Upper Protective Layer〉

| | |
|---|---|
| Gelatin | 0.3 g/m² |
| Compound f | 18.0 mg/m² |
| Compound e | 48.4 mg/m² |
| Compound g | 105.0 mg/m² |
| Compound h | 1.25 mg/m² |
| Amorphous silica (average grain diameter of 1.63 micron) | 15.0 mg/m² |
| Amorphous silica (average grain diameter of 3.5 micron) | 21.0 mg/ m² |
| Citric acid | 4.5 mg/m² |
| Sodium polystyrenesulfonate | 11.0 mg/m² |
| Ha-1 | 100 mg/g Gel |

### 〈Backing Coating Composition〉

| | |
|---|---|
| Compound i | 170 mg/m² |
| Compound e | 30 mg/m² |
| Compound j | 45 mg/m² |
| Compound k | 10 mg/m² |
| Quillaiasaponin | 111 mg/m² |
| Latex L-1 | 200 mg/m² |
| Colloidal silica | 200 mg/m² |
| Compound m | 35 mg/m₂ |
| Compound n | 31 mg/m₂ |
| Compound o | 3.1 mg/m² |
| Polymethylmethacrylic acid polymer (average grain diameter of 5.6 µm) | 28.9 mg/m² |
| Glyoxal | 10.1 mg/m² |
| Citric acid | 9.3 mg/m² |
| Sodium polystyrene sulfonate | 71.1 mg/m² |

Compounds shown below were added employing an in-line

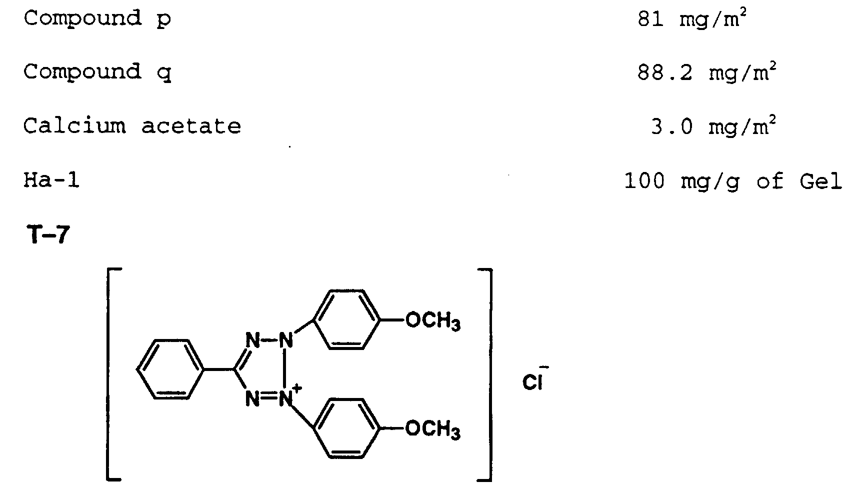

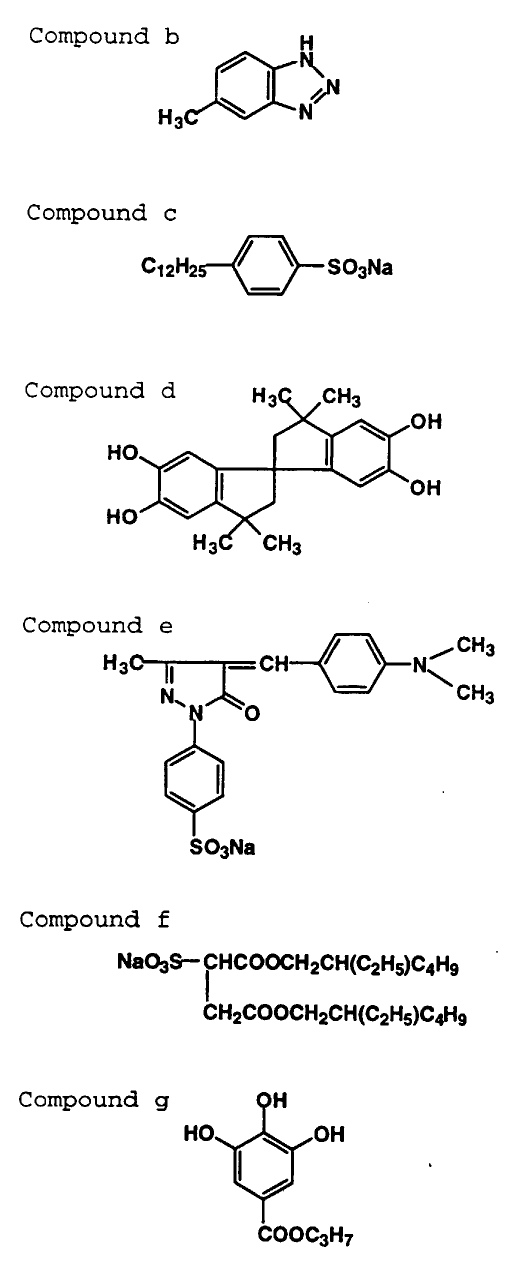

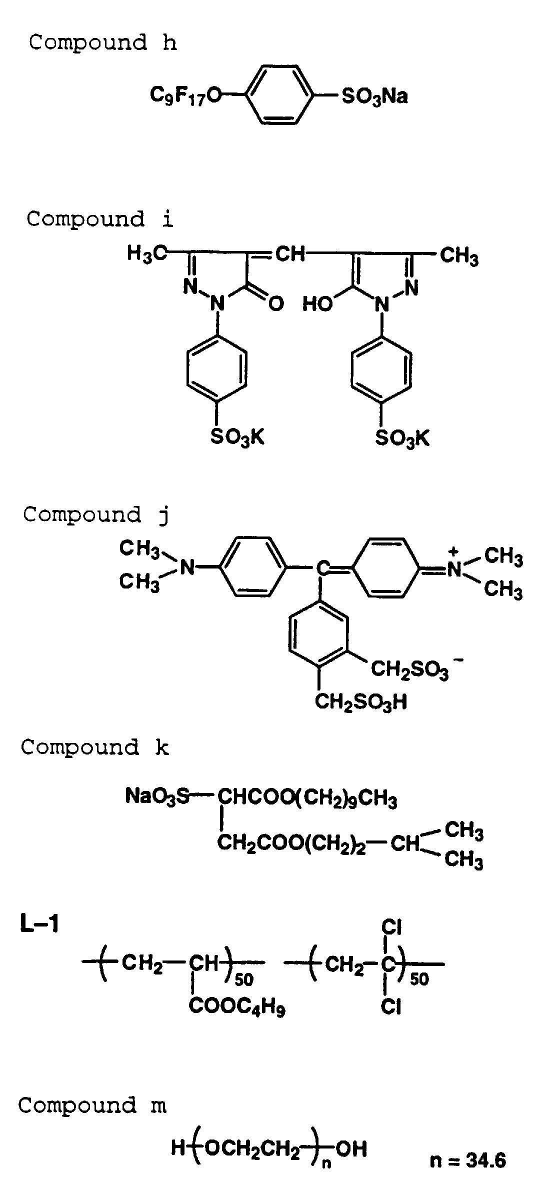

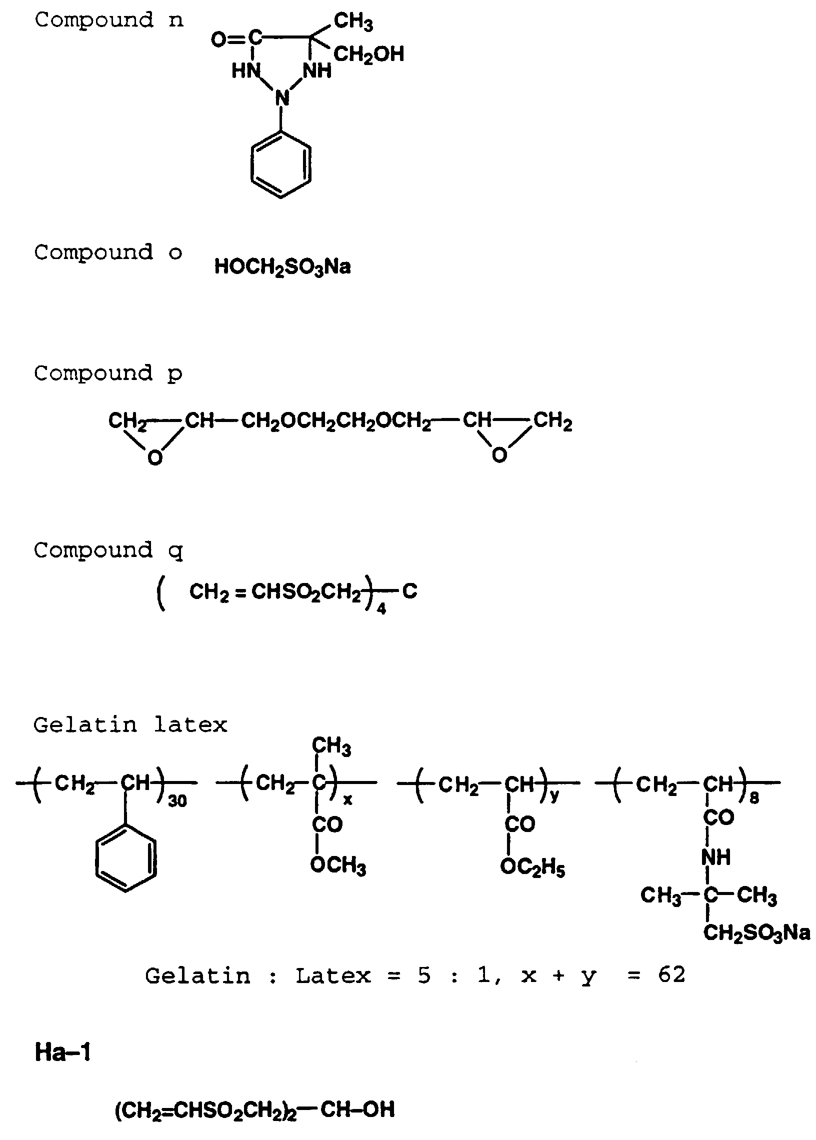

The above-mentioned coating composition was applied so that the coated gelatin amount was 0.8 g/m² in the emulsion layer, 0.6 g/m² in the lower protective layer, and 0.6 g/m² in the upper protective layer. The coating was uniformly carried out so that the silver amount of the emulsion layer was 2.0 g/m² and the gelatin amount of the backing layer was 2.1 g/m², followed by drying, and Light-Sensitive·Sample 201 was prepared. Subsequently, Samples 202 through 216 were prepared in the same manner as Sample 201, except that variations were made, as shown in Table 3, described below.

Subsequently, each Sample was subjected to exposure employing P-627 manufactured by Dainippon Screen Co., Ltd.; were processed employing an automatic processor GR-680 manufactured by Konica Corp., in which the rack was modified, in the same manner as in Example 1, except that the developer formula and the fixer formula were changed as described below; and was then evaluated in the same manner as Example 1.

Further, reverse text was evaluated as described below.

### 〈Reverse Text〉

When optimum exposure is carried out so that 50% of the half dot area becomes a 50% half dot area on a light-sensitive material, image quality, in which a 30 µm wide character can be reproduced, is evaluated to be Rank 5.

Furthermore, Rank 1 implies the image quality in which a 160 µm wide character can only be reproduced and the image quality is poor. Rank 3 and higher imply that the image quality is commercially viable.

### (Developer Formula) (per liter)

| | |
|---|---|
| Pentasodium dietylenetriaminepentaacetate | 1.0 g |
| Sodium sulfite | 42.5 g |
| Potassium sulfite | 17.5 g |
| Potassium carbonate | 55.0 g |
| Hydroquinone | 20.0 g |
| 1-Phenyl-5-mercaptotetrazole | 0.03 g |
| 4-Methyl-4-hydroxymethyl-1-phenyl-3-pyrazolidone | 0.85 g |
| Potassium bromide | 4.0 g |
| Benzotriazole | 0.21 g |
| Boric acid | 8.0 g |
| Diethylene glycol | 40.0 g |
| 8-Mercaptoadenine | 0.07 g |

With addition of water and potassium hydroxide, the total volume and pH were adjusted to 1 liter and 10.4, respectively.

### (Fixer Formula) (per liter)

| | |
|---|---|
| Ammonium thiosulfate (aqueous 70% solution) | 200 ml |
| Sodium sulfite | 22 g |
| Boric acid | 9.8 g |
| Sodium acetate trihydrate | 34 g |
| Acetic acid (aqueous 90% solution) | 14.5 g |
| Tartaric acid | 3.0 g |
| Aluminum sulfate (aqueous 27% solution) | 25 ml |

The pH of a working solution was adjusted to 4.9.

Tables 3 and 4 shows the above results.

**Table 3**

| Light-Sensitive Sample No | Phosphazene Derivative | | Addition Position | Additive | |
|---|---|---|---|---|---|
| | Compound Type | Added Amount mg/m² | | Additive Type | Added Amount |
| 201 | | 0 | Added to Emulsion Protective Layer | | |
| 202 | C-61 | 10 | Added to Emulsion Protective Layer | Lubricant Ls-21 | 30mg/m² |
| 203 | C-61 | 50 | Added to Emulsion Protective Layer | Lubricant Ls-21 | 30mg/m² |
| 204 | C-61 | 100 | Added to Emulsion Protective Layer | Lubricant Ls-21 | 30mg/m² |
| 205 | C-61 | 50 | Added to Emulsion Protective Layer | Water-soluble Polymer: Dextran MW = 40,000 | 300mg/m² |
| 206 | C-61 | 50 | Added to Emulsion Layer | Water-soluble Polymer: Dextran MW = 10,000 | 300mg/m² |
| 207 | C-61 | 50 | Added to Emulsion Layer | Latex instead of L-1: L-5 | 500mg/m² |
| 208 | C-61 | 50 | Added to Emulsion Layer | Oleophilic Component: di-n-octyl phthalate | 750mg/m² |
| 209 | C-61 | 50 | Added to Emulsion Protective Layer | Polymethyl methacrylate* instead of Silica | 25mg/m² |
| 210 | C-61 | 50 | Added to Emulsion Protective Layer | Gelatin Amount: Pro Upper = 1, Pro Lower = 1, Em = 1.8 | 210 |
| 211 | C-61 | 50 | Added to Emulsion Protective Layer | Gelatin Amount: Pro Upper = 1, Pro Lower = 1, Em = 1.0 | |
| 212 | C-40 | 50 | Added to Emulsion Protective Layer | Gelatin Amount: Pro Upper = 0.5, Pro Lower = 0.5, Em = 0.7 | |
| 213 | C-40 | 50 | Added to Emulsion Layer | pH of Emulsion Layer Coating Composition: 6.5 | |
| 214 | C-40 | 50 | Added to Emulsion Layer | pH of Emulsion Layer Coating Composition: 5.2 | |
| 215 | C-40 | 50 | Added to Emulsion Layer | Emulsion Layer: Composite Polymer PL-10 | 750mg/m |
| 216 | C-40 | 50 | Added to Emulsion Layer | Emulsion Layer: Composite Polymer PL-15 | 750mg/m |

| | | | | | |
|---|---|---|---|---|---|
| *: with a grain diameter of 3 µm | | | | | |

**Table 4**

| Light-Sensitive Sample No. | Sensitivity | Fog | Negative Image Character | Maximum Density | Running-1 | | | |
|---|---|---|---|---|---|---|---|---|
| | | | | | Sensitivity | Fog | Negative Image Character | Silver Sludge |
| 201 | 100* | 0.050 | 3 | 5.0 | 70 | 0.080 | 2 | 1 |
| 202 | 106 | 0.030 | 4 | 5.1 | 88 | 0.037 | 3.5 | 4 |
| 203 | 107 | 0.027 | 4 | 5.2 | 90 | 0.035 | 4 | 5 |
| 204 | 107 | 0.027 | 4 | 5.2 | 92 | 0.034 | 4 | 5 |
| 205 | 112 | 0.025 | 4 | 5.4 | 100 | 0.032 | 3.5 | 5 |
| 206 | 114 | 0.026 | 4 | 5.5 | 101 | 0.031 | 3.5 | 5 |
| 207 | 103 | 0.032 | 4 | 5.1 | 89 | 0.036 | 3.5 | 5 |
| 208 | 102 | 0.031 | 4 | 5.1 | 87 | 0.039 | 3.5 | 4 |
| 209 | 101 | 0.030 | 4 | 5.2 | 88 | 0.036 | 3.5 | 4 |
| 210 | 89 | 0.041 | 2.5 | 4.5 | 65 | 0.065 | 2 | 4 |
| 211 | 98 | 0.032 | 3.5 | 5.0 | 86 | 0.040 | 3.5 | 4 |
| 212 | 109 | 0.028 | 4.5 | 5.5 | 93 | 0.036 | 4 | 4 |
| 213 | 120 | 0.080 | 3 | 5.4 | 75 | 0.046 | 3.5 | 3 |
| 214 | 110 | 0.029 | 4 | 5.3 | 93 | 0.035 | 3.5 | 4 |
| 216 | 102 | 0.028 | 4 | 5.0 | 90 | 0.035 | 4 | 5 |
| 217 | 103 | 0.027 | 4 | 5.1 | 92 | 0.034 | 4 | 5 |

| | | | | | | | | |
|---|---|---|---|---|---|---|---|---|
| *: the sensitivity of No. 101 is 100 | | | | | | | | |

As can clearly be seen in Tables 3 and 4, all the Samples of the exhibit gamma of not less than 15, low fog density, and excellent quality of the negative image character. Furthermore, it is seen that even during running processing, Samples exhibit minimum degradation in fog and quality of the reverse text character, and minimum silver sludge formation.

### Example 3

### 3-1 〈Preparation of Light-Sensitive·Sample C and Evaluation Thereof〉

### (Preparation of Silver Halide Emulsion A1)

Silver chlorobromide core grains with an average diameter of 0.09 µm, composed of 70 mole percent of silver chloride and 30 mole percent of silver bromide, were prepared employing a double-jet method. During the preparation of core grains, an aqueous silver nitrate solution and water-soluble halide solution were subjected to double-jet mixing in the presence of 7 × 10⁻⁸ mole of K₃Rh(NO)₄(H₂O)₂ and 7 × 10⁻⁸ mole of K₃OsCl₆ per mole of silver at the completion of grain formation, while maintaining the temperature at 40 °C, the pH at 3.0 and the silver potential (EAg) at 165 mV.

The EAg of the resulting core grains was decreased to 125 mV by adding sodium chloride, and shells were attached employing a double-jet method. Furthermore, the resulting grains were subjected to KI conversion employing fine silver iodide grains. The resulting emulsion was found to be a core/shell type monodisperse (variation coefficient of 10 percent) cubic chloroiodobromide grain emulsion (composed of 70 mole percent of silver chloride, 0.2 mole percent of silver iodide, and 29.8 mole percent of silver bromide) with an average grain diameter of 0.15 µm. Subsequently, the obtained emulsion was subjected to salt removal employing modified gelatin (modified by substituting amino groups in gelatin with phenylcarbamyl and for example, exemplified compound G-8 described on a page 287(3) of Japanese Patent Publication Open to Public Inspection No. 2-280139) described in Japanese Patent Publication Open to Public Inspection No. 2-280139. The EAg after desalting was 190 mV at 50 °C.

The resulting emulsion was added with 1.5 × 10⁻³ mole of 4-hydroxy-6-methyl-1,3,3a,7-tetraazaindene per mole of silver, 5 × 10⁻⁴ mole of potassium bromide per mole of silver, and citric acid to adjust the pH and EAg to 5.6 and 123 mV, respectively, and was then subjected to reaction with 1 × 10⁻³ mole of sodium p-toluenesulfonylchloroamide trihydrate (chloramine-T). Thereafter, the resulting emulsion was added with the optimum amount of the solid dispersion of an inorganic sulfur S8 compound (a sulfur methanol solution is mixed with water to form a dispersion having an average particle diameter of 0.3 µm) and 1.5 × 10⁻⁵ mole of chloroauric acid and underwent chemical sensitization at 55 °C until maximum sensitivity was achieved. Thereafter, the ripened emulsion was added at 50 °C with 100 mg of sensitizing dye d-1 and 5 mg of trihexylamine, cooled to 40 °C, and added with 2 × 10⁻³ mole of 4-hydroxy-6-methyl-1,3,3a,7-tetraazaindene per mole of silver, 3 × 10⁻⁴ mole of 1-phenyl-5-methylmercaptotetrazole per mole of silver, and 5 × 10⁻³ mole of potassium iodide per mole of silver, and the pH was then adjusted to 5.1 by adding citric acid.

### (Preparation of Silver Halide Emulsion A2)

Silver halide emulsion A2 was prepared in the same manner as for silver halide emulsion A1, except that in the silver halide emulsion A1, the reaction temperature was raised to 50 °C to form grains having a grain diameter of 0.19 µm and the amount of the shell part of K₃RhCl₆ was 6 × 10⁻⁸ mole. When the same chemical ripening was carried out, the sensitivity of the A2 emulsion was 40 percent higher than A1.

### (Preparation of Silver Halide Light-Sensitive Photographic Material Comprising Hydrazine Derivative for a Printing Plate Scanner)

Further, onto the surface of the subbing layer of a support, opposite to the emulsion layer, a backing layer of Formula 5 shown below, and onto the resulting layer, a backing protective layer of Formula 6 shown below, were coated at a speed of 200 m/minute employing a curtain coating system so that the coated gelatin was 1.5 g/m² and 0.8 g/m², respectively, while onto the surface of the emulsion layer, simultaneous multilayer coating was carried out and coatings were set by chilling. Thereafter, simultaneous multilayer coating was carried out onto the surface of the backing layer and set by chilling. Both coated surfaces were dried to obtain Sample.

### Formula 1 (Gelatin subbing Layer Composition)

| | |
|---|---|
| Gelatin | 0.45 g/m² |
| Saponin | 56.5 mg/m² |
| Sodium polystyrenesulfonate (average molecular weight 500,000) | 15 mg/m² |
| Bactericide z | 0.5 mg/m² |

### Formula 2 (Silver Halide Emulsion Composition 1)

| | |
|---|---|
| Gelatin | 0.65 g/m² |
| Silver halide emulsion A1 | equivalent to silver amount of 1.5 g/m² |
| Sensitizing dye d-1 | 200 mg/AgI |
| Hydrazine compound H-1 | 2 × 10⁻³ mole/mole of AgI |
| Amino compound AM-1 | 7 mg/m² |
| Redox compound No. 21 | 70 mg/m² |
| Compound a | 100 mg/m² |
| 2-Pyridinol | 1 mg/m² |
| Polymer latex L-28 (particle diameter of 0.25 µm) | 0.25 g/m² |
| Hardener h1 | 5 mg/m² |
| Sodium iso-amyl-n-decyl | 0.7 mg/m² |
| sulfosuccinate | |
| Sodium naphthalenesulfonate | 8 mg/m² |
| Saponin | 20 mg/m² |
| Hydroquinone | 20 mg/m² |
| 2-Mercapto-6-hydroxypurine | 2 mg/m² |
| 2-Mercaptopyrimidine | 1 mg/m² |
| Colloidal silica (average particle diameter of 0.05 µm) | 150 mg/m² |
| Ascorbic acid | 20 mg/m² |
| EDTA | 25 mg/m² |
| Sodium polystyrenesulfonate | 15 mg/m² |

The pH of the coating composition was 5.2.

Further, the redox compound was dispersed according to the dispersion method shown below and employed.

### (Dispersion Method of Redox Compound)

| | |
|---|---|
| Redox compound | 2 g |
| Ethyl acetate | 80 g |

According the above-mentioned formula, the redox compound was dissolved and mixed with a gelatin solution described below.

| | |
|---|---|
| 10% TK-AX (manufactured by Matsumoto Yushi Co., Ltd.) | 6 g |
| 15% water-soluble gelatin | 180 g |

The above mixture was subjected to preliminary dispersion for 5 minutes employing a homogenizer and then main dispersion. Thereafter, the pressure was lowered to 30 mmHg to remove ethyl acetate. The volume of the resulting dispersion was adjusted to 280 g employing water.

### Formula 3 (Composition of Silver Halide Emulsion Layer 2)

| | |
|---|---|
| Gelatin | 0.65 g/m² |
| Silver halide emulsion A2 | amount equivalent to silver of 1.5 g/m² |
| Sensitizing dye d-2 | 300 mg/mole of AgI |
| Hydrazine compound H-2 | 4 × 10⁻³ mole/ mole of AgI |
| Amino compound AM-1 | 7 mg/m² |
| Redox compound No. 21 | 70 mg/m² |
| Sodium iso-amyl-n-decyl sulfosuccinate | 1.7 mg/m² |
| 2-Mercapto-6-hydroxypurine | 1 mg/m² |
| Nicotinic acid amide | 1 mg/m² |
| n-Propyl galliate | 50 mg/m² |
| Mercaptopyrimidine | 1 mg/m² |
| EDTA | 50 mg/m² |
| Styrene-maleic acid copolymer (molecular weight of 70,000) | 10 mg/m² |
| Latex L-29 (a compound, type Lx-3 composition (9), described in Example 3 of Japanese Patent Publication Open to Public Inspection No. 5-66512) | 0.25 g/m² |
| Colloidal silica (average particle diameter of 0.05 µm) | 150 mg/m² |
| Composite latex (exemplified PL-10) | 0.2 g/m² |

As gelatin, phthalated gelatin was employed and the pH of the coating composition was 4.8.

### Formula 4 (Emulsion Protective Layer Composition)

| | |
|---|---|
| Gelatin | 1.3 g/m² |
| Amino compound AM-1 | 14 mg/m² |
| Sodium iso-amyl-n-decyl sulfosuccinate | 12 mg/m² |
| Matting agent: spherical polymethyl methacrylate of 5 µm | 25 mg/m² |
| Amorphous silica with an average particle diameter of 8 µm | 12.5 mg/m² |
| Surface active agent S-1 | 26.5 mg/m² |
| Lubricant (silicone oil) | 4 mg/m² |
| Compound a | 50 mg/m² |
| Polymer latex L-1 (particle diameter of 0.10 µm) | 0.25 g/m² |
| Colloidal silica (average particle diameter of 0.05 µm) | 150 mg/m2 |
| Dye f1 | 20 mg/m² |
| 1,3-Vinylsulfonyl-2-propanol | 40 mg/m² |
| Hardener h2 | 30 mg/m² |
| Sodium polystyrenesulfonate | 10 mg/m² |
| Bactericide z | 0.5 mg/m² |
| Composite latex (exemplified PL-10) | 0.2 g/m² |

### Formula 5 (Backing Layer Composition)

| | |
|---|---|
| Gelatin | 0.6 g/m² |
| Sodium iso-amyl-n-decyl sulfosuccinate | 5 mg/m² |
| Polymer latex L-30 | 0.3 g/m² |
| Colloidal silica (average particle diameter of 0.05 µm) | 100 mg/m² |
| Sodium polystyrenesulfonate | 10 mg/m² |
| Dye f1 | 65 mg/m² |
| Dye f2 | 15 mg/m² |
| Dye f3 | 100 mg/m² |
| 1-Phenyl-5-mercaptotetrazole | 10 mg/m² |
| Hardener | 100 mg/m² |
| Composite latex (exemplified PL-10) | 0.4 g/m² |
| Zinc hydroxide | 50 mg/m² |
| EDTA | 50 mg/m² |

### Formula 6 (Backing Layer)

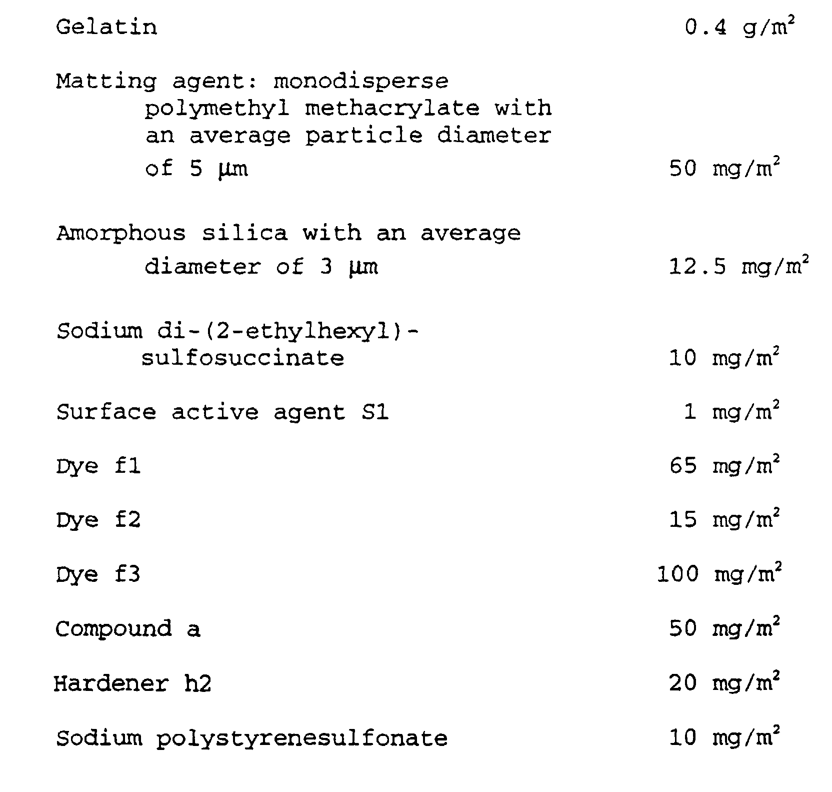

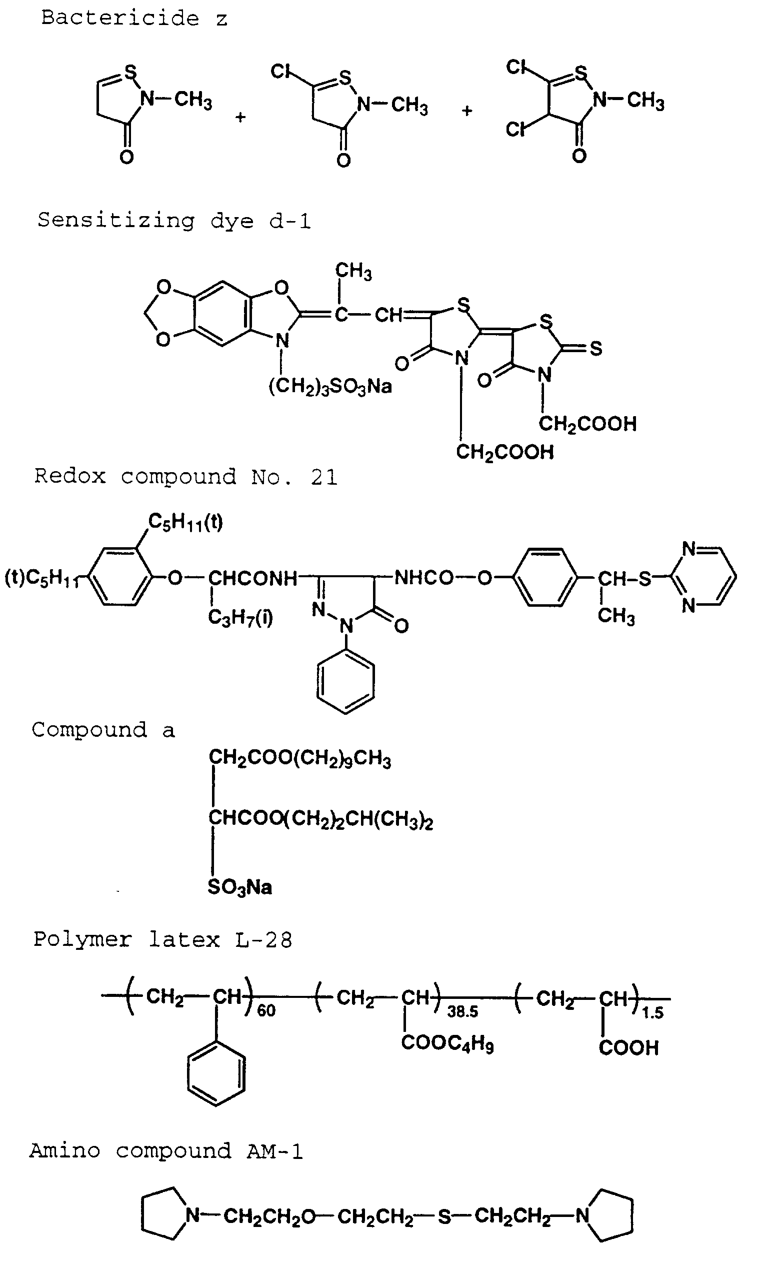

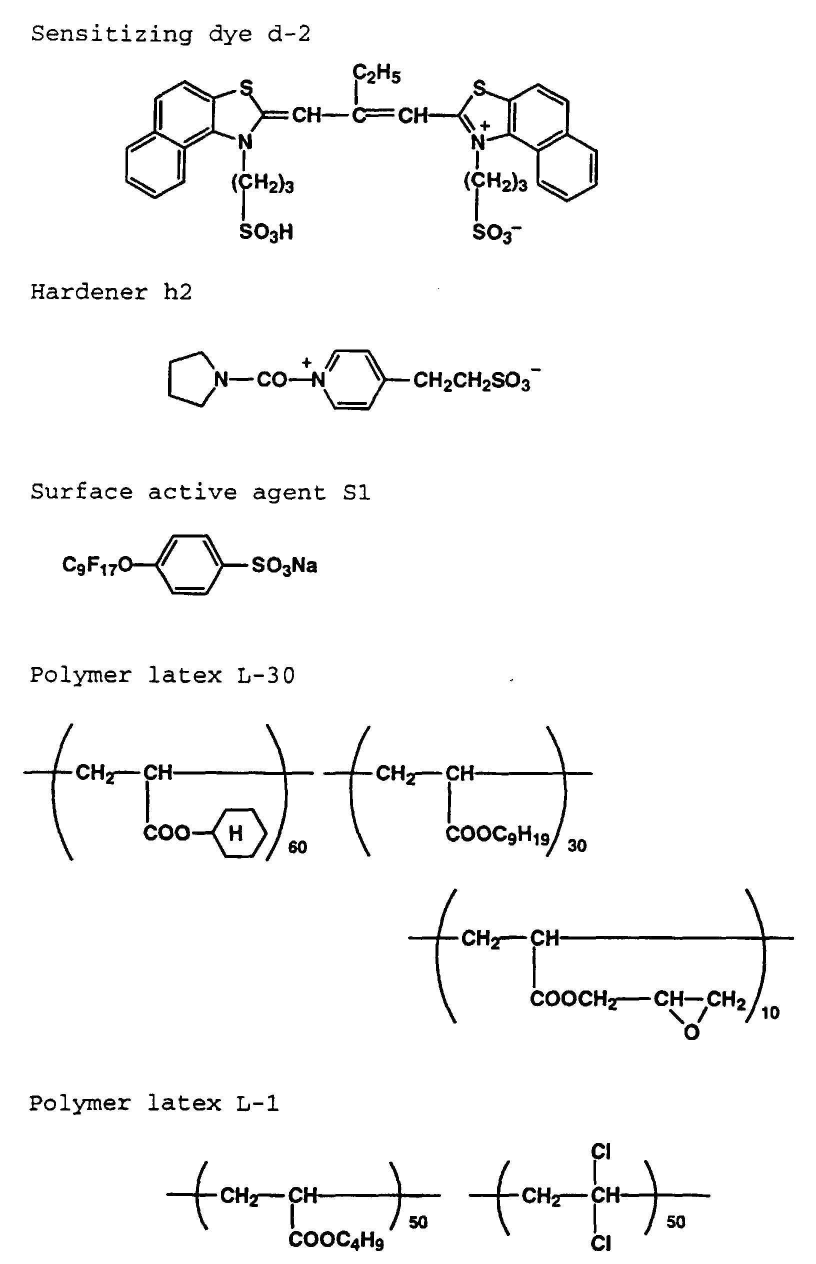

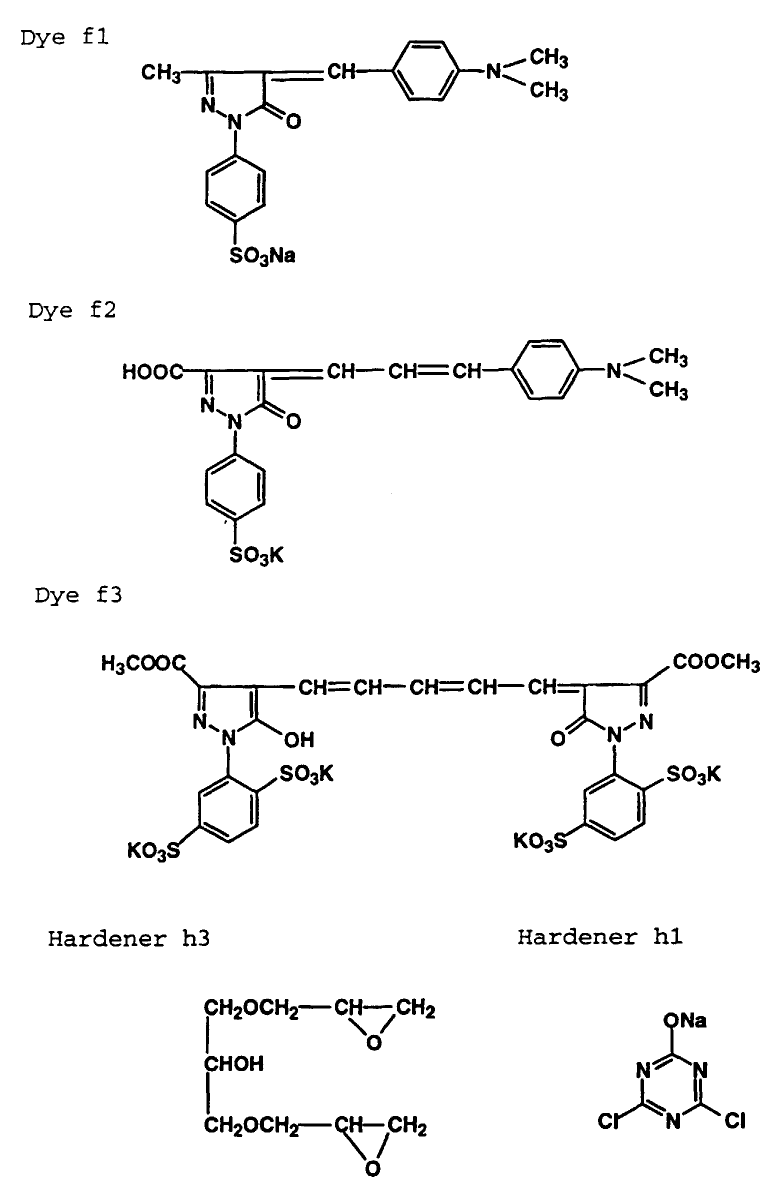

When a solid dispersion dye is incorporated, the dye is dispersed so as to form a powder dispersion with a particle diameter of 0.1 µm, using ZrO beads.

In the above-mentioned basic coating composition formulas, Light-Sensitive·Sample C was prepared employing coating pattern C (coating pattern C: the gelatin subbing layer of Formula 1; the silver halide emulsion layer of formula 2, thereon; further, the silver halide emulsion layer for Formula 3 thereon; still further, the protective layer of Formula 4, thereon, that is, a total of four layers were simultaneously coated). Further, the coated silver in the Sample was adjusted to 3 g/m² and the amount of gelatin was coated so as to obtain 3.05 g/m².

Items mentioned below were evaluated regarding the resulting Samples.

### 〈Evaluation Method〉

### (Evaluation of Sensitivity)

The Sample was brought into contact with a step wedge and was subjected to exposure of 1.5 × 10⁻⁷ seconds through a filter transmitting a wavelength of 633 nm as the representative wavelength of a laser beam employing a high intensity sensitometer, and processed under the conditions shown below employing an automatic processor GR-27 manufactured by Konica Corp. The resulting processed Sample was measured using a PDA-63 (Konica Digital Densitometer).

The sensitivity shown in Table below is a relative sensitivity when the sensitivity of No. A is 100 at a density of 2.5.

### 〈Evaluation of Abrasion〉

The moisture content of each Sample was regulated for 60 minutes at 23 °C and 48% relative humidity. Thereafter, prior to processing, a 3.5 × 30 cm nylon mesh cleaning pad was placed on the resulting Sample at a load of 300 g applied to the 2 × 2 cm area, and the Sample was rubbed at a rate of 30 cm per second. The rubbed Sample was then subjected to the same photographic processing as described above and abrasion was visually evaluated according to the standards described below.
- 5:: no abrasion found
- 4:: slight abrasion blackening found
- 3:: though overall density is low, abrasion blackening was found; being at the lowest limit for commercial viability
- 2:: black density was fairly high, and overall abrasion blackening found; and if introduced onto the market, complaints will result
- 1:: no commercial viability

Samples were processed under the same conditions (processing conditions and running conditions) of Example 1 and evaluated in the same manner as Example 1.

### (Developer Composition) per liter of the working solution

| | |
|---|---|
| Pentasodium diethylenetriamine-pentaacetate | 1 g |
| Sodium sulfite | 42.5 g |
| Potassium sulfite | 17.5 g |
| Potassium carbonate | 55 g |
| Hydroquinone | 20 g |
| 1-Phenyl-4-methyl-4-hydroxymethyl-3-pyrazolidone | 0.85 g |
| Potassium bromide | 4 g |
| 5-Methylbenzotriazole | 0.2 g |
| Boric acid | 8 g |
| Diethylene glycol | 40 g |
| 8-Mercaptoadenine | 0.3 g |

KOH was added to adjust the pH of the working solution to 10.4.

### (Fixer Composition) per liter of the working solution

| | |
|---|---|
| Ammonium thiosulfate (aqueous 70% solution) | 200 ml |
| Sodium sulfite | 22 g |
| Boric acid | 9.8 g |
| Sodium acetate trihydrate | 34 g |
| Acetic acid (aqueous 90% solution) | 14.5 g |
| Tartaric acid | 3.0 g |
| Aluminum sulfate (aqueous 27% solution) | 25 ml |

The pH of the working solution was adjusted to 4.9 employing sulfuric acid.

Items shown below were evaluated regarding the resulting Samples.

### (Processing Conditions)

| (Process) | (Temperature) | (Time) |
|---|---|---|
| Development | 35 °C | 30 seconds |
| Fixing | 35 °C | 20 seconds |
| Water Washing | normal temperature | 20 seconds |
| Squeezing·Drying | 50 °C | 30 seconds |
| Total | | 100 seconds |

Tables 5 and 6 show the above results.

### 3-2 〈Preparation of Light-Sensitive Material·Sample E, F, and G and Evaluation Thereof〉

Samples E, F, and G shown below were prepared in the same manner as for Light-Sensitive Material·Sample C prepared in the above-mentioned 3-1, except that the amount of gelatin was altered as described below, and further, phosphazene derivatives were added as shown in Table 5. Furthermore, the coated silver amount was adjusted to 3 g/m².

### Sample C:

Sample C was prepared as shown in the above-mentioned 3-1. The total four layers, composed of the gelatin subbing layer of Formula 1, the silver halide emulsion layer of Formula 2, the silver halide emulsion layer of Formula 3, and the protective layer of formula 4, were simultaneously coated thereon, and the coated gelatin amount of each of Formulas 1, 2, 3, and 4 was adjusted to 0.45g, 0.65 g, 0.65 g, and 1.3 g per m², respectively, the total gelatin being 3.05 g/m².

### Sample E:

Sample E was prepared in the same manner as for Sample C, except that in Sample C, the gelatin amount of each of Formulas 1, 2, 3, and 4 was changed to 0.8, 0.8, 0.8, and 2.0 g/m², respectively, that is, the total gelatin amount was changed to 4.4 g/m², and in addition, phosphazene derivatives were added as shown in Table 5.

### Sample F:

Sample F was prepared in the same manner as for Sample C, except that in Sample C, the gelatin amount of each of Formulas 1, 2, 3, and 4 was changed to 0.1, 0.2, 0.2, and 0.5 g/m², respectively, that is, the total gelatin amount was changed to 1.0 g/m² and in addition, phosphazene derivatives were added as shown in Table 5.

### Sample G:

Sample G was prepared in the same manner as for Sample C, except that in Sample C, the gelatin amount of each of Formulas 1, 2, 3, and 4 was changed to 0.3, 0.3, 0.3, and 0.7 g/m², respectively, that is, the total gelatin amount was changed to 1.6 g/m² and in addition, phosphazene derivatives were added as shown in Table 5.

The resulting Samples were evaluated in the same manner as 3-1 Sample C. Tables 5 and 6 shown below describe the results.

As can clearly be seen in Tables 5 and 6, the Samples of the invention also exhibit excellent abrasion resistance. Furthermore, the Samples exhibit excellent drying properties during photographic processing.

### 3-3 〈Preparation of Light-Sensitive Material·Sample K-1 and K-2 and Evaluation Thereof〉

Samples K-1 and K-2 were prepared in such a way that in the above-mentioned 3-3 Sample H, the pH of the coating composition, added with the phosphazene derivative according to the invention, was changed as shown below.

| Sample No. | pH |
|---|---|
| K-1 | 4.2 |
| K-2 | 5.2 |

Tables 5 and 6 show the evaluation results of the prepared Samples.

As can clearly be seen in Table 6, the Samples prepared by coating compositions having pH of the invention are superior to the Comparative Samples in terms of various properties.

### 3-4 〈Preparation of Light-Sensitive Material·Samples M-1 through K-3, M-5 through M-8, M-11, and M-13 and M-14, and Evaluation Thereof〉

Samples M-1 through K-3, M-5 through M-8, M-11, and M-13 and M-14 were prepared in the same manner as for Sample C, except that in the constitution of the above mentioned 3-1 Sample C, phosphazene derivatives as well as other items were changed as shown below.

| Sample No. | |
|---|---|
| M-1: | (silicone oil was removed) |
| M-2: | as a lubricant, 30 mg/m² of exemplified L-21 were employed |
| M-3: | as a lubricant, 800 mg/m² of exemplified L-21 and exemplified P1-2 (composite latex) were added to Formula 4 |
| M-5: | as a water-soluble polymer, 0.3 g/m² of dextran having a molecular weight of 40,000 was added to Formula 2 |
| M-6: | as a water-soluble polymer, 0.3 g/m² of dextran having a molecular weight of 1,000 was added to Formula 2 |
| M-7: | (latex was removed) |
| M-8: | as a latex, 500 mg/m² of L-4 were added to Formula 4 |
| M-11: | as an oleiophilic component, 0.75 g/m² of exemplified di-n-octyl phthalate was employed in Formula 4 |
| M-13: | (polymethyl methacrylate (matting agent) was removed |
| M-14: | as a matting agent, 12.5 mg/m² of amorphous silica (particle diameter of 8 µm) were employed |

Tables 5 and 6 described below show the evaluation results obtained in the same manner as 3-1 Sample C.

**Table 5**

| Light-Sensitive Material Sample No. | Phosphazene Derivative | | |
|---|---|---|---|
| | Compund Type | Added Amount mg/cm² | Addition Position |
| C | | 0 | |
| E | C-18 | 80 | Formula 4* |
| F | C-18 | 80 | Formula 4 |
| G | C-18 | 80 | Formula 4 |
| K-1 | C-18 | 80 | Formula 4 |
| K-2 | C-18 | 80 | Formula 4 |
| M-1 | C-40 | 0 | Formula 3** |
| M-2 | C-40 | 100 | Formula 3 |
| M-3 | C-40 | 100 | Formula 3 |
| M-5 | C-40 | 100 | Formula 3 |
| M-6 | C-40 | 100 | Formula 3 |
| M-7 | C-40 | 0 | Formula 3 |
| M-8 | C-40 | 100 | Formula 3 |
| M-11 | C-40 | 100 | Formula 3 |
| M-13 | C-40 | 0 | Formula 3 |
| M-14 | C-40 | 100 | Formula 3 |

| | | | |
|---|---|---|---|
| *: Formula 4 is an emulsion protective layer | | | |
| **: Formula 3 is a silver halide emulsion layer 2 | | | |

**Table 6**

| Light Sensitive Sample No. | Sensitivity | Black Spot | Dot Quality | Abrasion | Maximum Density | Running-1 | | | | |
|---|---|---|---|---|---|---|---|---|---|---|
| | | | | | | Sensitivity | Black Spot | Dot Quality | Abra sion | Sludge Sludge |
| C | 100* | 3 | 3 | 3 | 5.5 | 70 | 2 | 1 | 2 | 1 |
| E | 70 | 4 | 1 | 3.5 | 4.7 | 58 | 3 | 1 | 3.5 | 1.5 |
| F | 106 | 4 | 4 | 3.5 | 5.7 | 91 | 4 | 3.5 | 3.5 | 4 |
| G | 110 | 4 | 4.5 | 3.5 | 5.9 | 97 | 4 | 4 | 3.5 | 4 |
| K-1 | 106 | 4 | 4.5 | 4.5 | 5.4 | 94 | 4 | 4 | 4 | 5 |
| K-2 | 108 | 4 | 4 | 4 | 5.6 | 94 | 4 | 3.5 | 3.5 | 4.5 |
| M-1 | 100 | 4 | 4 | 3 | 5.5 | 93 | 4 | 4 | 2.5 | 3 |
| M-2 | 101 | 4 | 4 | 5 | 5.3 | 94 | 4 | 4 | 5 | 5 |
| M-3 | 102 | 4 | 4 | 5 | 5.3 | 94 | 4 | 4 | 5 | 5 |
| M-5 | 105 | 4 | 4.5 | 4.5 | 5.7 | 95 | 4 | 4 | 4 | 5 |
| M-6 | 104 | 4 | 4.5 | 4.5 | 5.6 | 96 | 4 | 4 | 4 | 5 |
| M-7 | 106 | 4 | 4.5 | 3 | 5.6 | 97 | 4 | 4 | 2 | 1 |
| M-8 | 104 | 4 | 4 | 5 | 5.4 | 96 | 4 | 4 | 5 | 5 |
| M-11 | 103 | 4 | 4 | 4 | 5.5 | 96 | 4 | 4 | 4 | 4.5 |
| M-13 | 105 | 4 | 4 | 3 | 5.6 | 96 | 4 | 4 | 2 | 1 |
| M-14 | 101 | 4 | 4 | 5 | 5.3 | 92 | 4 | 4 | 4.5 | 4 |

| | | | | | | | | | | |
|---|---|---|---|---|---|---|---|---|---|---|
| *: the sensitivity of Sample C is 100. | | | | | | | | | | |

As can clearly be seen in Tables 5 and 6, Samples of the invention are superior to Comparative Samples in terms of various properties.

### Example 4

### (Preparation of Hexagonal Tabular Seed Emulsion)

Pure Hexagonal tabular silver bromide seed emulsion EM-B was prepared employing the method shown below.

| A3 Solution | |
|---|---|
| Ossein gelatin | 60.2 g |
| Distilled water | 20.0 liters |
| HO-(CH₂CH₂O)ₙ-[CH(CH₃)CH₂]₁₇-(CH₂CH₂O)ₘH (n + m = 5 to 7 aqueous 10% methanol solution | 5.6 ml |
| KBr | 26.8 g |
| 10% H₂SO₄ | 144 ml |

| B3 Solution | |
|---|---|
| Silver nitrate | 1487.5 g |
| Distilled water to make | 3500 ml |

| C3 Solution | |
|---|---|
| KBr | 1050 g |
| Distilled water to make | 3500 ml |

| D3 Solution | |
|---|---|
| Aqueous 1.75N KBr solution | electrical potential controlling amount described below |

Nucleus formation was carried out, employing a mix stirrer disclosed in Japanese Patent Publication No. 58-58288, by adding, to A3 Solution, 64.1 ml of each of B3 Solution and C3 Solution for 2 minutes employing a double-jet method.

After terminating the addition of B3 and C3 Solutions, the temperature of A3 solution was raised to 60 °C over 60 minutes, and B3 and C3 Solutions were added for 50 minutes at a flow rate of 68.5 ml/minute employing a double-jet method. During this process, silver electrical potential (employing a saturated silver-silver chloride electrode as a reference electrode, measured employing a silver ion selective electrode) was controlled to +6 mV employing D3 Solution. After addition, the pH was adjusted to 6 employing a 3% KOH solution. Thereafter, the resulting emulsion was immediately subjected to salt removal and water washing to prepare Seed Emulsion EM-B. It was found through electron microscopic observation that the Seed Emulsion EM-B prepared as described above was composed of hexagonal tabular grains in which more than 90% of the total projection area of silver halide grains had a maximum adjacent side ratio of 1.0 to 2.0; the average thickness of the hexagonal tabular plate was 0.07 µ; the average diameter (converted spherical diameter) was 0.5 µ; and the variation coefficient was 25 percent.

### (Preparation of Pure Silver Bromide Emulsion EM-1)

A tabular pure silver bromide grain emulsion was prepared employing four types of solutions described below.

| A4 Solution | |
|---|---|
| Ossein gelatin | 29. 4 g |
| HO-(CH₂CH₂O)ₙ-[CH(CH₃)CH₂]₁₇-(CH₂CH₂O)ₘH (n + m = 5 to 7 aqueous 10% methanol solution | 1.25 ml |
| Seed emulsion EB-B | equivalent to 2.65 moles |
| Distilled water to make | 3000 ml |

| B4 Solution | |
|---|---|
| Aqueous 3.5N AgNO₃ solution | 1760 ml |

| C4 Solution | |
|---|---|
| KBr | 737 g |
| Distilled water to make | 1760 ml |

| D4 Solution | |
|---|---|
| Aqueous 1.75N KBr Solution | silver electricalpotential control amount described below |

At 60 °C, employing a mix-stirrer described in Japanese Patent Publication No. 53-58288, all B and C Solutions were added to A Solution over 110 minutes employing a double-jet method so that the flow rate at the addition completion was three times as fast as that at the initial addition. During this process, the silver electrical potential was controlled so as to be at +40 mV employing Solution D4.

After the addition completion, in order to remove excessive salts, coagulation salt removal was carried out employing the method described below.
1. A resulting solution prepared by mixing is warmed to 40 °C, and added with exemplified gelatin coagulating agent G-3 in an amount of 20 g/mole of AgI. The pH is then lowered to 4.30 by the addition of 56 percent acetic acid by weight. The resulting emulsion is stirred for 10 minutes, left standing, and subjected to curtain coating
2. One mole of AgX is added to 1.8 liters of deionized water at 40 °C, then stirred for 10 minutes, left standing, and subjected to decantation.
3. The process described in 2 above is repeated once.
4. Thereafter, the resulting precipitates are added with 15 g of gelatin per mole of AgX and sodium carbonate, and water to adjust the pH to 6.0 and are dispersed to make 4,500 cc/mole of AgX.

Approximately 3,000 grains of the resulting emulsion EM-1 were observed employing an electron microscope and the grain shapes were measured and analyzed. As a result, it was found that not less than 80 percent of the entire projection area was composed of hexagonal tabular grains having an aspect ratio of 2 or more, an average diameter equivalent to a circle of 0.59 µ, an average thickness of 0.17 µ, and a variation coefficient of 24 percent.

### (Preparation of Fine Solid Particle Dispersion of Spectral Sensitizing Dye)

5,5'-dichloro-9-ethyl-3,3'-di-(3-sulfopropyl)oxacarbocyanine salt anhydride (Sensitizing Dye A) and 5,5'-di-butoxycarbonyl)-1,1'-diethyl-3,3'-di-(4-sulfobutyl)benzoimidazolocarbocyanine-sodium salt anhydride (Sensitizing Dye B) in a ratio of 100 : 1 were previously added to water kept at 27 °C. The fine solid particle dispersion of the spectral sensitizing dyes was prepared by stirring the resulting mixture at 3,500 r.p.m. over 30 to 120 minutes employing a high speed stirrer (dissolver). At the time, the concentration of Sensitizing Dye was adjusted so as to become 2 percent.

### (Gold-sulfur Sensitization)

Subsequently, the resulting emulsion underwent spectral and chemical sensitization employing the methods described below to prepare a chemically sensitized emulsion. The emulsion heated at 50 °C was added with the above mentioned fine solid particle dispersion so that the concentration of Sensitizing Dye A became 460 mg per mole of silver. Thereafter, the resulting emulsion was added with 7.0 × 10⁻⁴ mole of ammonium thiocyanate per mole of silver, potassium chloroaurate, and sodium thiosulfate; then subjected to optimum chemical sensitization; thereafter, added with 3 × 10⁻³ mole of the above-mentioned fine silver iodide grain emulsion per mole of AgI; and stabilized by the addition of 3 × 10⁻² mole of 4-hydroxy-6-methyl-1,3,3a,7-tetraazaidene (TAI).

### (Se Sensitization)

An emulsion was subjected to spectral sensitization and chemical sensitization employing the methods described below to obtain a chemically sensitized emulsion.

After heating the emulsion to 60 °C, the above-mentioned fine solid particle dispersion was added so that the amount of Sensitizing Dye A became 460 mg per mole of silver. Thereafter, the resulting emulsion was added with 7.0 × 10⁻⁴ of ammonium thiocyanate per mole of silver and 3.0 × 10⁻⁶ mole of each of potassium chloroaurate, sodium thiosulfate, and triphenylphosphine selenide per mole of silver and subjected to optimum chemical sensitization, and then added with 3.0 × 10⁻³ mole of the above-mentioned fine silver iodide grain emulsion per mole of AgI, and thereafter, stabilized with 3 × 10⁻² mole of TAI.

Next, an emulsion layer coating composition was prepared by adding, to the emulsion sensitized as described above, additives described below. At the same time, a protective layer coating composition was prepared.

### (Preparation of Subbed Support)

Next, both surfaces of a polyethylene terephthalate film support (thickness of 175 µm) tinted to blue with a density of 0.170 for X-ray use, were subjected to corona discharging treatment with 0.5 kV·A·minute/m²; thereafter, was coated with the subbing latex composition described in (L-2) below so as to obtain a dried layer thickness of 0.2 µm and subsequently, coated with (LL-1) described below so as to obtain a dried layer thickness of 0.053 µm, and dried for 2 minutes at 123 °C. The resulting support was termed Support 1.

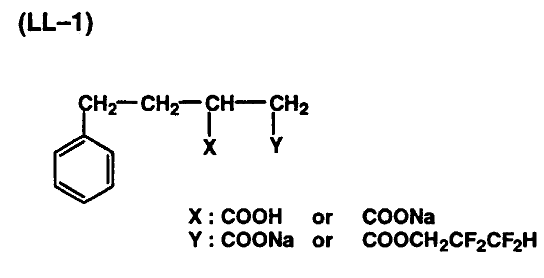

### (L-2)

A copolymer latex composition (solid portion of 30 percent) comprised of 10 weight percent of n-butyl acrylate, 35 weight percent of t-butyl acrylate, 27 weight percent of styrene, and 28 weight percent of 2-hydroxyethyl acrylate

One surface of the same support was provided with the same subbing as Support 1, and the other surface was coated, as a lower layer, with a coating composition prepared by mixing SnO₂ sol synthesized in (Synthesis Example 1), the above-mentioned (L-2) composition, and (L-3) composition described below in a volume ratio of 35 : 15 : 50 so as to obtain a dried thickness of 0.12 µm and an amount of coated sol of 250 mg/m², and as an upper layer, with a coating composition prepared by mixing the above-mentioned (LL-1) and (L-3) described below in a ratio of 70 : 30, and dried for 1 minute at 120 °C. Prior to coating, the film support was subjected to corona discharging treatment with 0.5 kV·A·minute/m². The resulting support was termed Support 2.

### (L-3)

In a nitrogen gas flow, a mixture consisting of 34.02 weight parts of dimethyl terephthalate, 25,52 weight parts of dimethyl isophthalate, 12.97 weight parts of sodium dimethyl 5-sulfoisophthalate, 47.85 weight parts of ethylene glycol, 18.95 weight parts of 4-cyclohexanedimethanol, 0.065 weight part of calcium acetate anhydride, 0.022 weight part of manganese acetate tetrahydrate was subjected to ester exchange reaction at 170 to 220 °C while removing methanol, and thereafter, the resulting composition was added with 0.04 weight part of trimethyl phosphate, 0.04 weight part of antimony trioxide, and 15.08 weight parts of 1,4-dichlorohexane-dicarboxylic acid, and the resulting mixture was subjected to esterification at 220 to 235 °C while removing an amount of water comparable to that of the theoretical value. Thereafter, the reaction vessel was evacuated over about one hour and heated, and polymerization condensation was carried out for about one hour at the last conditions of 280 °C and not higher than 1 mmHg to obtain a polyester polymer. (intrinsic viscosity of 0.35)

To 7,300 g of the resulting polyester polymer solution, 30 g of styrene, 30 g of butyl methacrylate, 20 g of glycidyl methacrylate, and 1.0 g of ammonium persulfate were added; underwent reaction at 80 °C for 5 hours; was then chilled to room temperature; and a coating composition was prepared by adjusting the solid portion to 10 percent by weight.

### (L-4)

A copolymer latex composition composed of 40 weight percent of n-butyl acrylate, 20 weight percent of styrene, and 40 weight percent of glycidyl methacrylate.

### (Preparation of Light-Sensitive Material)

Onto both surfaces of the above-mentioned Support 2, the crossing light shielding layer, the emulsion layer coating composition, and the protective layer coating composition described below were simultaneously multicoated and dried so as to obtain desired coated amounts shown below.

### First Layer (crossing light shielding layer)

| | |
|---|---|
| Fine solid particle dispersion dye (AH) | 180 mg/m² |
| Gelatin | 0.2 g/m² |
| Sodium dodecylbenzenesulfonate | 5 mg/m² |
| Compound (I) | 5 mg/m2 |
| 2,4-Dichloro-6-hydroxy-1,3,5-triazine sodium salt | 5 mg/m² |
| Colloidal silica (average particle diameter of 0.014 µ) | 10 mg/m2 |

### Second Layer (emulsion layer) (pH of coating composition = 4.5)

Various types of additives shown below were added to the emulsion prepared as described above.

| | |
|---|---|
| Compound (G) | 0.5 mg/m² |
| 2,6-bis(Hydroxyamino)-4-dimethylamino-1,3,5-triazine | 5 mg/m² |
| t-Butylcatechol | 130 mg/m² |
| Polyvinylpyrrolidone (molecular weight of 10,000) | 35 mg/m² |
| Styrene-maleic acid anhydride copolymer | 80 mg/m² |
| Sodium polystyrenesulfonate | 80 mg/m² |
| Trimethylolpropane | 350 mg/m² |
| Diethylene glycol | 50 mg/m² |
| Nitrophenyl-triphenyl-phophonium chloride | 20 mg/m² |
| Ammonium 1,3-dihydroxybenzene-4-sulfonate | 500 mg/m² |
| Sodium 2-mercaptobenzimidazole-5-sulfonate | 5 mg/m² |
| Compound (H) | 0.5 mg/m² |
| n-C₄H₉CH₂CH(OH)CH₂N(CH₂COOH)₂ | 350 mg/m² |
| Compound (M) | 5 mg/cm² |
| Compound (N) | 5 mg/cm² |
| Colloidal silica | 0.5 g/m² |
| Latex L-31 | 0.2 g/m² |
| Dextrin (average molecular weight of 1,000) | 0.2 g/m² |

However, the amount of gelatin was adjusted to 1.0 g/m².

### Third Layer (Protective Layer (comprising a nonionic surface active agent))

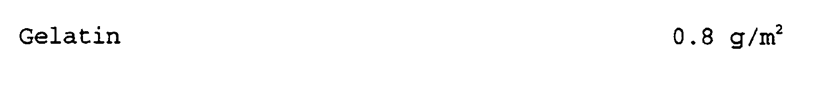

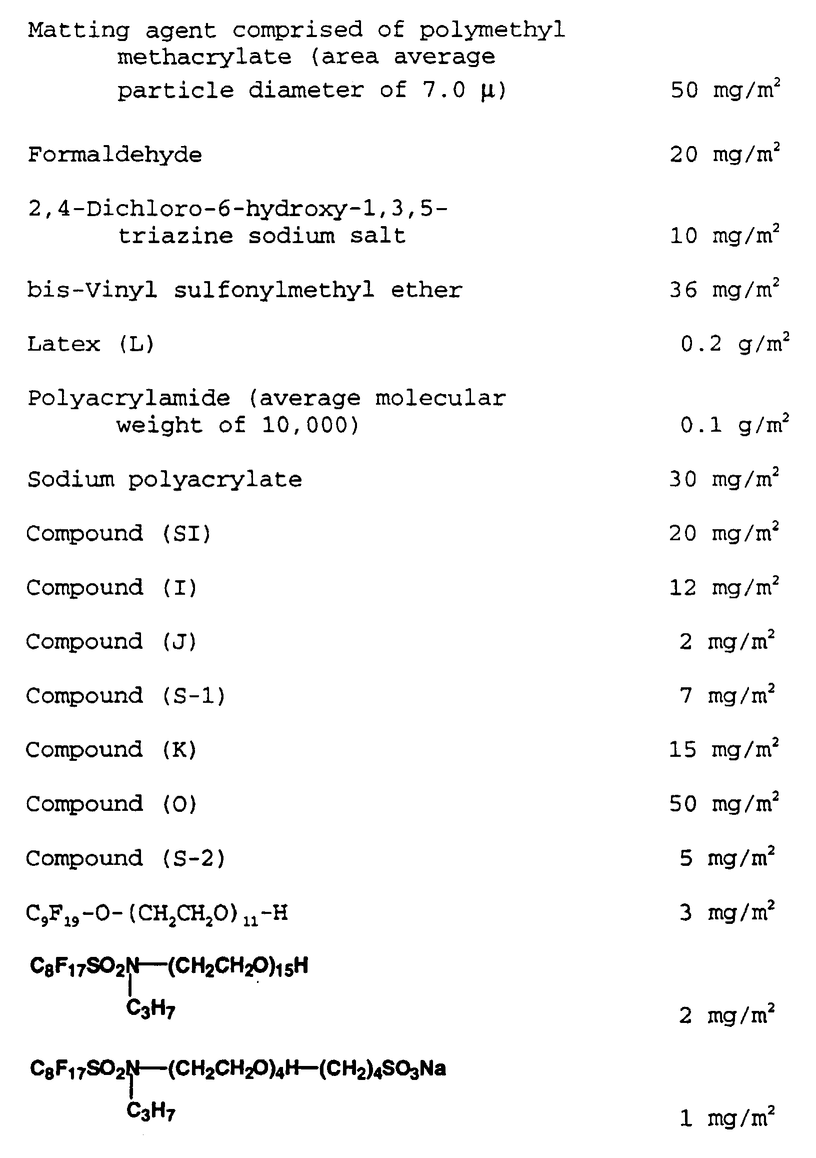

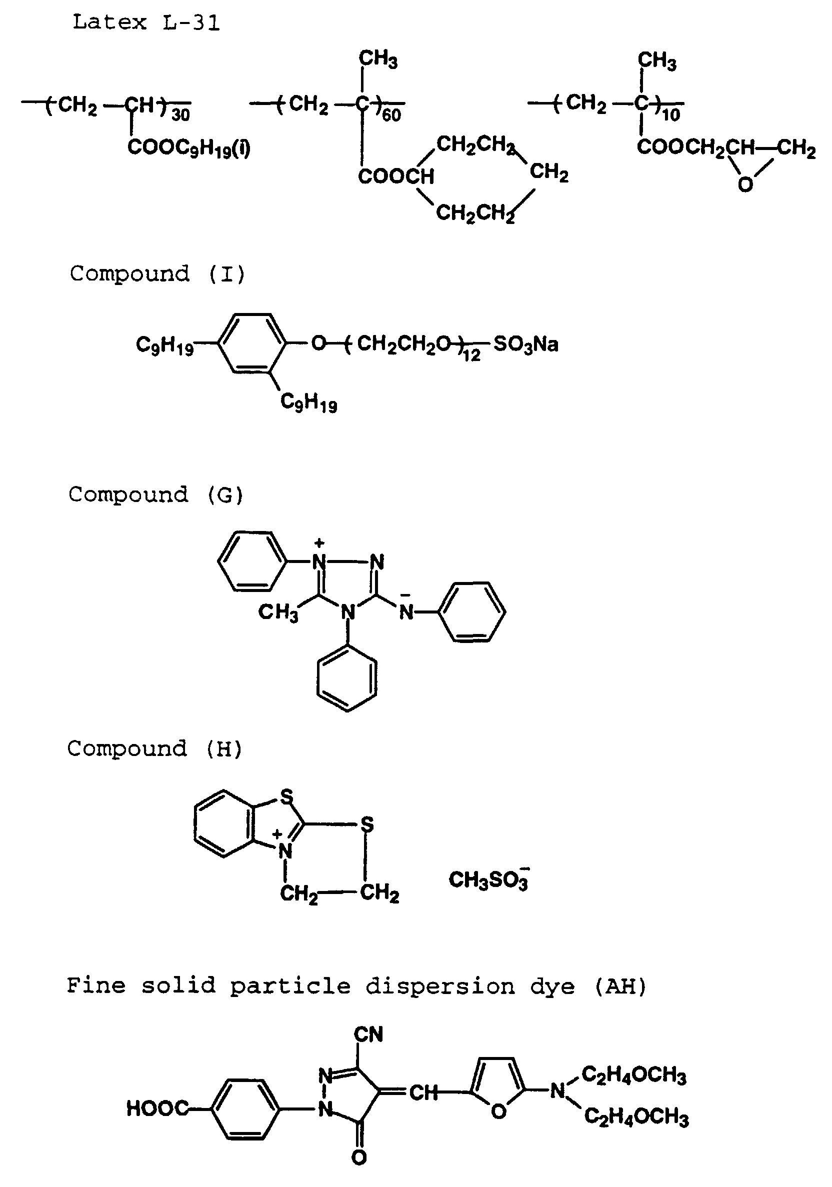

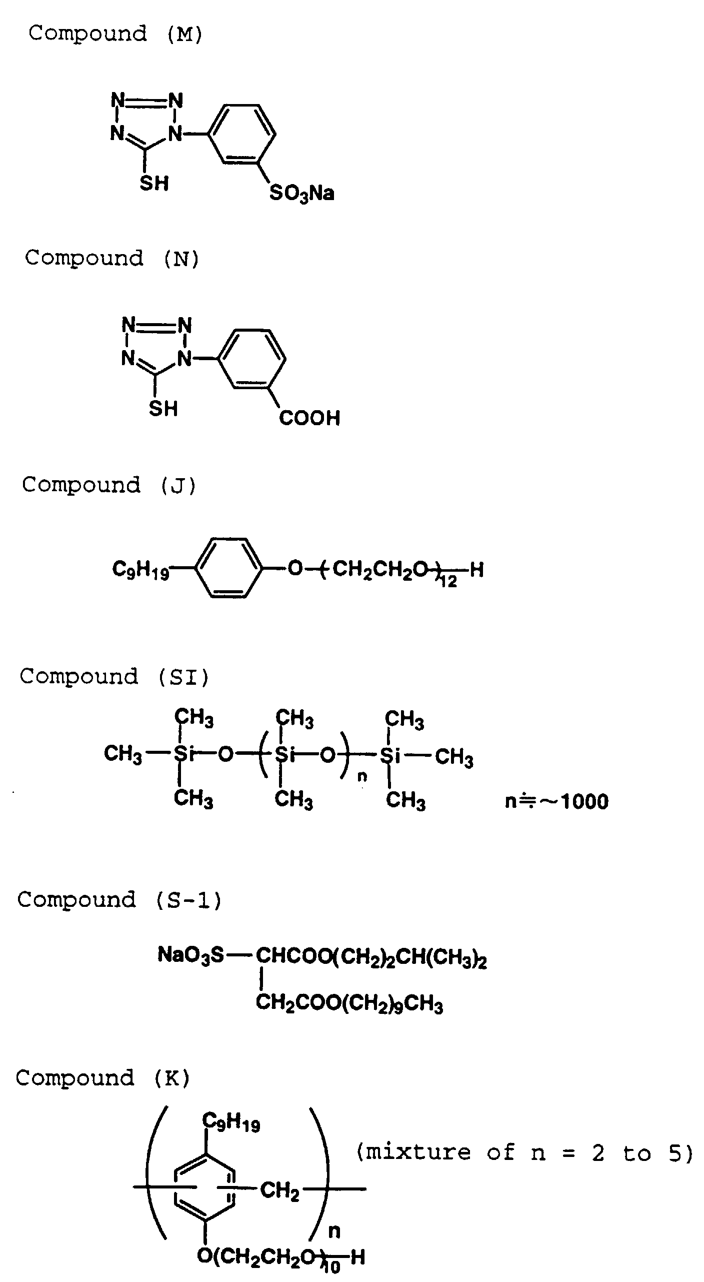

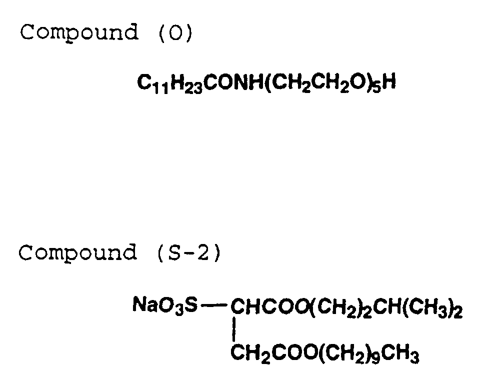

Further, coated amounts of materials were those on one surface of a support and the coated silver amount was adjusted to 1.7 g/m² on one surface.

Thus the Light-Sensitive·Sample 401 was prepared. Subsequently, Samples 402 through 417 were prepared in the same manner as Sample 401, except that variations were made, as shown in Table 7, described below.

### (Preparation of Fluorescent Screen)

| | |
|---|---|
| Fluorescent material Gd₂O₂: Tb (average particle diameter of 1.8 µ) | 200 g |
| Binding material polyurethane series thermoplastic elastomer (Demorac TPKL-5-2625 with 40% solid: manufactured by Sumitomo Bayer Urethane Co., Ltd.) | 20 g |
| Nitrocellulose (nitration degree of 11.5 percent) | 2 g |

To the above mixture, methyl ethyl ketone as a solvent was added and the resulting mixture was dispersed employing a propeller type mixer to prepare a fluorescent material layer forming coating composition (binder/fluorescent material = 1/22) having a viscosity of 25 ps (25 °C).

Furthermore, separately, as a subbing layer forming coating composition, a dispersion having a viscosity of 3 to 6 ps (25 °C) was prepared in such a way that 90 g of soft acrylic resin solid and 50 g of nitrocellulose were added to methyl ethyl ketone and mix dispersed.

A 250 µ thick titanium dioxide kneaded polyethylene terephthalate film support was horizontally placed on a glass plate and the above-mentioned subbing layer forming coating composition was uniformly coated on the support employing a doctor blade. Thereafter, the coated layer was dried upon gradually raising temperatures from 25 °C to 100 °C to form a subbing layer on the support. The thickness of the coated layer was 15 µ.

Onto the resulting layer, the above-mentioned fluorescent material layer forming coating composition was uniformly applied and dried employing a doctor blade so as to obtain the layer thickness of 240 µ and then was pressed. Pressing was carried out at 80 °C under a pressure of 800 kgw/cm² employing a calender roll. After this pressing, a transparent protective layer with a thickness of 3 µ was formed employing a method described in Example 1 of Japanese Patent Publication Open to Public Inspection No. 6-75097.

As described above, a fluorescent screen comprised of the support, a subbing layer, a fluorescent material layer, and a transparent protective layer was prepared.

### (Preparation of Tablet for Development Replenishment)

According to Operations (A) and (B), the tablet for development replenishment was prepared.

### Operation (A)

In a commercial bantam mill, sodium erthorbirate, as a developing agent, was pulverized having an average particle diameter of 10 µ. The resulting powder was added with 2,000 g of sodium sulfite, 2,700 g of Dimezone S (1-phenyl-4-hydroxymethyl-4-methyl-3-pyrazolidone), 1,250 g of DTPA (sodium diethylenetriaminepentaacetate), 12.5 g of 5-methylbenzotriazole, 4 g of 1-phenyl-5-mercaptotetrazole, and 60 g of N-acetyl-D.L-penicillamine, and was mixed for 30 minutes in the mill. The resulting mixture was granulated for 10 minutes at room temperature employing a stirring granulating machine while adding 30 ml of water. The resulting granules were dried at 40 °C for 2 hours in a fluidized-bed dryer to remove almost all moisture. To the granules thus prepared, 1,670 g of mannitol was added and uniformly mixed for 10 minutes employing a mixer in a room conditioned at 25 °C and at a relative humidity of not higher than 40 percent. Thereafter, the resulting mixture was press shaped into 2,500 tablets as Development Replenisher Tablet A, employing a modified Toughpress Collect 1527 HU tableting machine manufactured by Kikusui Seisakusho Ltd., while using an amount of 8.77 g per tablet.

### Operation (B)

In the same manner as Operation (A), 4,000 g of potassium carbonate, 2,100 g of mannitol, and 2,100 g of polyethylene glycol #6000 were pulverized and then granulated. The addition amount of water was regulated to 30.0 ml and after granulation, the moisture in the granules was almost perfectly removed. The mixture thus prepared was press shaped into 2,500 tablets as Development Replenisher Tablet B, employing the above-mentioned tableting machine, while using 3.28 g per tablet.

### (Preparation of Tablet for Fixer Replenisher)

### Operation C

After 14,000 g of ammonium thiosulfate/sodium thiosulfate (70/30 by weight) and 1,500 g of sodium sulfite were pulverized in the same manner as (A), the resulting mixture was uniformly mixed employing a commercial mixer. Subsequently, in the same manner as (A), 500 ml of water was added and granulation was carried out. After granulation, the resulting granules were dried for 30 minutes to almost perfectly remove all moisture in the granules. To the granules thus prepared, 4 g of sodium N-laurylalanine was added, and the resulting mixture was mixed for 3 minutes employing a mixer in a room conditioned at 25 °C and at a relative humidity of not higher than 40 percent. The resulting mixture was press shaped into 25,000 tablets of Fixer Replenisher Tablet C.

### Operation (D)

In the same manner as (A), 1,000 g of boric acid, 1,500 g of aluminum sulfate octadecahydrate, 3,000 g of sodium hydrogenacetate (prepared by mixing glacial acetic acid and sodium acetate in equal moles and drying the resulting mixture), and 200 g of tartaric acid were pulverized and then granulated, and 100 ml of water were added. After granulation, the resulting granules were dried at 50 ° for 30 minutes to remove almost all moisture in the granules. To the mixture prepared as descried above, 4 g of sodium N-laurylalanine was added and mixed for 3 minutes. Thereafter, the resulting mixture was press shaped into 1,250 tablets as Fixer Replenisher Tablet D, employing the above-mentioned tableting machine, using 4.562 g per tablet.

### (Evaluation on light-sensitive Material)

### 〈Evaluation on Low Replenishment and Quick Processing Properties〉

An automatic processor SRX-502, manufactured by Konica Corp., was modified in such a manner that a solid processing agent supplying member was added; the conveyance roller was replaced with a heating roller (refer to Fig. 1, heated at 60 °C); and a processing speed of 25 seconds was enabled. Employing the above-mentioned modified processor and solid processing agents, 200 sample sheets in a large square size (35.6 × 35.6 cm) were continuously processed, which had been placed between fluorescent screens and subjected to X-ray radiation exposure via a Penetrometer B Type (manufactured by Konica Medical Corp.) so as to result in an optical density of 1.0 after photographic processing. During running processing, a developer was added with the above-mentioned two A Agent tablets, two B Agent tablets, and 76 ml of water per 0.62 m² of the light-sensitive material. When each of the A Agent tablets and B Agent tablets was dissolved in 38 ml of water, the resulting pH was 10.70. A fixer was added with the above-mentioned two C Agent tablets, one D Agent tablet, and 74 ml of water per 0.62 m² of the light-sensitive material. The addition of water was initiated at the almost same time as the addition of processing agents and for each tablet, water was added at the same rate for 10 minutes nearly proportional to the rate of dissolution of the processing agent.

### Processing conditions

| | | |
|---|---|---|
| Development | 35 °C | 8.2 seconds |
| Fixing | 33 °C | 5 seconds |
| Water Washing | Normal temperature | 4.5 seconds |
| Squeezing | | 1.6 seconds |
| Drying | 40 °C | 5.7 seconds |
| Total | | 25 seconds |

At the commencement of processing (commencement of running), a development tank was filled with a starting solution which was prepared by adding 330 ml of a starter to 16.5 liters of the developer prepared by dissolving 434 tablets of the A Agent and 434 tablets of the B Agent of the Development Replenisher Agent in diluting water, and processing was initiated. The pH of the developer with the added starter was 10.45.

### (Developer Starter)

| | |
|---|---|
| Glacial acetic acid | 2.98 g |
| KBr | 4.0 g |
| Water to make | 1 liter |

Further, a fixing tank was filled with 11.0 liters of a starting solution prepared by dissolving the Fixer Replenisher C Agent tablets equivalent to 298 g and D Agent tablets equivalent to 149 g in dilution water.

### 〈Evaluation Method〉

### 〈Silver Sludge (occasionally referred to as Silver Staining or Development Staining)〉

Employing processing solutions (developer and fixer) subjected to 8 days of running, a 3.5 × 12 cm unexposed light-sensitive material in a size of was processed and staining on the surface of the processes light-sensitive material was visually evaluated. Silver sludge was evaluated in such a manner that maximum staining was classified to Rank 1 and no staining was classified to Rank 5, and staining was evaluated employing 9 steps including intermediate degree of staining. A sample of not more than Rank 3 is not commercially viable.

### 〈Sensitivity (Development Rate)〉

The density of the resulting processed sample was measured employing a PDA-65 (a digital densitometer).

### 〈Maximum Density〉

The density of the resulting processed sample was measured employing a PDA-65 (a digital densitometer).

### 〈Fog〉

The density of the resulting processed sample was measured employing a PDA-65 (a digital densitometer).

### 〈Abrasion〉

The moisture content of Sample was controlled for 60 minutes at 23 °C and 48% relative humidity. Thereafter, prior to processing, a 3.5 × 30 cm nylon mesh cleaning pad was placed on the resulting Sample so that the load of 300 g was applied on a 2 × 2 cm area, and the Sample was rubbed at a rate of 30 cm per second. The rubbed Sample was then subjected to the same photographic processing as described above and abrasion was visually evaluated according to the standards described below.
- 5:: no abrasion found
- 4:: slight abrasion blackening found
- 3:: though overall density is low, abrasion blackening was found; being at the lowest limit for commercial viability
- 2:: black density was fairly high, and overall abrasion blackening found; and if introduced onto the market, complaints will result
- 1:: no commercial viability

Tables 7 and 8 show the above results.

**Table 7**

| Light Sensitive Sample No | Phosphazene Derivative | | Addition Position | Additive | |
|---|---|---|---|---|---|
| | Compound Type | Added Amount mg/m² | | Additive Type | Added Amount |
| 401 | | 0 | Added to Emulsion Protective Layer | | |
| 402 | C-61 | 10 | Added to Emulsion Protective Layer | Lubricant Ls-21 | 30mg/m² |
| 403 | C-61 | 50 | Added to Emulsion Protective Layer | Lubricant Ls-21 | 30mg/m² |
| 404 | C-61 | 100 | Added to Emulsion Protective Layer | Lubricant Ls-21 | 30mg/m² |
| 405 | C-61 | 50 | Added to Emulsion Protective Layer | Instead of Dextrin: Dextran MW = 40000 | 300mg/m² |
| 406 | C-61 | 50 | Added to Emulsion Layer | Water-soluble Polymer: Dextran MW = 10000 | 300mg/m² |
| 407 | C-61 | 50 | Added to Emulsion Layer | Latex instead of L-31: L-5 | 500mg/m² |
| 408 | C-61 | 50 | Added to Emulsion Layer | Oleophilic Component: di-n-octyl phthalate | 750mg/m² |
| 409 | C-61 | 50 | Added to Emulsion Protective Layer | Amorphous silica instead of polymethyl methacrylate | 25mg/m² |
| 410 | C-61 | 50 | Added to Emulsion Protective Layer | Gelatin Amount: Pro = 2, Em = 1.8 | |
| 411 | C-61 | 50 | Added to Emulsion Protective Layer | Gelatin Amount: Pro = 1.7, Em = 1.0 | |
| 412 | C-40 | 50 | Added to Emulsion Protective Layer | Gelatin Amount: Pro = 0.5, Em = 1.0 | |
| 413 | C-40 | 50 | Added to Emulsion Layer | pH of Emulsion Layer Coating Composition 5.2 | |
| 414 | C-40 | 50 | Added to Emulsion Layer | Emulsion Layer: Composite Polymer PL-10 | 750mg/m² |
| 415 | C-40 | 50 | Added to Emulsion Layer | Emulsion Layer: Composite Polymer PL-15 | 750mg/m² |

**Table 8**

| Light-Sensitive Sample No. | Sensitivity | Fog | Abrasion | Maximum Density | Running-1 | | | |
|---|---|---|---|---|---|---|---|---|
| | | | | | Sensitivity | Fog | Abrasion | Silver Sludge |
| 401 | 100* | 0.12 | 3 | 3.0 | 75 | 0.18 | 2 | 1 |
| 402 | 101 | 0.08 | 4 | 3.5 | 90 | 0.10 | 3.5 | 4 |
| 403 | 102 | 0.08 | 4 | 3.6 | 91 | 0.11 | 3.5 | 4 |
| 404 | 104 | 0.07 | 4.5 | 3.6 | 92 | 0.11 | 4 | 5 |
| 405 | 102 | 0.09 | 4 | 3.5 | 90 | 0.12 | 4 | 4.5 |
| 406 | 102 | 0.10 | 4 | 3.5 | 91 | 0.13 | 4 | 4.5 |
| 407 | 101 | 0.08 | 5 | 3.6 | 90 | 0.10 | 5 | 4.5 |
| 408 | 100 | 0.10 | 4 | 3.5 | 91 | 0.14 | 4 | 4.5 |
| 409 | 100 | 0.08 | 5 | 3.5 | 90 | 0.12 | 5 | 4.5 |
| 410 | 85 | 0.15 | 4.5 | 2.8 | 55 | 0.20 | 4 | 4 |
| 411 | 102 | 0.07 | 4 | 3.7 | 94 | 0.10 | 4 | 4 |
| 412 | 110 | 0.07 | 4 | 3.8 | 97 | 0.09 | 4 | 4 |
| 413 | 103 | 0.09 | 4 | 3.5 | 91 | 0.12 | 4 | 4 |
| 414 | 102 | 0.09 | 5 | 3.6 | 94 | 0.10 | 5 | 4.5 |
| 415 | 103 | 0.10 | 5 | 3.6 | 94 | 0.12 | 5 | 4.5 |

| | | | | | | | | |
|---|---|---|---|---|---|---|---|---|
| *: the sensitivity of No. 401 is 100 | | | | | | | | |

As can clearly be seen in Tables 7 and 8, all the Samples of the invention exhibit excellent improvements in fog and abrasion, and minimum degradation of fog and abrasion during running processing.

The present invention made it possible to provide a high density forming silver halide light-sensitive photographic material which exhibited excellent abrasion resistance, and an easily manageable silver halide light-sensitive photographic material which exhibited minimum sensitivity variation and minimum quality degradation due to fog and black spots during low replenished running processing, and furthermore, to provide a image forming method thereof, which minimized Ag sludge formation during low replenished running processing of the high density forming silver halide light-sensitive photographic material.

### Reference Numerals in the Figure

- 1: Film detection section
- 2: Squeezing
- 3: Heat roller
- 4: Drying fan
- 5: Development
- 6: Fixing
- 7: Water washing
- 8: Solution waste cock
- 9: Replenishmnet pump
- 10: Loading section of processing agent bottle
- 11: Chemical mixer

Disclosed embodiments can be varied by skilled person without depending from the spirit and scope of the invention.

## Claims

1. A silver halide light-sensitive photographic material comprising at least one silver halide light-sensitive emulsion layer and at least one hydrophilic colloidal layer provided on the same side of a support wherein the silver halide light-sensitive photographic material comprises a compound having at least one of represented by the general formula (1) or (2) the silver halide light-sensitive emulsion layer or the hydrophilic colloidal layer and a total coated gelatin amount of not more than 3.7 g/m² on the silver halide emulsion layer and the hydrophilic colloidal layer side in respect to the support: 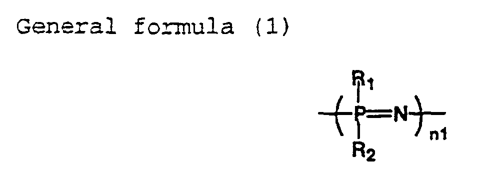 In the formula R₁ and R₂ each represents an alkyl group, an alkoxy group, an aryloxy group, an aryl group, an isothiocyanate group, an amino group, an alkylthio group, an arylthio group, an azide group, an alkenyl group, an alkinyl group, an acyl group, a cyano group, a cyanate group or isocyanate group, each of which group may be substituted or non-substituted, and R₁ and R₂ are the same or different; n₁ represent a positive integer of 1 to 50000: 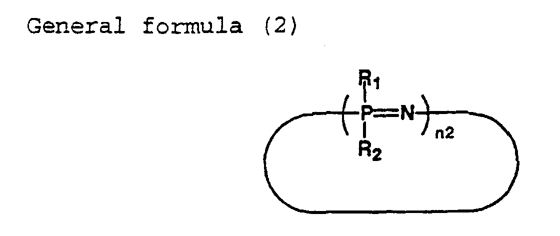 In the formula R₁ and R₂ each represents an alkyl group, an alkoxy group, an aryloxy group, an aryl group, an isothiocyanate group, an amino group, an alkylthio group, an arylthio group, an azide group, an alkenyl group, an alkinyl group, an acyl group, a cyano group, a cyanate group or isocyanate group, each of which group may be substituted or non-substituted, and R₁ and R₂ may be the same or different; n₂ represents a positive integer of 3 or more.

2. The silver halide light-sensitive photographic material of claim 1 wherein at least one of water-soluble polymer having solubility of 0.05 g or more in 100 g of water at 20 °C is contained in the silver halide light-sensitive emulsion layer or the hydrophilic colloidal layer.

3. The silver halide light-sensitive photographic material of claim 1 or 2 wherein at least one composite polymer is contained in the silver halide light-sensitive emulsion layer or the hydrophilic colloidal layer.

4. The silver halide light-sensitive photographic material of claim 1, 2 or 3 wherein at least one hydrazine derivative is contained in the silver halide light-sensitive emulsion layer or the hydrophilic colloidal layer.

5. The silver halide light-sensitive photographic material of claim 1, 2, 3 or 4 wherein at least one lubricant is contained in the silver halide light-sensitive emulsion layer or the hydrophilic colloidal layer.

6. The silver halide light-sensitive photographic material of any of claims 1 to 5 wherein pH of a coating composition comprising a compound having at least one of structurl units represented by the above-mentioned general formula (1) or (2) is not less than 4.0.

7. The silver halide light-sensitive photographic material of any of claims 1 to 6 wherein the material forms an image with a gamma of 6 to 30 by processing employing a developer having a pH of 9.5 to 13.

8. The silver halide light-sensitive photographic material of any of claims 1 to 7 wherein the compound having at least one of structural units represented by the general formula (1) or (2) has solubility of 1g or less in 100 g of water having pH 10.00 adjusted by sodium hydroxide at 40 °C.

9. The silver halide light-sensitive photographic material of any of claims 1 to 8 wherein the compound having at least one of structural units represented by the general formula (1) or (2) is contained in the silver halide material in a form of solid particle dispersion having an average particle diameter of 10 nm to 100 µm.

10. The silver halide light-sensitive photographic material of any of claims 1 to 9 wherein the hydrophilic colloidal layer is a protective layer protecting the silver halide light-sensitive emulsion layer.

11. The silver halide light-sensitive photographic material of any of claims 1 to 10 wherein at least one composite polymer and at least one hydrazine derivative are contained in the silver halide light-sensitive emulsion layer or the hydrophilic colloidal layer.

12. A silver halide light-sensitive photographic material comprising at least one silver halide light-sensitive emulsion layer and at least one hydrophilic colloidal layer provided on the same side of a support wherein the silver halide light-sensitive photographic material comprises at least one of compounds represented by the general formula (1) or (2) in the silver halide light-sensitive emulsion layer or the hydrophilic colloidal layer and a total coated gelatin amount of not more than 3.7 g/m² on the silver halide emulsion layer and the hydrophilic colloidal layer side in respect to the support: 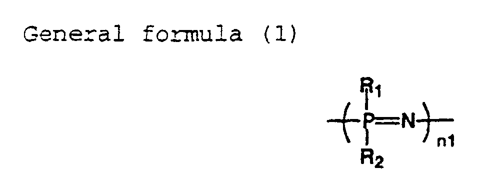 In the formula R₁ and R₂ each represents an alkyl group, an alkoxy group, an aryloxy group, an aryl group, an isothiocyanate group, an amino group, an alkylthio group, an arylthio group, an azide group, each of which group may be substituted or non-substituted, and R₁ and R₂ are the same or different; n₁ represent a positive integer of 1 to 50000: 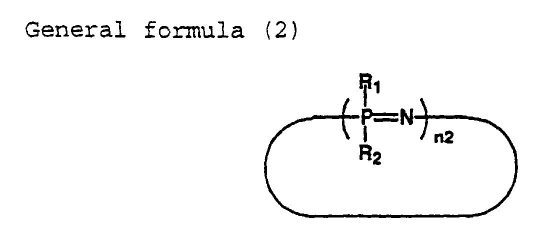 In the formula R₁ and R₂ each represents an alkyl group, an alkoxy group, an aryloxy group, an aryl group, an isothiocyanate group, an amino group, an alkylthio group, an arylthio group, an azide group, each of which group may be substituted or non-substituted, and R₁ and R₂ may be the same or different; n₂ represents a positive integer of 3 or more.
